(19) Europäisches Patentamt
European Patent Office
Office européen des brevets

(11) EP 1 548 023 B1

# (12) EUROPÄISCHE PATENTSCHRIFT

(45) Veröffentlichungstag und Bekanntmachung des Hinweises auf die Patenterteilung:
**14.08.2013 Patentblatt 2013/33**

(51) Int Cl.:
***C07F 17/00*** *(2006.01)* ***C08F 10/06*** *(2006.01)*
***C08F 4/659*** *(2006.01)* ***C08F 210/06*** *(2006.01)*
***C08F 10/00*** *(2006.01)* ***C08F 210/16*** *(2006.01)*

(21) Anmeldenummer: **05001434.9**

(22) Anmeldetag: **13.12.2000**

## (54) Übergangsmetallverbindung, Katalysatorsystem und seine Verwendung zur Polymerisation und Copolymerisation von Olefinen

Transition metal compound, catalyst system and the use of the latter for the polymerisation and copolymerisation of olefins

Composition de métal de transition, système de catalyseur et son utilisation pour la polymérisation et la copolymérisation d'oléfines

(84) Benannte Vertragsstaaten:
**AT BE CH CY DE DK ES FI FR GB GR IE IT LI LU MC NL PT SE TR**

(30) Priorität: **23.12.1999 DE 19962905**
**11.09.2000 DE 10044983**

(43) Veröffentlichungstag der Anmeldung:
**29.06.2005 Patentblatt 2005/26**

(62) Dokumentnummer(n) der früheren Anmeldung(en) nach Art. 76 EPÜ:
**00988791.0 / 1 250 365**

(73) Patentinhaber: **Basell Polyolefine GmbH**
**50389 Wesseling (DE)**

(72) Erfinder:
- **Schottek, Jörg**
  **60487 Frankfurt (DE)**
- **Oberhoff, Markus**
  **48317 Drensteinfurt (DE)**
- **Bingel, Carsten**
  **67105 Schifferstadt (DE)**
- **Fischer, David**
  **67725 Breunigweiler (DE)**
- **Weiss, Horst**
  **67141 Neuhofen (DE)**
- **Winter, Andreas**
  **67271 Neuleiningen (DE)**
- **Fraaije, Volker**
  **60325 Frankfurt (DE)**
- **Maier, Ralph-Dieter**
  **85413 Hoergertshausen (DE)**
- **Bidell, Wolfgang**
  **Baton Rouge**
  **Louisiana 70808 (US)**
- **Paczkowski, Nicola**
  **Loveland 45140 (US)**
- **Suhm, Jürgen**
  **67551 Worms (DE)**
- **Kratzer, Roland**
  **65719 Hofheim (DE)**

(56) Entgegenhaltungen:
**EP-A1- 0 834 519** **WO-A-01/46274**
**WO-A-01/96418** **WO-A-98/40416**

EP 1 548 023 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die vorliegende Erfindung betrifft ein Verfahren zur Polymerisation von Olefinen, insbesondere ein Verfahren zur Copolymerisation von Propylen mit weiteren Olefinen, speziell substituierte Metallocene, Ligandensysteme sowie hochaktive Katalysatorsysteme.

Verfahren zur Herstellung von Polyolefinen mit Hilfe von löslichen, homogenen Katalysatorsystemen, bestehend aus einer Übergangsmetallkomponente vom Typ eines Metallocens und einer Cokatalysator-Komponente vom Typ eines Aluminoxans, einer Lewis-Säure oder einer ionischen Verbindung sind bekannt. Diese Katalysatoren liefern bei hoher Aktivität Polymere und Copolymere mit enger Molmassenverteilung.

Bei Polymerisationsverfahren mit löslichen, homogenen Katalysatorsystemen bilden sich starke Beläge an Reaktorwänden und Rührer aus, wenn das Polymer als Feststoff anfällt. Diese Beläge entstehen immer dann durch Agglomeration der Polymerpartikel, wenn Metallocen und/oder Cokatalysator gelöst in der Suspension vorliegen. Derartige Beläge in den Reaktorsystemen müssen regelmäßig entfernt werden, da diese rasch erhebliche Stärken erreichen, eine hohe Festigkeit besitzen und den Wärmeaustausch zum Kühlmedium verhindern. Industriell in den modernen Polymerisationsverfahren in flüssigem Monomer oder in der Gasphase sind solche homogenen Katalysatorsysteme nicht einsetzbar.

Zur Vermeidung der Belagsbildung im Reaktor sind geträgerte Katalysator-systeme vorgeschlagen worden, bei denen das Metallocen und/oder die als Cokatalysator dienende Aluminiumverbindung auf einem anorganischen Trägermaterial fixiert werden.

Metallocene können, gegebenenfalls in Kombination mit einem oder mehreren Cokatalysatoren, als Katalysatorkomponente für die Polymerisation und Copolymerisation von Olefinen verwendet werden. Insbesondere werden als Katalysatorvorstufen halogenhaltige Metallocene eingesetzt, die sich beispielsweise durch ein Aluminoxan in einen polymerisationsaktiven kationischen Metallocenkomplex überführen lassen (EP-A-129368).

Die Herstellung von Metallocenen ist an sich bekannt (US 4,752,597; US 5,017,714; EP-A-320762; EP-A-416815; EP-A-537686; EP-A- 669340; H.H. Brintzinger et al.; Angew. Chem., 107 (1995), 1255; H.H. Brintzinger et al., J. Organomet. Chem. 232 (1982), 233). Dazu können zum Beispiel Cyclopentadienyl-Metall-Verbindungen mit Halogeniden von Übergangsmetallen wie Titan, Zirkonium und Hafnium umgesetzt werden.

Aus der EP 576 970 A1 sind Metallocene und entsprechende geträgerte Katalysatorsysteme bekannt.

Die geträgerten Katalysatorsysteme liefern bei technisch relevanten Polymerisationtemperaturen von 50-80 °C Polymere, insbesondere Polypropylene, mit Schmelzpunkten von maximal 156°C, typische Werte für solche Systeme liegen lediglich im Bereich um 150 °C.

Im Bereich der Copolymerisation werden meist Copolymere mit niedrigen Molmassen oder geringem Ethen-Einbau erhalten. Wünschenswert in diesem Bereich wäre eine hohe Molmasse und eine hohe Einbaurate an Ethen ohne Molmasseneinbruch des Copolymers sowie eine Molmassenerhöhung des resultierenden Copolymers im vergleich zur Molmasse des Homopolymers.

In EP-A-659757 , Spaleck et al., J. Mol. Catal. A: Chemical 1998, 128, 279-287 und EP-A-834519 sind Metallocenverbindungen beschrieben, die zwei unterschiedlich substituierte Indenylliganden enthalten. Dabei zeigt sich, daß diese dort beschriebenen Metallocenverbindungen, bei der Copolymerisation von z. B Ethylen und Propylen sehr niedermolekulare Copolymere liefern. Hinzu kommt ein niedriger Ethengehalt im Copolymer. Diese dort beschriebenen Systeme zeigen zudem einen starken Molmassenabbau, im Vergleich zum entsprechenden Homopolymer. Durch den Einbau von Ethen scheint es zu vermehrten Abbruchreaktionen zu kommen. Zu dieser Beobachtung gesellt sich eine niedrige Polymerisationsaktivität bei einer heterogen geführten Polymerisation im Vergleich zu einer homogenen geführten Polymerisation. Das führt zu einer begrenzten kommerziellen Nutzung.

Für viele Polymeranwendungen, beispielsweise in den Anwendungsfeldern Extrusion und Spritzguß, sind solche Produkte bezüglich Härte bzw. mechanischer Festigkeit noch nicht ausreichend. Bei der Herstellung von Copolymeren zeigen diese Metallocene und Katalysatorsysteme generell das Verhalten, Copolymere zu erzeugen, die mit steigendem Comonomereinbau immer niedrigere erzielbare Molmassen aufweisen. Besonders im Bereich der Blockcopolymer- bzw. Reaktorblendherstellung ist dieses Verhalten jedoch von Nachteil, da zur Erzielung eines hohen Härte-/Schlagzähigkeitsniveaus der dort gewünschte Copolymer- bzw. Terpolymeranteil eine möglichst hohe Molmasse aufweisen sollte.

Es bestand somit die Aufgabe, nach geträgten Metallocen-Katalysatoren zu suchen, die die Nachteile des Standes der Technik vermeiden und insbesondere aufgrund ihrer hohen Regio- und Stereospezifität unter technisch relevanten Polymerisationsbedingungen Copolymere mit hoher Molmasse und hoher Ethen Einbaurate liefern. Außerdem sollen diese Metallocene eine deutlich erhöhte Polymerisationsaktivität bei heterogener Polymerisationsdurchführung zeigen und ein umweltschonendes und wirtschaftliches Verfahren zur Herstellung der Polymere bereitstellen.

Die der vorliegenden Erfindung zugrundeliegende Aufgabe wird durch ein Verfahren zur Polymerisation von Olefinen, insbesondere zur Copolymerisation von Propylen mit mindestens einem weiteren Olefin gelöst, bei dem die Polymerisation in Gegenwart eines Katalysatorsystem das mindestens ein speziell substituiertes Metallocen, mindestens

einen Cokatalysator, optional einen inertisierten Träger und gegebenenfalls mindestens eine weitere Additivkomponente enthält, erfolgt.

Bei dem im erfindungsgemäßen Verfahren eingesetzten Metallocen handelt es sich um eine Verbindung der Formel (I)

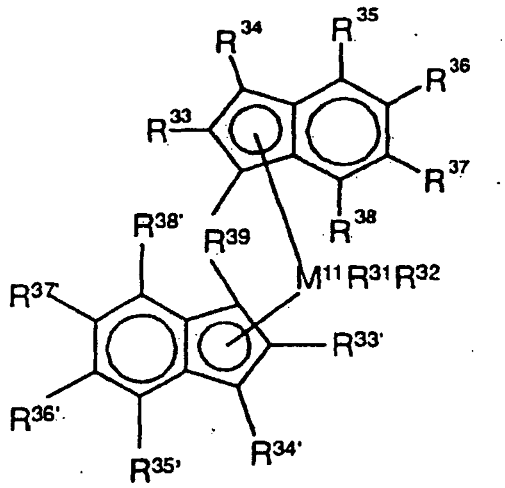

(I)

$M^{11}$

Zirkonium oder Hafnium ist,

$R^{31}$ und $R^{32}$

gleich oder verschieden sind und eine $C_1$-$C_{10}$-Alkylgruppe, eine $C_1$-$C_{10}$-Alkoxygruppe, eine $C_6$-$C_{10}$-Aryloxygruppe oder ein Halogenatom bedeuten, wobei $R^{31}$ und $R^{32}$ auch cyclisch verbunden sein können,

$R^{33}$, $R^{33'}$

verschieden sind,

$R^{33}$

eine lineare $C_1$-$C_{10}$-Alkylgruppe oder eine lineare $C_2$-$C_{10}$-Alkenylgruppe bedeutet,

$R^{33'}$

eine in $\alpha$-Position cyclisierte oder eine in $\alpha$-Position verzweigte Kohlenwasserstoffgruppe, bei der das Atom in $\alpha$-Position an insgesamt drei Kohlenstoffatome gebunden ist, z.B. eine $C_3$-$C_{10}$-Alkylgruppe, $C_3$-$C_{10}$-Alkenylgruppe, $C_6$-$C_{14}$-Arylgruppe, eine $C_7$-$C_{15}$-Arylalkylgruppe, eine $C_7$-$C_{15}$-Alkylarylgruppe oder eine $C_8$-$C_{16}$-Arylalkenylgruppe bedeutet,

$R^{34}$, $R^{36}$, $R^{37}$ und $R^{38}$ sowie $R^{34'}$, $R^{36'}$, $R^{37'}$ und $R^{38'}$

gleich oder verschieden sind und ein Wasserstoffatom oder eine $C_1$-$C_{10}$-Alkylgruppe bedeuten, die halogeniert, linear, cyclisch oder verzweigt sein kann,

$R^{39}$

$R^{40}R^{41}Si^{i}=$, $R^{40}R^{41}Ge=$, $R^{40}R^{41}C=$ oder - $(R^{40}R^{41}C\text{-}CR^{40}R^{41})$ - bedeutet, wobei $R^{40}$ und $R^{41}$ gleich oder verschieden sind und Wasserstoff, eine $C_1$-$C_{20}$-Kohlenwasserstoffgruppe, insbesondere $C_1$-$C_{10}$-Alkyl oder $C_6$-$C_{14}$-Aryl bedeuten,

$R^{35}$, $R^{35'}$

gleich oder verschieden sind und eine $C_6$ bis $C_{20}$ -Arylgruppe bedeuten, die in para-Position zur Bindungsstelle an den Indenylring einen Substituenten $R^{43}$ bzw. $R^{43'}$ tragen,

$R^{35}$ = 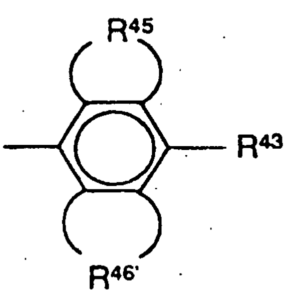

$R^{35'}$ = 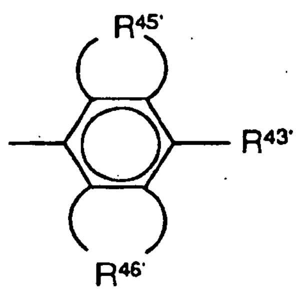

ist,

$R^{43}$

ein $C_1$ bis $C_{10}$-Alkylrest, ein $C_2$ bis $C_{10}$-Alkenylrest , ein $C_6$ bis $C_{18}$-Arylrest, ein $C_7$ bis $C_{20}$-Arylalkylrest, ein $C_7$ bis $C_{20}$-Alkylarylrest, ein $C_8$ bis $C_{20}$-Arylalkenylrest, wobei die Kohlenwasserstoffreste auch mit Fluor oder Chlor halogeniert oder teilhalogeniert sein können, $-N(R^{44})_2$ , $-P(R^{44})_2$, $-SR^{44}$, $-Si(R^{44})_3$, $-N(R^{44})^{3+}$ oder $-P(R^{44})^{3+}$ bedeuten, wobei die Reste $R^{44}$ gleich oder verschieden sind und ein Wasserstoffatom, eine Kohlenwasserstoffgruppe, die halogeniert, linear, cyclisch oder verzweigt sein kann, z.B. eine $C_1$-$C_{10}$-Alkylgruppe, $C_2$-$C_{10}$-Alkenylgruppe, $C_6$-$C_{20}$-Arylgruppe, eine $C_7$-$C_{40}$-Arylalkylgruppe, eine $C_7$-$C_{40}$-Alkylarylgruppe oder eine $C_8$-$C_{40}$-Arylalkenylgruppe bedeutet,

$R^{43'}$

die für $R^{43}$ genannten Bedeutungen oder Wasserstoff bedeutet,

$R^{45}$, $R^{45'}$, $R^{46}$ und $R^{46'}$

Wasserstoff oder ein $C_4$-$C_8$-Aryl-Ringsystem bedeuten,

In Formel I gilt ganz besonders bevorzugt, daß

$M^{11}$

Zirkonium ist,

$R^{31}$, $R^{32}$

gleich sind und für Chlor, Methyl oder Phenolat stehen,

R33, $R^{33'}$

verschieden sind,

$R^{33}$

Methyl, Ethyl, n-Propyl oder n-Butyl bedeutet,

$R^{33'}$

eine in $\alpha$-Position cyclisierte oder eine in $\alpha$-Position verzweigte Kohlenwasserstoffgruppe, bei der das Atom in $\alpha$-Position an insgesamt drei Kohlenstoffatome gebunden ist, z.B. eine $C_3$-$C_{10}$-Alkylgruppe oder eine $C_3$-$C_{10}$-Alkenylgruppe bedeutet,

$R^{39}$

ist $R^{40}R^{41}Si=$ , $R^{40}R^{41}C=$ oder $-(R^{40}R^{41}C-CR^{40}R^{41})-$, worin $R^{40}$ und $R^{41}$ gleich oder verschieden sind und Phenyl oder Methyl bedeuten,

$R^{34}$, $R^{36}$, $R^{37}$ und $R^{38}$ sowie $R^{34'}$, $R^{36'}$ , $R^{37'}$ und $R^{38'}$ Wasserstoff sind,

$R^{35}$, $R^{35'}$

gleich oder verschieden sind und eine $C_6$ bis $C_{20}$-Arylgruppe, insbesondere eine Phenyl- oder 1-Naphthyl-Gruppe, die in para-Position zur Bindungsstelle an den Indenylring einen Substituenten $R^{43}$ bzw. $R^{43'}$ trägt, wobei $R^{43}$ bzw. $R^{43'}$ ein verzweigter $C_3$- bis $C_{10}$-Alkylrest, ein verzweigter $C_3$- bis $C_{10}$- Alkenylrest, ein verzweigter $C_7$- bis $C_{20}$- Alkylarylrest oder ein $Si(R^{44})_3$ -Rest mit $R^{44}$ in der besonders bevorzugten Bedeutung von $R^{33}$ ist, wobei die Kohlenwasserstoffreste auch mit Fluor oder Chlor halogeniert oder teilhalogeniert sein können, bedeutet.

Beispiele für bevorzugte Metallocenkomponenten des erfindungsgemäßen Katalysatorsystems sind Kombinationen folgender Molekülfragmente der Verbindung I:

$M^{11}R^{31}R^{32}$:

$ZrCl_2$, $Zr(CH_3)_2$, $Zr(O-C_6H_5)_2$

$R^{33}$:

Methyl, Ethyl, n-Propyl, n-Butyl,

$R^{33'}$:

Isopropyl, sec-Butyl, Cyclobutyl, 1-Methylbutyl, 1-Ethylbutyl, 1-Methylpentyl, Cyclopentyl, Cyclohexyl, Cyclopent-2-enyl, Cyclopent-3-enyl, Cyclohex-2-enyl, Cyclohex-3-enyl, para-Methyl-cyclohexyl,

$R^{34}$, $R^{36}$, $R^{37}$ und $R^{38}$ sowie $R^{34'}$, $R^{36'}$, $R^{37'}$ und $R^{38'}$:

Wasserstoff,

$R^{35}$, $R^{35'}$:

p-Isopropyl-phenyl, p-tert.-Butyl-phenyl, p-s-Butyl-phenyl, p-Cyclohexyl, p-Trimethylsilyl-phenyl, p-Adamantyl-phenyl, p-(Trisfluor)trimethyl-phenyl,

$R^{39}$:

Dimethylsilandiyl, Dimethylgermandiyl, Ethyliden, 1-Methylethyliden, 1,1-Dimethylethyliden, 1,2-Dimethylethyliden, 1,1,2,2-Tetramethylethyliden, Dimethylmethyliden, Phenylmethylmethyliden, Diphenylmethyliden.

Konkrete Beispiele für bevorzugte Metallocenkomponenten des erfindungsgemäßen Katalysatorsystems sind somit folgende Verbindungen I:

2-isopropyl, 2-methyl, symmetrische Substituenten in 4-Position, Dimethylsilandiyl(2-isopropyl-4-(p-isopropylphenyl)indenyl) (2-methyl-4-(p-isopropylphenyl)indenyl)zirconiumdichlorid, Dimethylsilandiyl(2-isopropyl-4-(p-tert. butylphenyl)indenyl)(2-methyl-4-(p-tert. butylphenyl)indenyl)zirconiumdichlorid, Dimethylsilandiyl(2-isopropyl-4-(p-sec. butylphenyl)indenyl)(2-methyl-4-(p-sec. butylphenyl)indenyl)zirconiumdichlorid, Dimethylsilandiyl(2-isopropyl-4-(p-cyclohexylphenyl)indenyl)(2-methyl-4-(p-cyclohexylphenyl)indenyl)zirconiumdichlorid, Dimethylsilandiyl(2-isopropyl-4-(p-trimethylsilylphenyl)indenyl)(2-methyl-4-(p-trimethylsilylphenyl)indenyl)zirconiumdichlorid, Dimethylsilandiyl (2-isopropyl-4-(p-adamantylphenyl)indenyl)(2-methyl-4-(p-adamantylphenyl)indenyl)zirconiumdichlorid, Dimethylsilandiyl(2-isopropyl-4-(p-tris(trifluormethyl)methylphenyl)indenyl) (2-methyl-4- (p-tris (trifluormethyl)methylphenyl) indenyl) zirconiumdichlorid,

2-sec. butyl, 2-methyl, symmetrische Substituenten in 4-Position, Dimethylsilandiyl(2-sec. butyl-4-(p-isopropylphenyl)inde. nyl)(2-methyl-9-(p-isopropylphenyl)indenyl)zirconiumdichlorid, Dimethylsilandiyl(2-sec. butyl-4-(p-tert. butylphenyl)indenyl) (2-methyl-4-(p-tert. butylphenyl)indenyl)zirconiumdichlorid, Dimethylsilandiyl(2-sec. butyl-4-(p-sec. butylphenyl)indenyl) (2-methyl-4-(p-sec. butylphenyl)indenyl)zirconiumdichlorid, Dimethylsilandiyl(2-sec. butyl-4-(p-cyclohexylphenyl)indenyl) (2-methyl-4-(p-cyclohexylphenyl)indenyl)zirconiumdichlorid, Dimethylsilandiyl(2-sec. butyl-4-(p-trimethylsilylphenyl)indenyl) (2-methyl-4-(p-trimethylsilylphenyl)indenyl)zirconiumdichlorid, Dimethylsilandiyl(2-sec. butyl-4-(p-adamantylphenyl)indenyl) (2-methyl-4-(p-adamantylphenyl)indenyl)zirconiumdichlorid, Dimethylsilandiyl (2-sec. butyl-4-(p-tris(trifluormethyl)methylphenyl)indenyl)(2-methyl-4-(p-tris(trifluormethyl)methylphenyl)indenyl)zirconiumdichlorid,

2-(1-methylbutyl), 2-methyl, symmetrische Substituenten in 4-Position, Dimethylsilandiyl(2-(1-methylbutyl)-4-(p-isopropylphenyl) indenyl)(2-methyl-4-(p-isopropylphenyl)indenyl)zirconiumdichlorid, Dimethylsilandiyl(2-(1-methylbutyl)-4-(p-tert. butylphenyl) indenyl)(2-methyl-4-(p-tert. butylphenyl)indenyl)zirconiumdichlorid, Dimethylsilandiyl(2-(1-methylbutyl)-4-(p-sec. butylphenyl) indenyl)(2-methyl-4-(p-sec. butylphenyl)indenyl)zirconiumdichlorid, Dimethylsilandiyl(2-(1-methylbutyl)-4-(p-cyclohexylphenyl)indenyl)(2-methyl-4-(p-(1-methylbutyl)phenyl)indenyl)zirconiumdichlorid, Dimethylsilandiyl(2-(1-methylbutyl)-4-(p-trimethylsilylphenyl) indenyl)(2-methyl-4-(p-trimethylsilylphenyl)indenyl)zirconiumdichlorid, Dimethylsilandiyl(2-(1-methylbutyl) -4-(p-adamantylphenyl)indenyl)(2-methyl-4-(p-adamantylphenyl) indenyl)zirconiumdichlorid, Dimethylsilandiyl(2-(1-methylbutyl)-4-(p-tris(trifluormethyl)methylphenyl)indenyl)(2-methyl-4-(p-tris(trifluormethyl)methylphenyl)indenyl)zirconiumdichlorid,

2-cyclopentyl, 2-methyl, symmetrische Substituenten in 4-Position, Dimethylsilandiyl(2-cyclopentyl-4-(p-isopropylphenyl)indenyl) (2-methyl-4-(p-isopropylphenyl)indenyl)zirconiumdichlorid, Dimethylsilandiyl(2-cyclopentyl-4-(p-tert. butylphenyl)indenyl) (2-methyl-4-(p-tert. butylphenyl)indenyl)zirconiumdichlorid, Dimethylsilandiyl(2-cyclopentyl-4-(p-sec. butylphenyl)indenyl)(2-methyl-4-(p-sec. butylphenyl)indenyl)zirconiumdichlorid, Dimethylsilandiyl(2-cyclopentyl-4-(p-cyclohexylphenyl)indenyl)(2-methyl-4-(p-cyclohexylphenyl)indenyl)zirconiumdichlorid, Dimethylsilandiyl(2-cyclopentyl-4-(p-trimethylsilylphenyl)indenyl)(2-methyl-4-(p-trimethylsilylphenyl)indenyl)zirconiumdichlorid, Dimethylsilandiyl (2-cyclopentyl-4-(p-adamantylphenyl) indenyl) (2-methyl-4-(p-adamantylphenyl)indenyl)zirconiumdichlorid, Dimethylsilandiyl (2-cyclopentyl-4-(p-tris(trifluormethyl)methylphenyl)indenyl)(2-methyl-4-(p-tris(trifluormethyl)methylphenyl)indenyl)zirconiumdichlorid,

2-cyclohexyl, 2-methyl, symmetrische Substituenten in 4-Position, Dimethylsilandiyl(2-cyclohexyl-4-(p-isopropylphenyl)indenyl) (2-methyl-4-(p-isopropylphenyl)indenyl)zirconiumdichlorid, Dimethylsilandiyl(2-cyclohexyl-4-(p-tert. butylphenyl)indenyl)(2-methyl-4-(p-tert. butylphenyl)indenyl)zirconiumdichlorid, Dimethylsilandiyl(2-cyclohexyl-4-(p-sec. butylphenyl)indenyl)(2-methyl-4-(p-sec. butylphenyl)indenyl)zirconiumdichlorid, Dimethylsilandiyl(2-cyclohexyl-4-(p-cyclohexylphenyl)indenyl) (2-methyl-4-(p-cyclohexylphenyl)indenyl)zirconiumdichlorid, Dimethylsilandiyl(2-cyclohexyl-4-(p-trimethylsilylphenyl)indenyl) (2-methyl-4-(p-trimethylsilylphenyl)indenyl)zirconiumdichlorid, Dimethylsilandiyl (2-cyclohexyl-4-(p-adamantylphenyl)indenyl)(2-methyl-4-(p-adamantylphenyl)indenyl)zirconiumdichlorid, Dimethylsilandiyl(2-cyclohexyl-4-(p-tris(trifluormethyl)methylphenyl)indenyl)(2-methyl-4-(p-tris(trifluormethyl)methylphenyl) indenyl)zirconiumdichlorid,

2-p-methylcyclohexyl, 2-methyl, symmetrische Substituenten in 4-Position, Dimethylsilandiyl(2-p-methylcyclohexyl-4-(p-isopropylphenyl) indenyl)(2-methyl-4-(p-isopropylphenyl)indenyl)zirconiumdichlorid, Dimethylsilandiyl(2-p-methylcyclohexyl-4-(p-tert. butylphenyl)indenyl)(2-methyl-4-(p-tert. butylphenyl)indenyl)zirconiumdichlorid, Dimethylsilandiyl(2-p-methylcyclohexyl-4-(p-sec. butylphenyl)indenyl)(2-methyl-4-(p-sec. butylphenyl)indenyl)zirconiumdichlorid, Dimethylsilandiyl(2-p-methylcyclohexyl-4-(p-cyclohexylphenyl)indenyl)(2-methyl-4-(p-cyclohexylphenyl)indenyl)zirconiumdichlorid, Dimethylsilandiyl(2-p-methylcyclohexyl-4-(p-trimethylsilylphenyl)indenyl)(2-methyl-4-(p-trimethylsilylphenyl)in-denyl)zirconiumdichlorid, Dimethylsilandiyl(2-p-methylcyclohexyl-4-(p-adamantylphenyl)indenyl)(2-methyl-4-(p-adamantylphenyl)indenyl)zirconiumdichlorid, Dimethylsilandiyl (2-p-methylcyclohexyl-4-(p-tris(trifluormethyl)methylphenyl) indenyl)(2-methyl-4-(p-tris(trifluormethyl)methylphenyl)indenyl)zirconiumdichlorid,

2-isopropyl, 4-(p-tert. butylphenyl), 2-methyl, 4-diverse, Dimethylsilandiyl(2-isopropyl-4-(p-tert. butylphenyl)indenyl)(2-methyl-4-(p-isopropylphenyl)indenyl)zirconiumdichlorid, Dimethylsilandiyl (2-isopropyl-4-(p-tert. butylphenyl) indenyl) (2-me-5 thyl-4-(p-sec. butylphenyl)indenyl)zirconiumdichlorid, Dimethylsilandiyl(2-isopropyl-4-(p-tert. butylphenyl)indenyl)(2-methyl-4-(p-cyclohexylphenyl)indenyl)zirconiumdichlorid, Dimethylsilandiyl(2-isopropyl-4-(p-tert. butylphenyl)indenyl)(2-methyl-4-(p-trimethylsilylphenyl)indenyl)zirconiumdichlorid, Dimethylsilandiyl(2-isopropyl-4-(p-tert. butylphenyl)indenyl) (2-methyl-4-(p-adamantylphenyl)indenyl)zirconiumdichlorid, Dimethylsilandiyl(2-isopropyl-4-(p-tert. butylphenyl)indenyl)(2-methyl-4-(p-tris(trifluormethyl)methylphenyl)indenyl)zirconiumdichlorid,

2-sec. butyl, 4-(p-tert. butylphenyl), 2-methyl, 4-diverse, Dimethylsilandiyl(2-sec. butyl-4-(p-tert. butylphenyl) indenyl)(2-methyl-4-(p-isopropylphenyl)indenyl)zirconiumdichlorid, Dimethylsilandiyl(2-sec. butyl-4-(p-tert. butylphenyl) indenyl)(2-methyl-4-(p-sec. butylphenyl)indenyl)zirconiumdichlorid, Dimethylsilandiyl(2-sec. butyl-4-(p-tert. butylphenyl)

indenyl)(2-methyl-4-(p-cyclohexylphenyl)indenyl)zirconiumdichlorid, Dimethylsilandiyl(2-sec. butyl-4-(p-tert. butylphenyl)indenyl)(2-methyl-4-(p-trimethylsilylphenyl)indenyl)zirconiumdichlorid, Dimethylsilandiyl(2-sec. butyl-4-(p-tert. butylphenyl)indenyl)(2-methyl-4-(p-adamantylphenyl)indenyl)zirconiumdichlorid, Dimethylsilandiyl(2-sec. butyl-4-(p-tert. butylphenyl)indenyl)(2-methyl-4-(p-tris(trifluormethyl)methylphenyl)indenyl)zirconiumdichlorid,

2-(1-methylbutyl), 4-(p-tert. butylphenyl), 2-methyl, 4-diverse, Dimethylsilandiyl(2-(1-methylbutyl)-4-(p-tert. butylphenyl)indenyl)(2-methyl-4-(p-isopropylphenyl)indenyl)zirconiumdichlorid, Dimethylsilandiyl(2-(1-methylbutyl)-4-(p-tert. butylphenyl)indenyl) (2-methyl-4-(p-sec. butylphenyl)indenyl)zirconiumdichlorid, Dimethylsilandiyl(2-(1-methylbutyl)-4-(p-tert. butylphenyl)indenyl)(2-methyl-4-(p-cyclohexylphenyl)indenyl)zirconiumdichlorid, Dimethylsilandiyl(2-(1-methylbutyl)-4-(p-tert. butylphenyl)indenyl)(2-methyl-4-(p-trimethylsilylphenyl)indenyl)zirconiumdichlorid, Dimethylsilandiyl(2-(1-methylbutyl)-4-(p-tert. butylphenyl)indenyl)-(2-methyl-4-(p-adamantylphenyl)indenyl)zirconiumdichlorid, Dimethylsilandiyl(2-(1-methylbutyl)-4-(p-tert. butylphenyl)indenyl) (2-methyl-4-(p-tris(trifluormethyl)methylphenyl)indenyl) zirconiumdichlorid,

2-cyclopentyl, 4-(p-tert. butylphenyl), 2-methyl, 4-diverse, Dimethylsilandiyl(2-cyclopentyl-4-(p-tert. butylphenyl)indenyl) (2-methyl-4-(p-isopropylphenyl)indenyl)zirconiumdichlorid, Dimethylsilandiyl(2-cyclopentyl-4-(p-tert. butylphenyl)indenyl) (2-methyl-4- (p-sec. butylphenyl) indenyl) zirconiumdichlorid, Dimethylsilandiyl(2-cyclopentyl-4-(p-tert. butylphenyl)indenyl) (2-methyl-4-(p-cyclohexylphenyl)indenyl)zirconiumdichlorid, Dimethylsilandiyl(2-cyclopentyl-4-(p-tert. butylphenyl)indenyl)(2-methyl-4-(p-trimethylsilylphenyl)indenyl)zirconiumdichlorid, Dimethylsilandiyl(2-cyclopentyl-4-(p-tert. butylphenyl)indenyl) (2-methyl-4-(p-adamantylphenyl)indenyl)zirconiumdichlorid, Dimethylsilandiyl(2-cyclopentyl-4-(p-tert. butylphenyl)indenyl) (2-methyl-4-(p-tris(trifluormethyl)methylphenyl)indenyl)zirconiumdichlorid,

2-cyclohexyl, 4-(p-tert. butylphenyl), 2-methyl, 4-diverse, Dimethylsilandiyl(2-cyclohexyl-4-(p-tert. butylphenyl) indenyl) (2-methyl-4-(p-isopropylphenyl)indenyl)zirconiumdichlorid, Dimethylsilandiyl(2-cyclohexyl-4-(p-tert. butylphenyl) indenyl) (2-methyl-4-(p-sec. butylphenyl)indenyl) zirconiumdichlorid, Dimethylsilandiyl(2-cyclohexyl-4-(p-tert. butylphenyl)indenyl)(2-methyl-4-(p-cyclohexylphenyl)indenyl)zirconiumdichlorid, Dimethylsilandiyl(2-cyclohexyl-4-(p-tert. butylphenyl)indenyl)(2-methyl-4-(p-trimethylsilylphenyl)indenyl)zirconiumdichlorid, Dimethylsilandiyl(2-cyclohexyl-4-(p-tert. butylphenyl)indenyl) (2-methyl-4-(p-adamantylphenyl)indenyl)zirconiumdichlorid, Dimethylsilandiyl(2-cyclohexyl-4-(p-tert. butylphenyl) indenyl) (2-methyl-4-(p-tris(trifluormethyl)methylphenyl)indenyl)zirconiumdichlorid,

2-(p-methylcyclohexyl), 4-(p-tert. butylphenyl), 2-methyl, 4-diverse, Dimethylsilandiyl (2-(p-methylcyclohexyl)-4-(p-tert. butylphenyl)indenyl)(2-methyl-4-(p-isopropylphenyl)indenyl)zirconiumdichlorid, Dimethylsilandiyl(2-(p-methylcyclohexyl)-4-(p-tert. butylphenyl)indenyl)(2-methyl-4-(p-sec. butylphenyl)indenyl)zirconiumdichlorid, Dimethylsilandiyl (2-(p-methylcyclohexyl)-4-(p-tert. butylphenyl)indenyl) (2-methyl-4-(p-cyclohexylphenyl) indenyl)zirconiumdichlorid, Dimethylsilandiyl(2-(p-methylcyclohexyl)-4-(p-tert. butylphenyl)indenyl)(2-methyl-4-(p-trimethylsilylphenyl) indenyl)zirconiumdichlorid, Dimethylsilandiyl (2-(p-methylcyclohexyl)-4-(p-tert. butylphenyl)indenyl)(2-methyl-4-(p-adamantylphenyl)indenyl)zirconiumdichlorid, Dimethylsilandiyl (2-(p-methylcyclohexyl)-4-(p-tert. butylphenyl)indenyl) (2-methyl-4-(p-tris(trifluormethyl)methylphenyl)indenyl)zirconiumdichlorid,

2-isopropyl, 4-(p-isopropylphenyl), 2-methyl, 4-diverse, Dimethylsilandiyl(2-isopropyl-4-(p-isopropylphenyl)indenyl)(2-methyl-4-(p-tert. butylphenyl)indenyl)zirconiumdichlorid, Dimethylsilandiyl (2-isopropyl-4-(p-isopropylphenyl) indenyl) (2-methyl-4-(p-sec. butylphenyl)indenyl)zirconiumdichlorid, Dimethylsilandiyl (2-isopropyl-4-(p-isopropylphenyl)indenyl) (2-methyl-4-(p-cyclohexylphenyl) indenyl) zirconiumdichlorid, Dimethylsilandiyl(2-isopropyl-4-(p-isopropylphenyl)indenyl)(2-methyl-4-(p-trimethylsilylphenyl)indenyl)zirconiumdichlorid, Dimethylsilandiyl(2-isopropyl-4-(p-isopropylphenyl)indenyl)(2-methyl-4-(p-adamantylphenyl)indenyl)zirconiumdichlorid, Dimethylsilandiyl(2-isopropyl-4-(p-isopropylphenyl)indenyl)(2-methyl-4-(p-tris(trifluormethyl)methylphenyl)indenyl)zirconiumdichlorid,

2-sec. butyl, 4-(p-isopropylphenyl), 2-methyl, 4-diverse, Dimethylsilandiyl (2-sec. butyl-4-(p-isopropylphenyl) indenyl)(2-methyl-4-(p-tert. butylphenyl)indenyl)zirconiumdichlorid, Dimethylsilandiyl(2-sec. butyl-4-(p-isopropylphenyl) indenyl)(2-methyl-4-(p-sec. butylphenyl)indenyl)zirconiumdichlorid, Dimethylsilandiyl(2-sec. butyl-4-(p-isopropylphenyl) indenyl)(2-methyl-4-(p-cyclohexylphenyl)indenyl)zirconiumdichlorid, Dimethylsilandiyl(2-sec. butyl-4-(p-isopropylphenyl)indenyl)(2-methyl-4-(p-trimethylsilylphenyl)indenyl)zirconiumdichlorid, Dimethylsilandiyl(2-sec. butyl-4-(p-isopropylphenyl)indenyl)(2-methyl-4-(p-adamantylphenyl)indenyl)zirconiumdichlorid, Dimethylsilandiyl(2-sec. butyl-4-(p-isopropylphenyl)indenyl)(2-methyl-4-(p-tris(trifluormethyl)methylphenyl)indenyl)zirconiumdichlorid,

2-(1-methylbutyl), 4-(p-isopropylphenyl), 2-methyl, 4-diverse, Dimethylsilandiyl(2-(1-methylbutyl)-4-(p-isopropylphenyl) indenyl) (2-methyl-4-(p-tert. butylphenyl) indenyl)zirconiumdichlorid, Dimethylsilandiyl(2-(1-methylbutyl)-4-(p-isopropylphenyl)indenyl) (2-methyl-4-(p-sec. butylphenyl) indenyl)zirconiumdichlorid, Dimethylsilandiyl(2-(1-methylbutyl)-4-(p-isopropylphenyl)indenyl) (2-methyl-4-(p-cyclohexylphenyl)indenyl)zirconiumdichlorid, Dimethylsilandiyl(2-(1-methylbutyl)-4-(p-isopropylphenyl)indenyl)(2-methyl-4-(p-trimethylsilylphenyl)indenyl)zirconiumdichlorid, Dimethylsilandiyl(2-(1-methylbutyl)-4-(p-isopropylphenyl)indenyl) (2-methyl-4-(p-adamantylphenyl)indenyl)zirconiumdichlorid, Dimethylsilandiyl (2-(1-methylbutyl)-4-(p-isopropylphenyl)indenyl) (2-methyl-4-(p-tris(trifluormethyl)methylphenyl)indenyl) zirconiumdichlorid,

2-cyclopentyl, 4-(p-isopropylphenyl), 2-methyl, 4-diverse, Dimethylsilandiyl(2-cyclopentyl-4-(p-isopropylphenyl)indenyl)(2-methyl-4-(p-tert. butylphenyl) indenyl)zirconiumdichlorid, Dimethylsilandiyl (2-cyclopentyl-4-(p-isopropylphenyl)indenyl)(2-methyl-4-(p-sec. butylphenyl)indenyl)zirconiumdichlorid, Dimethylsilandiyl (2-cyclopentyl-4-(p-isopropylphenyl)indenyl)(2-methyl-4-(p-cyclohexylphenyl)indenyl)zirconiumdichlorid, Dimethylsilandiyl (2-cyclopentyl-4-(p-isopropylphenyl)indenyl)(2-methyl-4-(p-trimethylsilylphenyl)indenyl)zirconiumdichlorid; Dimethylsilandiyl(2-cyclopentyl-4-(p-isopropylphenyl)indenyl)(2-methyl-4-(p-adamantylphenyl)indenyl)zirconiumdichlorid, Dimethylsilandiyl (2-cyclopentyl-4-(p-isopropylphenyl)indenyl)(2-methyl-4-(p-tris(trifluormethyl)methylphenyl)indenyl)zirconiumdichlorid,

2-cyclohexyl, 4-(p-isopropylphenyl), 2-methyl, 4-diverse, Dimethylsilandiyl (2-cyclohexyl-4-(p-isopropylphenyl) indenyl)(2-methyl-4-(p-tert. butylphenyl)indenyl)zirconiumdichlorid, Dimethylsilandiyl(2-cyclohexyl-4-(p-isopropylphenyl)indenyl)(2-methyl-4-(p-sec. butylphenyl)indenyl)zirconiumdichlorid, Dimethylsilandiyl(2-cyclohexyl-4-(p-isopropylphenyl)indenyl)(2-methyl-4-(p-cyclohexylphenyl)indenyl)zirconiumdichlorid, Dimethylsilandiyl(2-cyclohexyl-4-(p-isopropylphenyl)indenyl)(2-methyl-4-(p-trimethylsilylphenyl)indenyl)zirconiumdichlorid, Dimethylsilandiyl (2-cyclohexyl-4-(p-isopropylphenyl)indenyl)(2-methyl-4-(p-adamantylphenyl)indenyl)zirconiumdichlorid, Dimethylsilandiyl(2-cyclohexyl-4-(p-isopropylphenyl)indenyl)(2-methyl-4-(p-tris(trifluormethyl)methylphenyl)indenyl)zirconiumdichlorid,

2-(p-methylcyclohexyl), 4-(p-isopropylphenyl), 2-methyl, 4-diverse, Dimethylsilandiyl(2-(p-methylcyclohexyl)-4-(p-isopropylphenyl)indenyl) (2-methyl-4-(p-tert. butylphenyl)indenyl)zirconiumdichlorid, Dimethylsilandiyl(2-(p-methylcyclohexyl)-4-(p-isopropylphenyl)indenyl) (2-methyl-4-(p-sec. butylphenyl)indenyl)zirconiumdichlorid, Dimethylsilandiyl (2-(p-methylcyclohexyl)-4-(p-isopropylpheriyl)indenyl)(2-methyl-4-(p-cyclohexylphenyl)indenyl)zirconiumdichlorid, Dimethylsilandiyl (2-(p-methylcyclohexyl)-4-(p-isopropylphenyl)indenyl) (2-methyl-4- (p-trimethylsilylphenyl)indenyl)zirconiumdichlorid, Dimethylsilandiyl (2-(p-methylcyclohexyl)-4-(p-isopropylphenyl)indenyl) (2-methyl-4-(p-adamantylphenyl)indenyl)zirconiumdichlorid, Dimethylsilandiyl (2-(p-methylcyclohexyl)-4-(p-isopropylphenyl)indenyl) (2-methyl-4-(p-tris(trifluormethyl)methylphenyl)indenyl)zirconiumdichlorid,

2-isopropyl, 4-(p-sec. butyl), 2-methyl, 4-diverse, Dimethylsilandiyl(2-isopropyl-4-(p-sec. butyl)indenyl)(2-methyl-4-(p-tert. butylphenyl)indenyl)zirconiumdichlorid, Dimethylsilandiyl(2-isopropyl-4-(p-sec. butyl) indenyl) (2-methyl-4-(p-isopropylphenyl) indenyl)zirconiumdichlorid, Dimethylsilandiyl (2-isopropyl-4-(p-sec. butyl) indenyl) (2-methyl-4-(p-cyclohexylphenyl)indenyl)zirconiumdichlorid, Dimethylsilandiyl (2-isopropyl-4-(p-sec. butyl)indenyl) (2-methyl-4-(p-trimethylsilylphenyl)indenyl)zirconiumdichlorid, Dimethylsilandiyl (2-isopropyl-4-(p-sec. butyl)indenyl)(2-methyl-4-(p-adamantylphenyl)indenyl)zirconiumdichlorid, Dimethylsilandiyl(2-isopropyl-4-(p-sec. butyl)indenyl)(2-methyl-4-(p-tris (trifluormethyl)methylphenyl)indenyl)zirconiumdichlorid,

2-sec. butyl, 4-(p-sec. butyl), 2-methyl, 4-diverse, Dimethylsilandiyl(2-sec. butyl-4-(p-sec. butyl)indenyl)(2-methyl-4-(p-tert. butylphenyl)indenyl)zirconiumdichlorid, Dimethylsilandiyl(2-sec. butyl-4-(p-sec. butyl)indenyl)(2-methyl-4-(p-isopropylphenyl)indenyl)zirconiumdichlorid, Dimethylsilandiyl (2-sec. butyl-4-(p-sec. butyl)indenyl)(2-methyl-4-(p-cyclohexylphenyl)indenyl)zirconiumdichlorid, Dimethylsilandiyl(2-sec. butyl-4-(p-sec. butyl)indenyl) (2-methyl-4-(p-trimethylsilylphenyl)indenyl)zirconiumdichlorid, Dimethylsilandiyl(2-sec. butyl-4-(p-sec. butyl)indenyl) (2-methyl-4-(p-adamantylphenyl)indenyl)zirconiumdichlorid, Dimethylsilandiyl(2-sec. butyl-4-(p-sec. butyl)indenyl)(2-methyl-4-(p-tris (trifluormethyl)methylphenyl)indenyl)zirconiumdichlorid,

2-(1-methylbutyl), 4-(p-sec. butyl), 2-methyl, 4-diverse, Dimethylsilandiyl (2-(1-methylbutyl)-4-(p-sec. butyl)indenyl)(2-methyl-4-(p-tert. butylphenyl)indenyl)zirconiumdichlorid, Dimethylsilandiyl (2-(1-methylbutyl)-4-(p-sec. butyl)indenyl) (2-methyl-4-(p-isopropylphenyl)indenyl)zirconiumdichlorid, Dimethylsilandiyl(2-(1-methylbutyl)-4-(p-sec. butyl)indenyl)(2-methyl-4-(p-cyclohexylphenyl)indenyl)zirconiumdichlorid, Dimethylsilandiyl(2-(1-methylbutyl)-4-(p-sec. butyl) indenyl) (2-methyl-4-(p-trimethylsilylphenyl)indenyl)zirconiumdichlorid, Dimethylsilandiyl (2-(1-methylbutyl)-4-(p-sec. butyl)indenyl) (2-methyl-4-(p-adamantylphenyl)indenyl)zirconiumdichlorid, Dimethylsilandiyl(2-(1-methylbutyl)-4-(p-sec. butyl)indenyl)(2-methyl-4-(p-tris(trifluormethyl)methylphenyl)indenyl)zirconiumdichlorid,

2-cyclopentyl, 4-(p-sec. butyl), 2-methyl, 4-diverse, Dimethylsilandiyl(2-cyclopentyl-4-(p-sec. butyl)indenyl)(2-methyl-4-(p-tert. butylphenyl)indenyl)zirconiumdichlorid, Dimethylsilandiyl(2-cyclopentyl-4-(p-sec. butyl)indenyl)(2-methyl-4-(p-isopropylphenyl)indenyl)zirconiumdichlorid, Dimethylsilandiyl (2-cyclopentyl-4-(p-sec. butyl)indenyl) (2-methyl-4- (p-cyclohexylphenyl)indenyl)zirconiumdichlorid, Dimethylsilandiyl(2-cyclopentyl-4-(p-sec. butyl)indenyl) (2-methyl-4-(p-trimethylsilylphenyl)indenyl)zirconiumdichlorid, Dimethylsilandiyl(2-cyclopentyl-4-(p-sec. butyl)indenyl) (2-methyl-4-(p-adamantylphenyl)indenyl)zirconiumdichlorid, Dimethylsilandiyl(2-cyclopentyl-4-(p-sec. butyl)indenyl)(2-methyl-4-(p-tris(trifluormethyl)methylphenyl)indenyl)zirconiumdichlorid,

2-cyclohexyl, 4-(p-sec. butyl), 2-methyl, 4-diverse, Dimethylsilandiyl(2-cyclohexyl-4-(p-sec. butyl)indenyl)(2-methyl-4-(p-tert. butylphenyl)indenyl)zirconiumdichlorid, Dimethylsilandiyl(2-cyclohexyl-4-(p-sec. butyl)indenyl)(2-methyl-4-(p-isopropylphenyl)indenyl)zirconiumdichlorid, Dimethylsilandiyl(2-cyclohexyl-4-(p-sec. butyl)indenyl)(2-methyl-4-(p-cyclohexylphenyl)indenyl)zirconiumdichlorid, Dimethylsilandiyl(2-cyclohexyl-4-(p-sec. butyl)indenyl)(2-methyl-4-(p-trimethylsilylphenyl)indenyl)zirconiumdichlorid, Dimethylsilandiyl(2-cyclohexyl-4-(p-sec. butyl)indenyl)(2-methyl-4-(p-adamantylphenyl)indenyl)zirconiumdichlorid, Dimethylsilandiyl(2-cyclohexyl-4-(p-sec. butyl)indenyl)(2-methyl-4-(p-tris(trifluormethyl)methylphenyl)indenyl)zirconiumdichlorid,

2-(p-methylcyclohexyl), 4-(p-sec. butyl), 2-methyl, 4-diverse, Dimethylsilandiyl(2-(p-methylcyclohexyl)-4-(p-sec. butyl)indenyl)(2-methyl-4-(p-tert. butylphenyl)indenyl)zirconiumdichlorid, Dimethylsilandiyl(2-(p-methylcyclohexyl)-4-(p-sec. butyl)indenyl)(2-methyl-4-(p-isopropylphenyl)indenyl)zirconiumdichlorid, Dimethylsilandiyl(2-(p-methylcyclohexyl)-4-(p-sec. butyl)indenyl)(2-methyl-4-(p-cyclohexylphenyl)indenyl)zirconiumdichlorid, Dimethylsilandiyl(2-(p-methylcyclohexyl)-4-(p-sec. butyl)indenyl) (2-methyl-4-(p-trimethylsilylphenyl)indenyl)zirconiumdichlorid, Dimethylsilandiyl (2-(p-methylcyclohexyl)-4-(p-sec. butyl)indenyl)(2-methyl-4-(p-adamantylphenyl)indenyl)zirconiumdichlorid, Dimethylsilandiyl(2-(p-methylcyclohexyl)-4-(p-sec. butyl)indenyl)(2-methyl-4-(p-tris(trifluormethyl)methylphenyl)indenyl)zirconiumdichlorid,

2-isopropyl, 2-ethyl, symmetrische Substituenten in 4-Position, Dimethylsilandiyl (2-isopropyl-4-(p-isopropylphenyl)indenyl)(2-ethyl-4-(p-isopropylphenyl)indenyl)zirconiumdichlorid, Dimethylsilandiyl(2-isopropyl-4-(p-tert. butylphenyl)indenyl)(2-ethyl-4-(p-tert. butylphenyl)indenyl)zirconiumdichlorid, Dimethylsilandiyl(2-isopropyl-4-(p-sec. butylphenyl)indenyl)(2-ethyl-4-(p-sec. butylphenyl)indenyl)zirconiumdichlorid, Dimethylsilandiyl (2-isopropyl-4-(p-cyclohexylphenyl)indenyl) (2-ethyl-4-(p-cyclohexylphenyl)indenyl) zirconiumdichlorid, Dimethylsilandiyl (2-isopropyl-4-(p-trimethylsilylphenyl)indenyl) (2-ethyl-4-(p-trimethylsilylphenyl)indenyl)zirconiumdichlorid, Dimethylsilandiyl (2-isopropyl-4-(p-adamantylphenyl)inde-5nyl) (2-ethyl-4-(p-adamantylphenyl)indenyl)zirconiumdichlorid, Dimethylsilandiyl (2-isopropyl-4-(p-tris(trifluormethyl)methylphenyl)indenyl) (2-ethyl-4-(p-tris(trifluormethyl)methylphenyl)indenyl)zirconiumdichlorid,

2-sec. butyl, 2-ethyl, symmetrische Substituenten in 4-Position, Dimethylsilandiyl(2-sec. butyl-4-(p-isopropylphenyl)indenyl) (2-ethyl-4-(p-isopropylphenyl)indenyl)zirconiumdichlorid, Dimethylsilandiyl(2-sec. butyl-4-(p-tert. butylphenyl)indenyl) (2-ethyl-4-(p-tert. butylphenyl)indenyl)zirconiumdichlorid, Dimethylsilandiyl(2-sec. butyl-4-(p-sec. butylphenyl)indenyl) (2-ethyl-4-(p-sec. butylphenyl)indenyl)zirconiumdichlorid, Dimethylsilandiyl (2-sec. butyl-4-(p-cyclohexylphenyl)indenyl) (2-ethyl-4-(p-cyclohexylphenyl)indenyl)zirconiumdichlorid, Dimethylsilandiyl(2-sec. butyl-4-(p-trimethylsilylphenyl)indenyl) (2-ethyl-4-(p-trimethylsilylphenyl)indenyl)zirconiumdichlorid, Dimethylsilandiyl (2-sec. butyl-4-(p-adamantylphenyl)indenyl) (2-ethyl-4-(p-adamantylphenyl)indenyl)zirconiumdichlorid, Dimethylsilandiyl(2-sec. butyl-4-(p-tris(trifluormethyl)methylphenyl) indenyl)(2-ethyl-4-(p-tris(trifluormethyl)methylphenyl)inde-5 nyl)zirconiumdichlorid,

2-(1-methylbutyl), 2-ethyl, symmetrische Substituenten in 4-Position, Dimethylsilandiyl (2-(1-methylbutyl)-4-(p-isopropylphenyl)indenyl)(2-ethyl-4-(p-isopropylphenyl)indenyl)zirconiumdichlorid, Dimethylsilandiyl (2-(1-methylbutyl)-4-(p-tert. butylphenyl) indenyl)(2-ethyl-4-(p-tert. butylphenyl)indenyl)zirconiumdichlorid, Dimethylsilandiyl (2-(1-methylbutyl)-4-(p-sec. butylphenyl)indenyl) (2-ethyl-4-(p-sec. butylphenyl)indenyl)zirconiumdichlorid, Dimethylsilandiyl (2-(1-methylbutyl)-4-(p-cyclohexylphenyl)indenyl)(2-ethyl-4-(p-(1-methylbutyl)phenyl)indenyl)zirconiumdichlorid, Dimethylsilandiyl(2-(1-methylbutyl)-4-(p-trimethylsilylphenyl)indenyl)(2-ethyl-4-(p-trimethylsilylphenyl)indenyl)zirconiumdichlorid, Dimethylsilandiyl (2-(1-methylbutyl)-4-(p-adamantylphenyl)indenyl)(2-ethyl-4-(p-adamantylphenyl)indenyl)zirconiumdichlorid, Dimethylsilandiyl(2-(1-methylbutyl)-4-(p-tris(trifluormethyl)methylphenyl)indenyl) (2-ethyl-4-(p-tris(trifluormethyl)methylphenyl)indenyl)zirconiumdichlorid,

2-cyclopentyl, 2-ethyl, symmetrische Substituenten in 4-Position, Dimethylsilandiyl (2-cyclopentyl-4-(p-isopropylphenyl)indenyl) (2-ethyl-4-(p-isopropylphenyl)indenyl)zirconiumdichlorid, Dimethylsilandiyl (2-cyclopentyl-4-(p-tert. butylphenyl) indenyl) (2-ethyl-4-(p-tert. butylphenyl)indenyl)zirconiumdichlorid, Dimethylsilandiyl (2-cyclopentyl-4-(p-sec. butylphenyl)indenyl)(2-ethyl-4-(p-sec. butylphenyl)indenyl)zirconiumdichlorid, Dimethylsilandiyl(2-cyclopentyl-4-(p-cyclohexylphenyl)indenyl) (2-ethyl-4-(p-cyclohexylphenyl)indenyl)zirconiumdichlorid, Dimethylsilandiyl (2-cyclopentyl-4-(p-trimethylsilylphenyl)indenyl)(2-ethyl-4-(p-trimethylsilylphenyl)indenyl)zirconiumdichlorid, Dimethylsilandiyl (2-cyclopentyl-4-(p-adamantylphenyl) indenyl) (2-ethyl-4-(p-adamantylphenyl)indenyl)zirconiumdichlorid, Dimethylsilandiyl (2-cyclopentyl-4-(p-tris(trifluormethyl)methylphenyl)indenyl) (2-ethyl-4-(p-tris(trifluormethyl)methylphenyl)indenyl)zirconiumdichlorid,

2-cyclohexyl, 2-ethyl, symmetrische Substituenten in 4-Position, Dimethylsilandiyl(2-cyclohexyl-4-(p-isopropylphenyl)indenyl) (2-ethyl-4-(p-isopropylphenyl)indenyl)zirconiumdichlorid, Dimethylsilandiyl (2-cyclohexyl-4-(p-tert. butylphenyl)indenyl) (2-ethyl-4-(p-tert. butylphenyl)indenyl)zirconiumdichlorid, Dimethylsilandiyl (2-cyclohexyl-4-(p-sec. butylphenyl)indenyl) (2-ethyl-4-(p-sec. butylphenyl) indenyl)zirconiumdichlorid, Dimethylsilandiyl(2-cyclohexyl-4-(p-cyclohexylphenyl)indenyl) (2-ethyl-4-(p-cyclohexylphenyl)indenyl)zirconiumdichlorid, Dimethylsilandiyl(2-cyclohexyl-4-(p-trimethylsilylphenyl)indenyl)(2-ethyl-4-(p-trimethylsilylphenyl)indenyl)zirconiumdichlorid, Dimethylsilandiyl(2-cyclohexyl-4-(p-adamantylphenyl)indenyl)(2-ethyl-4-(p-adamantylphenyl)indenyl)zirconiumdichlorid, Dimethylsilandiyl(2-cyclohexyl-4-(p-tris(trifluormethyl)methylphenyl) indenyl)(2-ethyl-4-(p-tris(trifluormethyl)methylphenyl)indenyl) zirconiumdichlorid,

2-p-methylcyclohexyl, 2-ethyl, symmetrische Substituenten in 4-Position, Dimethylsilandiyl(2-p-methylcyclohexyl-4-(p-isopropylphenyl)indenyl)(2-ethyl-4-(p-isopropylphenyl)indenyl)zirconiumdichlorid, Dimethylsilandiyl(2-p-methylcyclohexyl-4-(p-tert. butylphenyl)indenyl)(2-ethyl-4-(p-tert. butylphenyl)indenyl)zirconiumdichlorid, Dimethylsilandiyl (2-p-methylcyclohexyl-4-(p-sec. butylphenyl)indenyl)(2-ethyl-4-(p-sec. butylphenyl)indenyl)zirconiumdichlorid, Dimethylsilandiyl(2-p-methylcyclohexyl-4-(p-cyclohexylphenyl)indenyl)(2-ethyl-4-(p-cyclohexylphenyl)indenyl)zirconiumdichlorid, Dimethylsilandiyl(2-p-methylcyclohexyl-4-(p-trimethylsilylphenyl)indenyl)(2-ethyl-4-(p-trimethylsilylphenyl)indenyl) zirconiumdichlorid, Dimethylsilandiyl (2-p-methylcyclohexyl-4-(p-adamantylphenyl)indenyl)(2-ethyl-4-(p-adamantylphenyl)indenyl)zirconiumdichlorid, Dimethylsilandiyl(2-p-methylcyclohexyl-4-(p-tris(trifluormethyl)methylphenyl)indenyl) (2-ethyl-4-(p-tris(trifluormethyl)methylphenyl)indenyl)zirconiumdichlorid,

2-isopropyl, 4-(p-tert. butylphenyl), 2-ethyl, 4-diverse, Dimethylsilandiyl (2-isopropyl-4-(p-tert. butylphenyl)indenyl) (2-ethyl-4-(p-isopropylphenyl)indenyl)zirconiumdichlorid, Dimethylsilandiyl(2-isopropyl-4-(p-tert. butylphenyl) indenyl) (2-ethyl-4-(p-sec. butylphenyl)indenyl)zirconiumdichlorid, Dimethylsilandiyl (2-isopropyl-4-(p-tert. butylphenyl)indenyl) (2-ethyl-4-(p-cyclohexylphenyl)indenyl)zirconiumdichlorid, Dimethylsilandiyl (2-isopropyl-4-(p-tert. butylphenyl) indenyl)(2-ethyl-4-(p-trimethylsilylphenyl)indenyl)zirconiumdichlorid, Dimethylsilandiyl(2-isopropyl-4-(p-tert. butylphenyl)indenyl) (2-ethyl-4-(p-adamantylphenyl)indenyl)zirconiumdichlorid, Dimethylsilandiyl(2-isopropyl-4-(p-tert. butylphenyl)indenyl) (2-ethyl-4-(p-tris(trifluormethyl)methylphenyl)indenyl)zirconiumdichlorid,

2-sec. butyl, 4-(p-tert. butylphenyl), 2-ethyl, 4-diverse, Dimethylsilandiyl(2-sec. butyl-4-(p-tert. butylphenyl)indenyl)(2-ethyl-4-(p-isopropylphenyl)indenyl)zirconiumdichlorid, Dimethylsilandiyl(2-sec. butyl-4-(p-tert. butylphenyl)indenyl) (2-ethyl-4-(p-sec. butylphenyl)indenyl)zirconiumdichlorid, Dimethylsilandiyl(2-sec. butyl-4-(p-tert. butylphenyl)indenyl)(2-ethyl-4-(p-cyclohexylphenyl)indenyl)zirconiumdichlorid, Dimethylsilandiyl(2-sec. butyl-4-(p-tert. butylphenyl)indenyl) (2-ethyl-4-(p-trimethylsilylphenyl)indenyl)zirconiumdichlorid, Dimethylsilandiyl(2-sec. butyl-4-(p-tert. butylphenyl) indenyl) (2-ethyl-4-(p-adamantylphenyl)indenyl)zirconiumdichlorid, Dimethylsilandiyl(2-sec. butyl-4-(p-tert. butylphenyl) indenyl) (2-ethyl-4-(p-tris(trifluormethyl)methylphenyl)indenyl)zirconiumdichlorid,

2-(1-methylbutyl), 4-(p-tert. butylphenyl), 2-ethyl, 4-diverse, Dimethylsilandiyl(2-(1-methylbutyl)-4-(p-tert. butylphenyl)indenyl) (2-ethyl-4-(p-isopropylphenyl)indenyl)zirconiumdichlorid, Dimethylsilandiyl (2-(1-methylbutyl)-4-(p-tert. butylphenyl)indenyl)(2-ethyl-4-(p-sec. butylphenyl)indenyl)zirconiumdichlorid, Dimethylsilandiyl(2-(1-methylbutyl)-4-(p-tert. butylphenyl)indenyl) (2-ethyl-4-(p-cyclohexylphenyl)indenyl)zirconiumdichlorid, Dimethylsilandiyl (2-(1-methylbutyl)-4-(p-tert. butylphenyl)indenyl) (2-ethyl-4-(p-trimethylsilylphenyl)indenyl)zirconiumdichlorid, Dimethylsilandiyl(2-(1-methylbutyl)-4-(p-tert. butylphenyl) indenyl)(2-ethyl-4-(p-adamantylphenyl)indenyl)zirconiumdichlorid, Dimethylsilandiyl (2-(1-methylbutyl)-4-(p-tert. butylphenyl)indenyl)(2-ethyl-4-(p-tris(trifluormethyl)methylphenyl)indenyl)zirconiumdichlorid,

2-cyclopentyl, 4-(p-tert. butylphenyl), 2-ethyl, 4-diverse, Dimethylsilandiyl(2-cyclopentyl-4-(p-tert. butylphenyl) indenyl)(2-ethyl-4-(p-isopropylphenyl)indenyl)zirconiumdichlorid, Dimethylsilandiyl(2-cyclopentyl-4-(p-tert. butylphenyl) indenyl) (2-ethyl-4- (p-sec. butylphenyl)indenyl)zirconiumdichlorid, Dimethylsilandiyl(2-cyclopentyl-4-(p-tert. butylphenyl)indenyl) (2-ethyl-4-(p-cyclohexylphenyl)indenyl)zirconiumdichlorid, Dimethylsilandiyl (2-cyclopentyl-4-(p-tert. butylphenyl)indenyl) (2-ethyl-4-(p-trimethylsilylphenyl)indenyl)zirconiumdichlorid, Dimethylsilandiyl (2-cyclopentyl-4-(p-tert. butylphenyl)indenyl) (2-ethyl-4-(p-adamantylphenyl)indenyl)zirconiumdichlorid, Dimethylsilandiyl (2-cyclopentyl-4-(p-tert. butylphenyl)indenyl) (2-ethyl-4-(p-tris(trifluormethyl)methylphenyl)indenyl)zirconiumdichlorid,

2-cyclohexyl, 4-(p-tert. butylphenyl), 2-ethyl, 4-diverse, Dimethylsilandiyl(2-cyclohexyl-4-(p-tert. butylphenyl) indenyl) (2-ethyl-4-(p-isopropylphenyl)indenyl)zirconiumdichlorid, Dimethylsilandiyl(2-cyclohexyl-4-(p-tert. butylphenyl) indenyl)(2-ethyl-4-(p-sec. butylphenyl)indenyl)zirconiumdichlorid, Dimethylsilandiyl(2-cyclohexyl-4-(p-tert. butylphenyl) indenyl)(2-ethyl-4-(p-cyclohexylphenyl)indenyl)zirconiumdichlorid, Dimethylsilandiyl(2-cyclohexyl-4-(p-tert. butylphenyl)indenyl)(2-ethyl-4-(p-trimethylsilylphenyl)indenyl)zirconiumdichlorid, Dimethylsilandiyl(2-cyclohexyl-4-(p-tert. butylphenyl)indenyl) (2-ethyl-4-(p-adamantylphenyl)indenyl)zirconiumdichlorid, Dimethylsilandiyl(2-cyclohexyl-4-(p-tert. butylphenyl)indenyl) (2-ethyl-4-(p-tris(trifluormethyl)methylphenyl)indenyl)zirconiumdichlorid,

2-(p-methylcyclohexyl), 4-(p-tert. butylphenyl), 2-ethyl, 4-diverse, Dimethylsilandiyl(2-(p-methylcyclohexyl)-4-(p-tert. butylphenyl)indenyl)(2-ethyl-4-(p-isopropylphenyl)indenyl)zirconiumdichlorid, Dimethylsilandiyl(2-(p-methylcyclohexyl)-4-(p-tert. butylphenyl) indenyl)(2-ethyl-4-(p-sec. butylphenyl)indenyl)zirconiumdichlorid Dimethylsilandiyl (2-(p-methylcyclohexyl)-4-(p-tert. butylphenyl) indenyl) (2-ethyl-4-(p-cyclohexylphenyl)indenyl)zirconiumdichlorid, Dimethylsilandiyl(2-(p-methylcyclohexyl)-4-(p-tert. butylphenyl) indenyl)(2-ethyl-4-(p-trimethylsilylphenyl)indenyl)zirconiumdichlorid, Dimethylsilandiyl (2-(p-methylcyclohexyl)-4-(p-tert. butylphenyl) indenyl)(2-ethyl-4-(p-adamantylphenyl)indenyl)zirconiumdichlorid, Dimethylsilandiyl (2-(p-methylcyclohexyl)-4-(p-tert. butylphenyl) indenyl)(2-ethyl-4-(p-tris (trifluormethyl)methylphenyl)indenyl)zirconiumdichlorid,

2-isopropyl, 4-(p-isopropylphenyl), 2-ethyl, 4-diverse, Dimethylsilandiyl (2-isopropyl-4-(p-isopropylphenyl)indenyl)(2-ethyl-4-(p-tert. butylphenyl)indenyl)zirconiumdichlorid, Dimethylsilandiyl(2-isopropyl-4-(p-isopropylphenyl)indenyl) (2-ethyl-4-(p-sec. butylphenyl) indenyl)zirconiumdichlorid, Dimethylsilandiyl (2-isopropyl-4-(p-isopropylphenyl)indenyl) (2-ethyl-4-(p-cyclohexylphenyl)indenyl)zirconiumdichlorid, Dimethylsilandiyl(2-isopropyl-4-(p-isopropylphenyl)indenyl) (2-ethyl-4-(p-trimethylsilylphenyl)indenyl)zirconiumdichlorid, Dimethylsilandiyl(2-isopropyl-4-(p-isopropylphenyl)indenyl)(2-ethyl-4-(p-adamantylphenyl)indenyl)zirconiumdichlorid, Dimethylsilandiyl(2-isopropyl-4-(p-isopropylphenyl)indenyl) (2-ethyl-4-(p-tris(trifluormethyl)methylphenyl)indenyl)zirconiumdichlorid,

2-sec. butyl, 4-(p-isopropylphenyl), 2-ethyl, 4-diverse, Dimethylsilandiyl(2-sec. butyl-4-(p-isopropylphenyl)indenyl) (2-ethyl-4-(p-tert. butylphenyl) indenyl) zirconiumdichlorid, Dimethylsilandiyl (2-sec. butyl -4-(p-isopropylphenyl) indenyl) (2-ethyl-4-(p-sec. butylphenyl)indenyl)zirconiumdichlorid, Dimethylsilandiyl(2-sec. butyl-4-(p-isopropylphenyl) indenyl)(2-ethyl-4-(p-cyclohexylphenyl)indenyl)zirconiumdichlorid, Dimethylsilandiyl(2-sec. butyl-4-(p-isopropylphenyl) indenyl) (2-ethyl-4-(p-trimethylsilylphenyl)indenyl)zirconiumdichlorid, Dimethylsilandiyl(2-sec. butyl-4-(p-isopropylphenyl)indenyl) (2-ethyl-4-(p-adamantylphenyl)indenyl)zirconiumdichlorid, Dimethylsilandiyl(2-sec. butyl-4-(p-isopropylphenyl)indenyl) (2-ethyl-4-(p-tris(trifluormethyl)methylphenyl)indenyl)zirconiumdichlorid,

2-(1-methylbutyl), 4-(p-isopropylphenyl), 2-ethyl, 4-diverse, Dimethylsilandiyl(2-(1-methylbutyl)-4-(p-isopropylphenyl)indenyl) (2-ethyl-4-(p-tert. butylphenyl)indenyl)zirconiumdichlorid, Dimethylsilandiyl(2-(1-methylbutyl)-4-(p-isopropylphenyl)indenyl) (2-ethyl-4-(p-sec. butylphenyl)indenyl)zirconiumdichlorid, Dimethylsilandiyl(2-(1-methylbutyl)-4-(p-isopropylphenyl)indenyl) (2-ethyl-4-(p-cyclohexylphenyl)indenyl)zirconiumdichlorid, Dimethylsilandiyl(2-(1-methylbutyl)-4-(p-isopropylphenyl)indenyl)(2-ethyl-4-(p-trimethylsilylphenyl)indenyl)zirconiumdichlorid, Dimethylsilandiyl(2-(1-methylbutyl)-4-(p-isopropylphenyl)indenyl)(2-ethyl-4-(p-adamantylphenyl)indenyl)zirconiumdichlorid, Dimethylsilandiyl (2-(1-methylbutyl)-4-(p-isopropylphenyl)indenyl)(2-ethyl-4-(p-tris(trifluormethyl)methylphenyl)indenyl)zirconiumdichlorid,

2-cyclopentyl, 4-(p-isopropylphenyl), 2-ethyl, 4-diverse, Dimethylsilandiyl(2-cyclopentyl-4-(p-isopropylphenyl) indenyl) (2-ethyl-4-(p-tert. butylphenyl)indenyl)zirconiumdichlorid, Dimethylsilandiyl(2-cyclopentyl-4-(p-isopropylphenyl) indenyl) (2-ethyl-4-(p-sec. butylphenyl)indenyl)zirconiumdichlorid, Dimethylsilandiyl(2-cyclopentyl-4-(p-isopropylphenyl) indenyl)(2-ethyl-4-(p-cyclohexylphenyl)indenyl)zirconiumdichlorid, Dimethylsilandiyl(2-cyclopentyl-4-(p-isopropylphenyl)indenyl) (2-ethyl-4-(p-trimethylsilylphenyl)indenyl)zirconiumdichlorid, Dimethylsilandiyl(2-cyclopentyl-4-(p-isopropylphenyl)indenyl)(2-ethyl-4-(p-adamantylphenyl)indenyl)zirconiumdichlorid, Dimethylsilandiyl(2-cyclopentyl-4-(p-isopropylphenyl)indenyl) (2-ethyl-4-(p-tris(trifluormethyl)methylphenyl)indenyl)zirconiumdichlorid,

2-cyclohexyl, 4-(p-isopropylphenyl), 2-ethyl, 4-diverse, Dimethylsilandiyl(2-cyclohexyl-4-(p-isopropylphenyl)indenyl) (2-ethyl-4-(p-tert. butylphenyl)indenyl)zirconiumdichlorid, Dimethylsilandiyl(2-cyclohexyl-4-(p-isopropylphenyl)indenyl)(2-ethyl-4-(p-sec. butylphenyl)indenyl)zirconiumdichlorid, Dimethylsilandiyl(2-cyclohexyl-4-(p-isopropylphenyl)indenyl)(2-ethyl-4-(p-cyclohexylphenyl)indenyl)zirconiumdichlorid, Dimethylsilandiyl(2-cyclohexyl-4-(p-isopropylphenyl) indenyl)(2-ethyl-4-(p-trimethylsilylphenyl)indenyl)zirconiumdichlorid, Dimethylsilandiyl(2-cyclohexyl-4-(p-isopropylphenyl)indenyl)(2-ethyl-4-(p-adamantylphenyl)indenyl)zirconiumdichlorid, Dimethylsilandiyl(2-cyclohexyl-4-(p-isopropylphenyl)indenyl)(2-ethyl-4-(p-tris(trifluormethyl)methylphenyl)indenyl)zirconiumdichlorid,

2-(p-methylcyclohexyl), 4-(p-isopropylphenyl), 2-ethyl, 4-diverse, Dimethylsilandiyl(2-(p-methylcyclohexyl)-4-(p-isopropylphenyl)indenyl)(2-ethyl-4-(p-tert. butylphenyl)indenyl)zirconiumdichlorid, Dimethylsilandiyl(2-(p-methylcyclohexyl)-4-(p-isopropylphenyl)indenyl)(2-ethyl-4-(p-sec. butylphenyl)indenyl)zirconiumdichlorid, Dimethylsilandiyl (2-(p-methylcyclohexyl)-4-(p-isopropylphenyl)indenyl)(2-ethyl-4-(p-cyclohexylphenyl)indenyl)zirconiumdichlorid, Dimethylsilandiyl(2-(p-methylcyclohexyl)-4-(p-isopropylphenyl)indenyl)(2-ethyl-4-(p-trimethylsilylphenyl)indenyl)zirconiumdichlorid, Dimethylsilandiyl(2-(p-methylcyclohexyl)-4-(p-isopropylphenyl)indenyl)(2-ethyl-4-(p-adamantylphenyl)indenyl)zirconiumdichlorid, Dimethylsilandiyl(2-(p-methylcyclohexyl)-4-(p-isopropylphenyl)indenyl)(2-ethyl-4-(p-tris(trifluormethyl)methylphenyl)indenyl)zirconiumdichlorid,

2-isopropyl, 4-(p-sec. butyl), 2-ethyl, 4-diverse, Dimethylsilandiyl(2-isopropyl-4-(p-sec. butyl)indenyl)(2-ethyl-4-(p-tert. butylphenyl)indenyl)zirconiumdichlorid, Dimethylsilandiyl(2-isopropyl-4-(p-sec. butyl)indenyl)(2-ethyl-4-(p-isopropylphenyl)indenyl)zirconiumdichlorid, Dimethylsilandiyl(2-isopropyl-4-(p-sec. butyl)indenyl)(2-ethyl-4-(p-cyclohexylphenyl)indenyl)zirconiumdichlorid, Dimethylsilandiyl(2-isopropyl-4-(p-sec. butyl)indenyl)(2-ethyl-4-(p-trimethylsilylphenyl)indenyl)zirconiumdichlorid, Dimethylsilandiyl(2-isopropyl-4-(p-sec. butyl)indenyl)(2-ethyl-4-(p-adamantylphenyl)indenyl)zirconiumdichlorid, Dimethylsilandiyl(2-isopropyl-4-(p-sec. butyl)indenyl) (2-ethyl-4-(p-tris(trifluormethyl)methylphenyl)indenyl)zirconiumdichlorid,

2-sec. butyl, 4-(p-sec. butyl), 2-ethyl, 4-diverse, Dimethylsilandiyl(2-sec. butyl-4-(p-sec. butyl)indenyl)(2-ethyl-4-(p-tert. butylphenyl)indenyl)zirconiumdichlorid, Dimethylsilandiyl(2-sec. butyl-4-(p-sec. butyl)indenyl) (2-ethyl-4-(p-isopropylphenyl)indenyl)zirconiumdichlorid, Dimethylsilandiyl(2-sec. butyl-4-(p-sec. butyl)indenyl)(2-ethyl-4-(p-cyclohexylphenyl)indenyl)zirconiumdichlorid, Dimethylsilandiyl(2-sec. butyl-4-(p-sec. butyl)indenyl)(2-ethyl-4-(p-trimethylsilylphenyl)indenyl)zirconiumdichlorid, Dimethylsilandiyl(2-sec. butyl-4-(p-sec. butyl)indenyl)(2-ethyl-4-(p-adamantylphenyl)indenyl)zirconiumdichlorid, Dimethylsilandiyl(2-sec. butyl-4-(p-sec. butyl)indenyl)(2-ethyl-4-(p-tris(trifluormethyl)methylphenyl)indenyl)zirconiumdichlorid,

2-(1-methylbutyl), 4-(p-sec. butyl), 2-ethyl, 4-diverse, Dimethylsilandiyl(2-(1-methylbutyl)-4-(p-sec. butyl)indenyl)(2-ethyl-4-(p-tert. butylphenyl)indenyl)zirconiumdichlorid, Dimethylsilandiyl(2-(1-methylbutyl)-4-(p-sec. butyl)indenyl)(2-ethyl-4-(p-isopropylphenyl)indenyl)zirconiumdichlorid, Dimethylsilandiyl(2-(1-methylbutyl)-4-(p-sec. butyl)indenyl)(2-ethyl-4-(p-cyclohexylphenyl)indenyl)zirconiumdichlorid, Dimethylsilandiyl(2-(1-methylbutyl)-4-(p-sec. butyl)indenyl)(2-ethyl-4-(p-trimethylsilylphenyl)indenyl)zirconiumdichlorid, Dimethylsilandiyl(2-(1-methylbutyl)-4-(p-sec. butyl)indenyl)(2-ethyl-4-(p-adamantylphenyl)indenyl)zirconiumdichlorid, Dimethylsilandiyl(2-(1-methylbutyl)-4-(p-sec. butyl)indenyl) (2-ethyl-4-(p-tris(trifluormethyl)methylphenyl)indenyl)zirconiumdichlorid,

2-cyclopentyl, 4-(p-sec. butyl), 2-ethyl, 4-diverse, Dimethylsilandiyl(2-cyclopentyl-4-(p-sec. butyl)indenyl)(2-ethyl-4-(p-tert. butylphenyl)indenyl)zirconiumdichlorid, Dimethylsilandiyl(2-cyclopentyl-4-(p-sec. butyl)indenyl)(2-ethyl-4-(p-isopropylphenyl)indenyl)zirconiumdichlorid, Dimethylsilandiyl(2-cyclopentyl-4-(p-sec. butyl)indenyl) (2-ethyl-4-(p-cyclohexylphenyl)indenyl)zirconiumdichlorid, Dimethylsilandiyl(2-cyclopentyl-4-(p-sec. butyl)indenyl) (2-ethyl-4-(p-trimethylsilylphenyl)indenyl)zirconiumdichlorid, Dimethylsilandiyl(2-cyclopentyl-4-(p-sec. butyl)indenyl) (2-ethyl-4-(p-adamantylphenyl)indenyl)zirconiumdichlorid, Dimethylsilandiyl(2-cyclopentyl-4-(p-sec. butyl)indenyl) (2-ethyl-4- (p-tris (trifluormethyl)methylphenyl) indenyl) zirconiumdichlorid,

2-cyclohexyl, 4-(p-sec. butyl), 2-ethyl, 4-diverse, Dimethylsilandiyl(2-cyclohexyl-4-(p-sec. butyl)indenyl)(2-ethyl-4-(p-tert. butylphenyl)indenyl)zirconiumdichlorid, Dimethylsilandiyl(2-cyclohexyl-4-(p-sec. butyl)indenyl)(2-ethyl-4-(p-isopropylphenyl)indenyl)zirconiumdichlorid, Dimethylsilandiyl(2-cyclohexyl-4-(p-sec. butyl)indenyl)(2-ethyl-4-(p-cyclohexylphenyl)indenyl)zirconiumdichlorid, Dimethylsilandiyl(2-cyclohexyl-4-(p-sec. butyl)indenyl)(2-ethyl-4-(p-trimethylsilylphenyl)indenyl)zirconiumdichlorid, Dimethylsilandiyl(2-cyclohexyl-4-(p-sec. butyl)indenyl) (2-ethyl-4-(p-adamantylphenyl) indenyl) zirconiumdichlorid, Dimethylsilandiyl(2-cyclohexyl-4-(p-sec. butyl)indenyl) (2-ethyl-4-(p-tris(trifluormethyl)methylphenyl)indenyl)zirconiumdichlorid,

2-(p-methylcyclohexyl), 4-(p-sec. butyl), 2-ethyl, 4-diverse, Dimethylsilandiyl (2-(p-methylcyclohexyl)-4-(p-sec. butyl)indenyl)(2-ethyl-4-(p-tert. butylphenyl)indenyl)zirconiumdichlorid, Dimethylsilandiyl(2-(p-methylcyclohexyl)-4-(p-sec. butyl)indenyl) (2-ethyl-4-(p-isopropylphenyl)indenyl)zirconiumdichlorid, Dimethylsilandiyl(2-(p-methylcyclohexyl)-4-(p-sec. butyl)indenyl) (2-ethyl-4-(p-cyclohexylphenyl)indenyl)zirconiumdichlorid, Dimethylsilandiyl(2-(p-methylcyclohexyl)-4-(p-sec. butyl)indenyl)(2-ethyl-4-(p-trimethylsilylphenyl)indenyl)zirconiumdichlorid, Dimethylsilandiyl(2-(p-methylcyclohexyl)-4-(p-sec. butyl)indenyl) (2-ethyl-4-(p-adamantylphenyl)indenyl)zirconiumdichlorid, Dimethylsilandiyl (2-(p-methylcyclohexyl)-4-(p-sec. butyl)indenyl) (2-ethyl-4-(p-tris(trifluormethyl)methylphenyl)indenyl)zirconiumdichlorid,

sowie die entsprechenden Dimethylgermandiyl, Ethyliden, 1-Methyethyliden, 1,1-Dimethylethyliden, 1,2-Dimethylethyliden, 1,1,2,2-Tetramethylethyliden, Dimethylmethyliden, Phenylmethylmethyliden und Diphenylmethyliden verbrückten Verbindungen.

Mögliche Herstellungsverfahren für Metallocene der Formel I sind z.B. in Journal of Organometallic Chem. 288 (1985) 63 - 67 und in den dort zitierten Dokumenten beschrieben.

Ausgewählt Metallocene, insbesondere solche, die speziell unterschiedlich Substitutionen in Position 2 und Position 4 am Indenylliganden besitzen, lösen die zugrunde liegende Aufgabe besonders gut.

Die erfindungsgemäßen Metallocene der Formel I sind hochaktive Katalysatorkomponenten für die Olefin-Copolymerisation. Je nach Substitutionsmuster der Liganden können die Metallocene als Isomerengemisch anfallen. Die Metallocene werden für die Polymerisation bevorzugt isomerenrein eingesetzt.

Statt der reinen chiralen verbrückten Metallocenverbindungen der Formel (I) pseudo-(rac) können bei der Katalysatorherstellung auch Gemische aus den Metallocenen der Formel (I) und den entsprechenden pseudo-meso Metallocenen zur Katalysatorherstellung eingesetzt werden.

Bevorzugt werden die pseudo-rac isomeren Metallocene der Formel (I) eingesetzt, sinnvoll ist aber auch die Verwendung von pseudo-rac-angereicherten rac/meso-Mischungen. Die Begriff, pseudo-rac, und, pseudo-meso, sind so zu verstehen, wie sie in der Schrift WO 00/31090 auf Seite 8 als Formeln II und IIa offenbart ist.

Erläuternde, jedoch nicht einschränkende Beispiele für die erfindungsgemäßen Metallocene sind:

Dimethylsilandiyl(2-methyl-4-(4'-tert.-butyl-phenyl)-indenyl)-L-zirkoniumdichlorid

Dimethylsilandiyl(2-methyl-4-(4'-tert.-butyl-phenyl)-indenyl) -L-hafnaimdichlorid
Dimethylsilandiyl(2-methyl-4-(4'-methyl-phenyl)-indenyl)-L-zirkoniumdichlorid
Dimethylsilandiyl(2-methyl-4-(4'-ethyl-phenyl)-indenyl)-L-zirko niumdichlorid
Dimethylsilandiyl(2-methyl-4-(4'-n-propyl-phenyl)-indenyl)-L-zirkonium-dichlorid
Dimethylsilandiyl(2-methyl-4-(4'-iso-propyl-phenyl)-indenyl)-L-zirkoniumdichlorid
Dimethylsilandiyl(2-methyl-4-(4'-n-butyl-phenyl)-indenyl)-L-zirkoniumdichlorid
Dimethylsilandiyl(2-methyl-4-(4'-hexyl-phenyl)-indenyl)-L-zirkoniumdichlorid
Dimethylsilandiyl(2-methyl-4-(4'-sec-butyl-phenyl)-indenyl)-L-zirkoniumdichlorid
Dimethylsilandiyl(2-methyl-4-(4'-trimethylsilyl-phenyl)-indenyl)-L-zirkoniumdichlorid
Dimethylsilandiyl(2-methyl-4-(4'-adamantyl-phenyl)-indenyl)-L-zirkoniumdichlorid
Dimethylsilandiyl(2-methyl-4-(4'-trifluormethyl-phenyl)-indenyl) -L-zirkoniumdichlorid
Dimethylsilandiyl(2-methyl-4-(4'-methoxy-phenyl)-indenyl) -L-zirkoniumdichlorid
Dimethylsilandiyl(2-ethyl-4-(4'-tert-butyl-phenyl)-indenyl) -L-zirkoniumdichlorid
Dimethylsilandiyl(2-ethyl-4-(4'-trifluormethyl-phenyl)-indenyl) -L-zirkoniumdichlorid
Dimethylsilandiyl(2-ethyl-4-(4'-methoxy-phenyl)-indenyl) -L-zirkoniumdichlorid
Dimethylsilandiyl(2-ethyl-4-(4'-methyl-phenyl)-indenyl) -L-zirkoniumdichlorid
Dimethylsilandiyl(2-ethyl-4-(4'-ethyl-phenyl)-indenyl) -L-zirkoniumdichlorid
Dimethylsilandiyl(2-ethyl-4-(4'-n-propyl-phenyl)-indenyl) -L-zirkoniumdichlorid
Dimethylsilandiyl(2-ethyl-4-(4'-iso-propyl-phenyl) -indenyl) -L-zirkoniumdichlorid
Dimethylsilandiyl(2-ethyl-4-(4'-n-butyl-phenyl)-indenyl) -L-zirkoniumdichlorid
Dimethylsilandiyl(2-ethyl-4-(4'-hexyl-phenyl)-indenyl) -L-zirkoniumdichlorid
Dimethylsilandiyl(2-ethyl-4-(4'-pentyl-phenyl)-indenyl) -L-zirkoniumdichlorid
Dimethylsilandiyl(2-ethyl-4-4'-cyclohexyl-phenyl)-indenyl) -L-zirkoniumdichlorid
Dimethylsilandiyl(2-ethyl-4-(4'-sec-butyl-phenyl)-indenyl) -L-zirkoniumdichlorid

Dimethylsilandiyl(2-ethyl-4-(4'-tert.-butyl-phenyl)-indenyl)-L-zirkoniumdichlorid
Dimethylsilandiyl(2-ethyl-4-(4'-trimethylsilyl-phenyl)-indenyl)-L-zirkoniumdichlorid
Dimethylsilandiyl(2-ethyl-4-(4'-adamantyl-phenyl)-indenyl)-L-zirkoniumdichlorid
Dimethylsilandiyl(2-n-propyl-4-(4'-methyl-phenyl)-indenyl)-L-zirkoniumdichlorid
Dimethylsilandiyl(2-n-propyl-4-(4'-ethyl-phenyl)-indenyl)-L-zirkoniumdichlorid
Dimethylsilandiyl(2-n-propyl-4-(4'-n-propyl-phenyl)-indenyl) -L-zirkoniumdichlorid
Dimethylsilandiyl(2-n-propyl-4-(4'-iso-propyl-phenyl)-indenyl)-L-zirkoniumdichlorid
Dimethylsilandiyl(2-n-propyl-4-(4'-n-butyl-phenyl)-indenyl)-L-zirkoniumdichlorid
Dimethylsilandiyl(2-n-propyl-4-(4'-hexyl-phenyl)-indenyl)-L-zirkoniumdichlorid
Dimethylsilandiyl(2-n-propyl-4-(4'-cyclohexyl-phenyl)-indenyl)-L-zirkoniumdichlorid
Dimethylsilandiyl(2-n-propyl-4-(4'-sec-butyl-phenyl)-indenyl)-L-zirkoniumdichlorid
Dimethylsilandiyl(2-n-propyl-4-(4'-tert.-butyl-phenyl)-indenyl)-L-zirkoniumdichlorid
Dimethylsilandiyl(2-propyl-4-(4'-trimethylsilyl-phenyl)-indenyl)-L-zirkoniumdichlorid
Dimethylsilandiyl(2-propyl-4-(4'-adamantyl-phenyl)-indenyl)-L-zirkoniumdichlorid
Dimethylsilandiyl(2-n-butyl-4-(4'-methyl-phenyl)-indenyl)-L-zirkoniumdichlorid
Dimethylsilandiyl(2-n-butyl-4-(4'-ethyl-phenyl)-indenyl) -L-zirkoniumdichlorid
Dimethylsilandiyl(2-n-butyl-4-(4'-n-propyl-phenyl)-indenyl)-L-zirkoniumdichlorid
Dimethylsilandiyl(2-n-butyl-4-(4'-iso-propyl-phenyl)-indenyl)-L-zirkoniumdichlorid
Dimethylsilandiyl(2-n-butyl-4-(4'-n-butyl-phenyl)-indenyl)-L-zirkoniumdichlorid
Dimethylsilandiyl(2-n-butyl-4-(4'-hexyl-phenyl)-indenyl) -L-zirkoniumdichlorid
Dimethylsilandiyl(2-n-butyl-4-(4'-cyclohexyl-phenyl)-indenyl)-L-zirkoniumdichlorid
Dimethylsilandiyl(2-n-butyl-4-(4'-sec-butyl-phenyl)-indenyl)-L-zirkoniumdichlorid
Dimethylsilandiyl(2-n-butyl-4-(4'-tert.-butyl-phenyl)-indenyl)-L-zirkoniumdichlorid
Dimethylsilandiyl(2-n-butyl-4-(4'-trimethylsilyl-phenyl)-indenyl)-L-zirkoniumdichlorid
Dimethylsilandiyl(2-n-butyl-4-(4'-adamantyl-phenyl)-indenyl)-L-zirkoniumdichlorid
Dimethylsilandiyl(2-hexyl-4-(4'-methyl-phenyl)-indenyl) -L-zirkoniumdichlorid
Dimethylsilandiyl(2-hexyl-4-(4'-ethyl-phenyl)-indenyl) -L-zirkoniumdichlorid
Dimethylsilandiyl(2-hexyl-4-(4'-n-propyl-phenyl)-indenyl) -L-zirkoniumdichlorid
Dimethylsilandiyl(2-hexyl-4-(4'-iso-propyl-phenyl)-indenyl)-L-zirkoniumdichlorid
Dimethylsilandiyl(2-hexyl-4-(4'-n-butyl-phenyl)-indenyl) -L-zirkoniumdichlorid
Dimethylsilandiyl(2-hexyl-4-(4'-hexyl-phenyl)-indenyl) -L-zirkoniumdichlorid
Dimethylsilandiyl (2-hexyl-4- (4' -cyclohexyl-phenyl)-indenyl)-L-zirkoniumdichlorid
Dimethylsilandiyl(2-hexyl-4-(4'-sec-butyl-phenyl)-indenyl) -L-zirkoniumdichlorid.
Dimethylsilandiyl(2-hexyl-4-(4'-tert.-butyl-phenyl)-indenyl)-L-zirkoniumdichlorid
Dimethylsilandiyl(2-hexyl-4-(4'-trimethylsilyl-phenyl)-indenyl)-L-zirkoniumdichlorid
Dimethylsilandiyl(2-hexyl-4-(4'-adamantyl-phenyl)-indenyl)-L-zirkoniumdichlorid.

Hierbei kann L = (2-isopropyl-4-(4'-tert.-butyl-phenyl)-indenyl) ; (2-sec.butyl-4- (4'-tert.-butyl-phenyl)-indenyl); (2-isopropyl-4-phenyl-indenyl); (2-isopropyl-4-(2-naphthyl)-indenyl); 2-isopropyl-4-(1-naphthyl)-indenyl; (2-sec. butyl-4-phenyl-indenyl); (2-sec. butyl-4-phenyl-indenyl) ; (2-sec. butyl-4-(2-naphthyl)-indenyl); (2-sec. butyl-4-(1-naphthyl)-indenyl); (2- (1-methylpentyl)-4-(4'-tert.-butyl-phenyl) -indenyl); (2-(1-methylbutyl)-4-phenyl-indenyl); (2-isoprentyl-4-(2-naphthyl)-indenyl); (2-(1-methylbutyl)-4-(1-naphthyl-indenyl) ; (2-(1-methylbutyl)-4-(4'-tert.-butyl-phenyl-indenyl); (2-(1-methylpentyl)-4-phenyl-indenyl) ; (2-(1-methylbutyl)-4-(2-naphthyl)-indenyl); (2-(1-methylbutyl)-4-(1-naphthyl)-indenyl); (2-cyclopentyl-4-(4'-tert.-butyl-phenyl)-indenyl); (2-cyclopentyl-4-phenyl-indenyl); (2-cyclopentyl-4-(2-naphthyl-indenyl); (2-cyclopentyl-4-(1-naphthyl-indenyl) ; (2-cyclohexyl-4-(4'-tert.-butyl-phenyl)-indenyl); (2-cyclohexyl-4-phenyl-indenyl); (2-cyclohexyl-4-(2-naphthyl)-indenyl); (2-cyclohexyl-4-(1-naphthyl)-indenyl); (2-(1-methylbutyl)-4-(acenaphth-phenyl)-indenyl); (2-isopropyl-4-(acenaphth-phenyl)-indenyl); (2-sec. butyl-4-(acenaphth-phenyl)-indenyl); (2-(1-methylbutyl)-4-(acenaphth-phenyl)-indenyl); C2-(1-methylbutyl)-4-(acenaphth-phenyl)-indenyl); (2-(1-methylpentyl-4-(acenaphtylphenyl)-indenyl); (2-cyclopentyl-4-(acenaphth-phenyl)-indenyl),· (2-cyclohexyl-4-(acenaphth-phenyl)-indenyl) sein. Weiterhin bevorzugt sind die entsprechenden Zirkondimethyl-Verbindungen, die entsprechenden Zirkon-$\eta^4$-Butadien-Verbindungen, bevorzugt sind au-Berdem Zirkoniumfragmente wie in Aktenzeichen P19854350 (Deutsches Patentamt) beschrieben, sowie die entsprechenden Verbindungen mit $Si(Ph)_2$-, Si(MeEt)-, Si(PhMe)-, Si(PHEt)- und $Si(Et)_2$-Brücke.

Die erfindungsgemäßen Metallocene der Formel I eignen sich insbesondere als Bestandteil von Katalysatorsystemen zur Herstellung von Polyolefinen durch Polymerisation von mindestens einem Olefin in Gegenwart eines Katalysators, der mindestens einen Cokatalysator und mindestens ein Metallocen enthält.

Der Cokatalysator, der zusammen mit einem erfindungsgemäßen Metallocene der Formeln I und II das Katalysatorsystem bildet, enthält mindestens eine Verbindung vom Typ eines Aluminoxans oder einer Lewis-Säure oder einer ionischen Verbindung, die durch Reaktion mit einem Metallocen dieses in eine kationische Verbindung überführt.

Die Cokatalysatorkomponente, die erfindungsgemäß im Katalysatorsystem enthalten sein kann, enthält mindestens eine Verbindung vom Typ eines Aluminoxans oder einer Lewis-Säure oder einer ionischen Verbindung, die durch Reaktion mit einem Metallocen dieses in eine kationische Verbindung überführt.

Als Aluminoxan wird bevorzugt eine Verbindung der allgemeinen Formel (III)

$$(R\ AlO)_n \qquad (III)$$

verwendet.

Weitere geeignete Aluminoxane können z.B. cyclisch wie in Formel (IV)

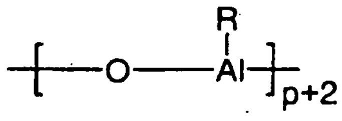

(IV)

oder linear wie in Formel (V)

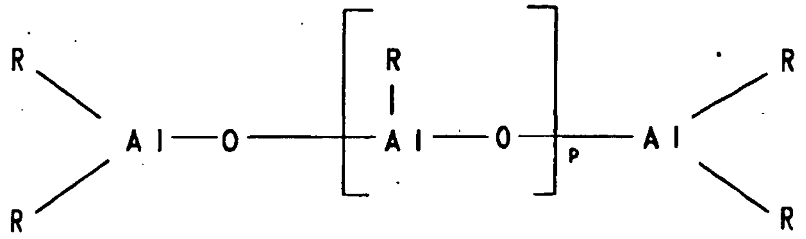

(V)

oder vom Cluster-Typ wie in Formel (VI)

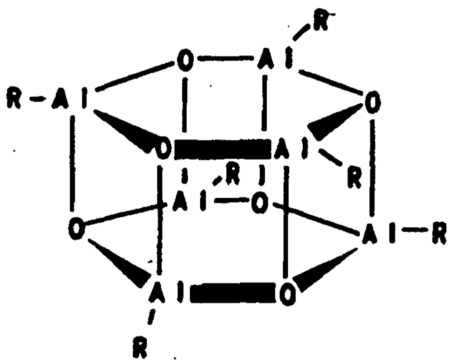

(VI)

sein. Derartige Aluminoxane werden beispielsweise in JACS 117 (1995), 6465-74, Organometallics 13 (1994), 2957-2969, beschrieben.

Die Reste R in den Formeln (III), (IV), (V) und (VI) können gleich oder verschieden sein und eine $C_1$-$C_{20}$-Kohlenwasserstoffgruppe wie eine $C_1$-$C_6$-Alkylgruppe, eine $C_6$-$C_{18}$-Arylgruppe, Benzyl oder Wasserstoff bedeuten, und p eine ganze Zahl von 2 bis 50, bevorzugt 10 bis 35 bedeuten.

Bevorzugt sind die Reste R gleich und bedeuten Methyl, Isobutyl, n-Butyl, Phenyl oder Benzyl, besonders bevorzugt Methyl.

Sind die Reste R unterschiedlich, so sind sie bevorzugt Methyl und Wasserstoff, Methyl und Isobutyl oder Methyl und n-Butyl, wobei Wasserstoff bzw. Isobutyl oder n-Butyl bevorzugt zu 0,01 - 40 % (Zahl der Reste R) enthalten sind.

Das Aluminoxan kann auf verschiedene Arten nach bekannten Verfahren hergestellt werden. Eine der Methoden ist beispielsweise, daß eine Aluminium-kohlenwasserstoffverbindung und/oder eine Hydridoaluminium-kohlenwasserstoffverbindung mit Wasser (gasförmig, fest, flüssig oder gebunden - beispielsweise als Kristallwasser) in einem inerten Lösungsmittel (wie z. B. Toluol) umgesetzt wird.

Zur Herstellung eines Aluminoxans mit verschiedenen Alkylgruppen R werden entsprechend der gewünschten Zusammensetzung und Reaktivität zwei verschiedene Aluminiumtrialkyle ($AlR_3$ + $AlR'_3$) mit Wasser umgesetzt (vgl. S. Pasynkiewicz, Polyhedron 9 (1990) 429 und EP-A=0,302,424).

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Als Lewis-Säure werden bevorzugt mindestens eine bor- oder aluminiumorganische Verbindung eingesetzt, die $C_1$-$C_{20}$-kohlenstoffhaltige Gruppen enthalten, wie verzweigte oder unverzweigte Alkyloder Halogenalkyl, wie z.B. Methyl, Propyl, Isopropyl, Isobutyl, Trifluormethyl, ungesättigte Gruppen, wie Aryl oder Halogenaryl, wie Phenyl, Tolyl, Benzylgruppen, p-Fluorophenyl, 3,5-Difluorophenyl, Pentachlorophenyl, Pentafluorophenyl, 3,4,5 Trifluorophenyl und 3,5 Di(trifluoromethyl)phenyl.

Beispiele für Lewis-Säuren sind Trimethylaluminium, Triethylaluminium, Triisobutylaluminium, Tributylaluminium, Trifluoroboran, Triphenylboran, Tris(4-fluorophenyl)boran, Tris(3,5-difluorophenyl) boran, Tris(4-fluoromethylphenyl)boran, Tris(pentafluorophenyl)boran, Tris(tolyl)boran, Tris(3,5-dimethylphenyl)boran, Tris(3,5-difluorophenyl)boran und/oder Tris(3,4,5-trifluorophenyl)boran. Insbesondere bevorzugt ist Tris(pentafluorophenyl)boran.

Als ionische Cokatalysatoren werden bevorzugt Verbindungen eingesetzt, die ein nicht koordinierendes Anion enthalten, wie beispielsweise Tetrakis(pentafluorophenyl)borate, Tetraphenylborate, $SbF_6^-$, $CF_3SO_3^-$ oder $ClO_4^-$. Als kationisches Gegenion werden Lewis-Basen wie z.B. Metyhlamin, Anilin, Dimethylamin, Diethylamin, N-Methylanilin, Diphenylamin, N,N-Dimethylanilin, Trimethylamin, Triethylamin, Tri-n-butylamin, Methyldiphenylamin, Pyridin, p-Bromo-N,N-dimethylanilin, p-Nitro-N,N-dimethylanilin, Triethylphosphin, Triphenylphosphin, Diphenylphosphin, Tetrahydrothiophen und Triphenylcarbenium eingesetzt.

Beispiele für solche erfindungsgemäßen ionischen Verbindungen sind
Triethylammoniumtetra(phenyl)borat,
Tributylammoniumtetra(phenyl)borat,
Trimethylammoniumtetra(tolyl)borat,
Tributylammoniumtetra(tolyl)borat,
Tributylammoniumtetra(pentafluorophenyl)borat,

Tributylammoniumtetra(pentafluorophenyl)aluminat,
Tripropylammoniumtetra(dimethylphenyl)borat,
Tributylammoniumtetra(trifluoromethylphenyl)borat,
Tributylammoniumtetra(4-fluorophenyl)borat,
N,N-Dimethylaniliniumtetra(phenyl)borat,
N,N-Diethylaniliniumtetra(phenyl)borat,
N,N-Dimethylaniliniumtetrakis(pentafluorophenyl)borate,
N,N-Dimethylaniliniumtetrakis(pentafluorophenyl)aluminat,
N,N-Dimethylcyclohexylammoniumtetrakis(pentafluorophenyl)borat,
N,N-Dimethylbenzylammoniumtetrakis(pentafluorophenyl)borat,
Di(propyl)ammoniumtetrakis(pentafluorophenyl)borat,
Di(cyclohexyl)ammoniumtetrakis(pentafluorophenyl)borat, Triphenylphosphoniumtetrakis(phenyl)borat,
Triethylphosphoniumtetrakis(phenyl)borat,
Diphenylphosphoniumtetrakis(phenyl)borat,
Tri(methylphenyl)phosphoniumtetrakis(phenyl)borat,
Tri(dimethylphenyl)phosphoniumtetrakis(phenyl)borat,
Triphenylcarbeniumtetrakis(pentafluorophenyl)borat,
Triphenylcarbeniumtetrakis(pentafluorophenyl)aluminat,
Triphenylcarbeniumtetrakis(phenyl)aluminat,
Ferroceniumtetrakis(pentafluorophenyl)borat und/oder
Ferroceniumtetrakis(pentafluorophenyl)aluminat.

Bevorzugt sind Triphenylcarbeniumtetrakis(pentafluorophenyl)borat und/oder N,N-Dimethylaniliniumtetrakis (pentafluorophenyl)borat.

Es können auch Gemische mindestens einer Lewis-Säure und mindestens einer ionischen Verbindung eingesetzt werden.

Als Cokatalysatorkomponenten sind ebenfalls Boran- oder Carboran-Verbindungen wie z.B.

7,8-Dicarbaundecaboran(13), Undecahydrid-7,8-dimethyl-7,8-dicarbaundecaboran, Dodecahydrid-1-phenyl-1,3-dicarbanonaboran, Tri(butyl)ammoniumundecahydrid-8-ethyl-7,9-dicarbaundecaborat, 4-Carbanonaboran(14)Bis (tri(butyl)ammonium)nonaborat, Bis(tri(butyl)ammonium)undecaborat, Bis(tri(butyl)ammonium)dodecaborat, Bis(tri(butyl)ammonium)decachlorodecaborat, Tri(butyl)ammonium-1-carbadecaborate, Tri(butyl)ammonium-1-carbadodecaborate, Tri(butyl)ammonium-1-trimethylsilyl-1-carbadecaborate, Tri(buyl)ammoniumbis(nonahydrid-1,3-dicarbonnonaborät)cobaltate(III), Tri(butyl)ammoniumbis(undecahydrid-7,8-dicarbaundecaborat)ferrat(III) von Bedeutung.

Als Cokatalysatorsysteme sind ebenfalls Kombinationen aus mindestens einem Amin und einem Träger mit elementorganischen Verbindungen, wie sie im Patent WO 99/40129 beschrieben sind, von Bedeutung.

Bevorzugte Cokatalysatorsysteme sind die Verbindungen der Formeln (A) und (B),

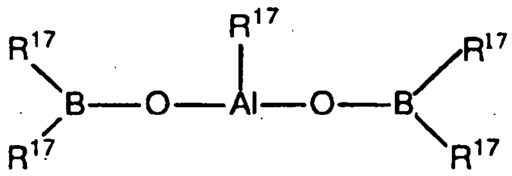

(A)

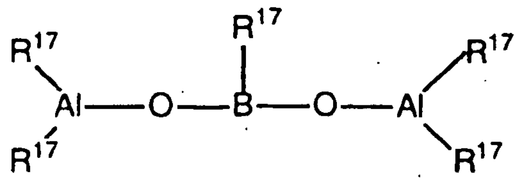

(B)

worin $R^{17}$

ein Wasserstoffatom, ein Halogenatom, eine $C_1$-$C_{40}$-kohlenstoffhaltige Gruppe, insbesondere $C_1$-$C_{20}$-Alkyl, $C_1$-$C_{20}$-Halogenalkyl, $C_1$-$C_{10}$-Alkoxy, $C_6$-$C_{20}$-Aryl, $C_6$-$C_{20}$-Halogenaryl, $C_6$-$C_{20}$-Aryloxy, $C_7$-$C_{40}$-Arylalkyl, $C_7$-$C_{40}$-Halogenarylalkyl, $C_7$-$C_{40}$-Alkylaryl oder $C_7$-$C_{40}$-Halogenalkylaryl bedeuten. $R^{17}$ kann auch eine -$OSiR_3$-Gruppe sein, worin R gleich oder verschieden sind und die gleiche Bedeutung wie $R^{17}$ außer einer weiteren -$OSiR_3$-Gruppe haben.

Als weiterer bevorzugter Cokatalysator sind darüber hinaus allgemein Verbindungen anzusehen, die durch die Umsetzung.mindestens einer Verbindung der Formel (C) und/oder (D) und/oder (E) mit mindestens einer Verbindung der Formel (F) entstehen.

$R_f^{17}B\text{-}(DR^7)_g$ (C)

$R_2^{17}B\text{-}X\text{-}BR_2^{17}$ (D)

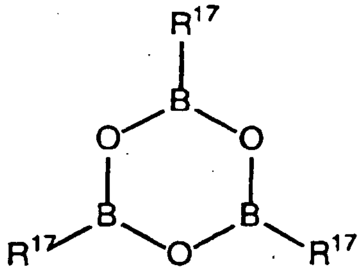

(E)

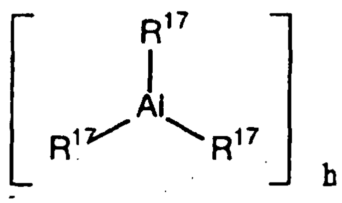

(F)

worin

$R^7$

ein Wasserstoffatom oder eine borfreie $C_1$-$C_{40}$-kohlenstoffhaltige Gruppe wie $C_1$-$C_{20}$-Alkyl, $C_6$-$C_{20}$-Aryl, $C_7$-$C_{40}$-Arylalky, $C_7$-$C_{40}$-Alkyl aryl sein kann und worin

$R^{17}$ die gleiche Bedeutung wie vorstehend genannt hat,

X ist gleich ein Element der VI. Hauptgruppe des Periodensystems der Elemente oder eine NR-Gruppe, worin R ein Wasserstoffatom oder ein $C_1$-$C_{20}$-Kohlenwasserstoffrest wie $C_1$-$C_{20}$-Alkyl oder $C_1$-$C_{20}$-Aryl ist,

D

ist gleich ein Element der VI. Hauptgruppe des Periodensystems der Elemente oder eine NR-Gruppe, worin R ein Wasserstoffatom oder eine $C_1$-$C_{20}$-Kohlenwasserstoffrest wie $C_1$-$C_{20}$-Alkyl oder $C_1$-$C_{20}$-Aryl ist,

f

eine ganze Zahl von 0 bis 3 ist

g

eine ganze Zahl von 0 bis 3 ist, wobei z + y ungleich 0 sind,

h

eine ganze Zahl von 1 bis 10 ist.

Gegebenenfalls werden die bimetallischen Verbindungen mit einer Organometallverbindung der Formel VIII $[M^4R^{19}q]_k$ kombiniert, worin $M^4$ ein Element der I., II. und III. Hauptgruppe des Periodensystems der Elemente ist, $R^{19}$ gleich oder verschieden ist und ein Wasserstoffatom, ein Halogenatom, eine $C_1$-$C_{40}$-kohlenstoffhaltige Gruppe, insbesondere $C_1$-$C_{20}$- Alkyl-, $C_6$-$C_{40}$-Aryl-, $C_7$-$C_{40}$-Aryl-alkyl oder $C_7$-$C_{40}$-Alkyl-aryl-Gruppe bedeutet, q eine ganze Zahl von 1 bis 3 und k ist eine ganze Zahl von 1 bis 4 ist.

Beispiele für die cokatalytisch wirkenden Verbindungen der Formeln A und B sind

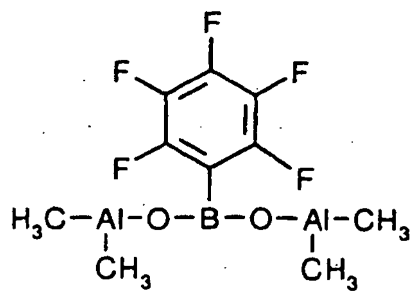

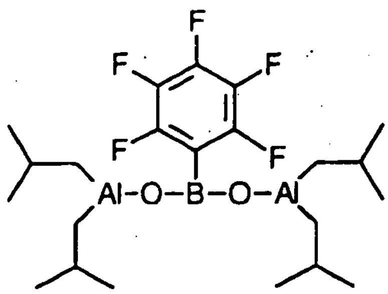

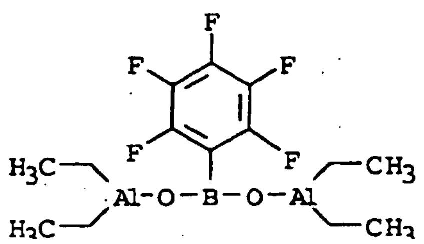

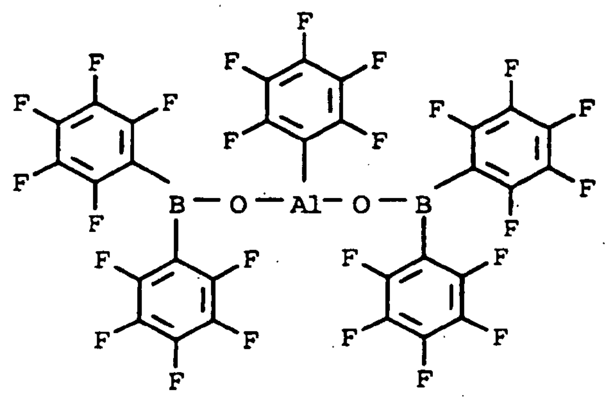

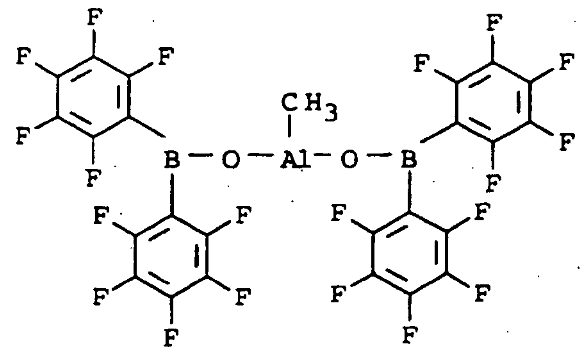

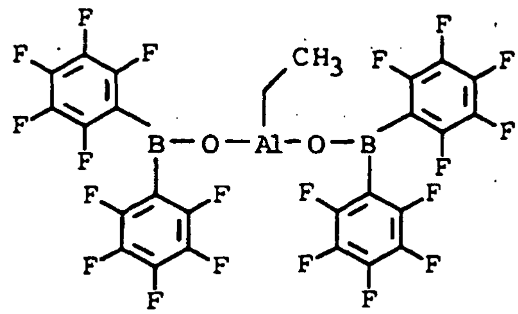

Bei den Organometallverbindungen der Formel VIII handelt es sich vorzugsweise um neutrale Lewissäuren worin $M^4$ für Lithium, Magnesium und/oder Aluminium, insbesondere Aluminium, steht. Beispiele für die bevorzugten Organometall-Verbindungen der Formel VIII sind Trimethylaluminium, Triethylaluminium, Tri-isopropylaluminium, Trihexylaluminium, Trioctylaluminium, Tri-n-butylaluminium, Tri-n-propylaluminium, Triisoprenaluminium, Dimethylaluminiummonochlorid, Diethyl-aluminiummonochlorid, Diisobutylaluminiummonochlorid, Methylaluminiumsesqui-chlorid, Ethylaluminiumsesquichlorid, Dimethylaluminiumhydrid, Diethylaluminium-hydrid, Diisopropylaluminiumhydrid, Dimethylaluminium(trimethylsiloxid), Dimethyl-aluminium(triethylsiloxid), Phenylalan, Pentafluorphenylalan und o-Tolylalan.

Als weitere Cokatalysatoren, die ungeträgert oder geträgert vorliegen können, sind die in EP-A-924223, DE 19622207.9, EP-A-601830, EP-A-824112, EP-A-824113, WO 99/06414, EP-A-811627, WO97/11775, DE 19606167.9 und DE 19804910 genannten Verbindungen zu verwenden.

Die Trägerkomponente des erfindungsgemäßen Katalysatorsystems kann ein beliebiger organischer oder anorganischer, inerter Feststoff sein, insbesondere ein poröser Träger wie Talk, anorganische Oxide und feinteilige Polymerpulver (z.B. Polyolefine).

Geeignete anorganische Oxide finden sich in den Gruppen 2,3,4,5,13,14,15 und 16 des Periodensystems der Elemente. Beispiele für als Träger bevorzugte Oxide umfassen Siliciumdioxid, Aluminiumoxid, sowie Mischoxide der Elemente Calcium, Aluminium, Silicium, Magnesium, Titan und entsprechende Oxid-Mischungen. Andere anorganische Oxide, die allein oder in Kombination mit den zuletzt genannten bevorzugten oxiden Trägern eingesetzt werden können, sind z.B. MgO, $ZrO_2$, $TiO_2$ oder $B_2O_3$, um nur einige zu nennen.

Die verwendeten Trägermaterialien weisen eine spezifische Oberfläche im Bereich von 10 bis 1000 $m^2/g$, ein Porenvolumen im Bereich von 0,1 bis 5 ml/g und eine mittlere Partikelgröße von 1 bis 500 $\mu m$ auf. Bevorzugt sind Träger

mit einer spezifischen Oberfläche im Bereich von 50 bis 500 μm, einem Porenvolumen im Bereich zwischen 0,5 und 3,5 ml/g und einer mittleren Partikelgröße im Bereich von 5 bis 350 μm. Besonders bevorzugt sind Träger mit einer spezifischen Oberfläche im Bereich von 200 bis 400 $m^2/g$, einem Porenvolumen im Bereich zwischen 0,8 bis 3,0 ml/g und einer mittleren Partikelgröße von 10 bis 200 μm.

Wenn das verwendete Trägermaterial von Natur aus einen geringen Feuchtigkeitsgehalt oder Restlösemittelgehalt aufweist, kann eine Dehydratisierung oder Trocknung vor der Verwendung unterbleiben. Ist dies nicht der Fall, wie bei dem Einsatz von Silicagel als Trägermaterial, ist eine Dehydratisierung oder Trocknung empfehlenswert. Die thermische Dehydratisierung oder Trocknung des Trägermaterials kann unter Vakuum und gleichzeitiger Inertgasüberlagerung (z.B. Stickstoff) erfolgen. Die Trocknungstemperatur liegt im Bereich zwischen 100 und 1000 °C, vorzugsweise zwischen 200 und 800 °C. Der Parameter Druck ist in diesem Fall nicht entscheidend. Die Dauer des Trocknungsprozesses kann zwischen 1 und 24 Stunden betragen. Kürzere oder längere Trocknungsdauern sind möglich, vorausgesetzt, daß unter den gewählten Bedingungen die Gleichgewichtseinstellung mit den Hydroxylgruppen auf der Trägeroberfläche erfolgen kann, was normalerweise zwischen 4 und 8 Stunden erfordert.

Eine Dehydratisierung oder Trocknung des Trägermaterials ist auch auf chemischem Wege möglich, indem das adsorbierte Wasser und die Hydroxylgruppen auf der Oberfläche mit geeigneten Inertisierungsmitteln zur Reaktion gebracht werden. Durch die Umsetzung mit dem Inertisierungsreagenz können die Hydroxylgruppen vollständig oder auch teilweise in eine Form überführt werden, die zu keiner negativen Wechselwirkung mit den katalytisch aktiven Zentren führen. Geeignete Inertisierungsmittel sind beispielsweise Siliciumhalogenide und Silane, wie Siliciumtetrachlorid, Chlortrimethylsilan, Dimethylaminotrichlorsilan oder metallorganische Verbindungen von Aluminium- , Bor und Magnesium wie beispielsweise Trimethylaluminium, Triethylaluminium, Triisobutylaluminium, Triethylboran, Dibutylmagnesium. Die chemische Dehydratisierung oder Inertisierung des Trägermaterials erfolgt beispielsweise dadurch, daß man unter Luft- und Feuchtigkeitsausschluß eine Suspension des Trägermaterials in einem geeigneten Lösemittel mit dem Inertisierungsreagenz in reiner Form oder gelöst in einem geeigneten Lösemittel zur Reaktion bringt. Geeignete Lösemittel sind z.B. aliphatische oder aromatische Kohlenwasserstoffe wie Pentan, Hexan, Heptan, Toluol oder Xylol. Die Inertisierung erfolgt bei Temperaturen zwischen 25°C und 120 °C, bevorzugt zwischen 50 und 70 °C. Höhere und niedrigere Temperaturen sind möglich. Die Dauer der Reaktion beträgt zwischen 30 Minuten und 20 Stunden, bevorzugt 1 bis 5 Stunden. Nach dem vollständigen Ablauf der chemischen Dehydratisierung wird das Trägermaterial durch Filtration unter Inertbedingungen isoliert, ein- oder mehrmals mit geeigneten inerten Lösemitteln wie sie bereits zuvor beschrieben worden sind gewaschen und anschließend im Inertgasstrom oder am Vakuum getrocknet.

Organische Trägermaterialien wie feinteilige Polyolefinpulver (z.B. Polyethylen, Polypropylen oder Polystyrol) können auch verwendet werden und sollten ebenfalls vor dem Einsatz von anhaftender Feuchtigkeit, Lösemittelresten oder anderen Verunreinigungen durch entsprechende Reinigungs- und Trocknungsoperationen befreit werden.

Zur Darstellung des geträgerten Katalysatorsystems wird mindestens eine der oben beschriebenen Metallocen-Komponenten in einem geeigneten Lösemittel mit mindestens einer Cokatalysatorkomponente in Kontakt gebracht, wobei bevorzugt ein lösliches Reaktionsprodukt , ein Addukt oder ein Gemisch erhalten wird.

Die so erhaltene Zubereitung wird dann mit dem dehydratisierten oder inertisierten Trägermaterial vermischt, das Lösemittel entfernt und das resultierende geträgerte Metallocen-Katalysatorsystem getrocknet, um sicherzustellen, daß das Lösemittel vollständig oder zum größten Teil aus den Poren des Trägermaterials entfernt wird. Der geträgerte Katalysator wird als frei fließendes Pulver erhalten.

Ein Verfahren zur Darstellung eines frei fließenden und gegebenenfalls vorpolymerisierten geträgerten Katalysatorsystems umfaßt die folgenden Schritte:

a) Herstellung einer Metallocen/Cokatalysator-Mischung in einem geeigneten Löse- oder Suspensionsmittel, wobei die Metallocen-Komponente eine der zuvor beschriebenen Strukturen besitzt.

b) Aufbringen der Metallocen/Cokatalysatormischung auf einen porösen, bevorzugt anorganischen dehydratisierten Träger

c) Entfernen des Hauptanteils an Lösemittel von der resultierenden Mischung

d) Isolierung des geträgerten Katalysatorsystems

e) Gegebenenfalls eine vorpolymerisation des erhaltenen geträgerten Katalysatorsystems mit einem oder mehreren olefinischen Monomer(en), um ein vorpolymerisiertes geträgertes Katalysatorsystem zu erhalten.

Bevorzugte Lösemittel für die Herstellung der Metallocen/Cokatalysator-Mischung sind Kohlenwasserstoffe und Kohlenwasserstoffgemische, die bei der gewählten Reaktionstemperatur flüssig sind und in denen sich die Einzelkomponenten bevorzugt lösen. Die Löslichkeit der Einzelkomponenten ist aber keine Voraussetzung, wenn sichergestellt

ist, daß das Reaktionsprodukt aus Metallocen- und Cokatalysatorkomponenten in dem gewählten Lösemittel löslich ist. Beispiele für geeignete Lösemittel umfassen Alkane wie Pentan, Isopentan, Hexan, Heptan, Octan, und Nonan; Cycloalkane wie Cyclopentan und Cyclohexan; und Aromaten wie Benzol, Toluol. Ethylbenzol und Diethylbenzol. Ganz besonders bevorzugt ist Toluol.

Die bei der Präparation des geträgerten Katalysatorsystems eingesetzten Mengen an Aluminoxan und Metallocen können über einen weiten Bereich variiert werden. Bevorzugt wird ein molares Verhältnis von Aluminium zum Übergangsmetall im Metallocen von 10 : 1 bis 1000 : 1 eingestellt, ganz besonders bevorzugt ein Verhältnis von 50 : 1 bis 500 : 1.

Im Fall von Methylaluminoxan werden bevorzugt 30 % ige toluolische Lösungen eingesetzt; die Verwendung von 10 %igen Lösungen ist aber auch möglich.

Zur Voraktivierung wird das Metallocen in Form eines Feststoffes in einer Lösung des Aluminoxans in einem geeigneten Lösemittel aufgelöst. Es ist auch möglich, das Metallocen getrennt in einem geeigneten Lösemittel aufzulösen und diese Lösung anschließend mit der Aluminoxan-Lösung zu vereinigen. Bevorzugt wird Toluol verwendet.

Die Voraktivierungszeit beträgt 1 Minute bis 200 Stunden.

Die Voraktivierung kann bei Raumtemperatur (25 °C) stattfinden.

Die Anwendung höherer Temperaturen kann im Einzelfall die erforderliche Dauer der Voraktivierung verkürzen und eine zusätzliche Aktivitätssteigerung bewirken. Höhere Temperatur bedeutet in diesem Fall ein Bereich zwischen 50 und 100 °C.

Die voraktivierte Lösung bzw. das Metallocen/Cokatalysator-Gemisch wird anschließend mit einem inerten Trägermaterial, üblicherweise Kieselgel, das in Form eines trockenen Pulvers oder als Suspension in einem der oben genannten Lösemittel vorliegt, vereinigt. Bevorzugt wird das Trägermaterial als Pulver eingesetzt. Die Reihenfolge der Zugabe ist dabei beliebig. Die voraktivierte Metallocen-Cokatalysator-Lösung bzw. das Metallocen-Cokatalysatorgemisch kann zum vorgelegten Trägermaterial dosiert, oder aber das Trägermaterial in die vorgelegte Lösung eingetragen werden.

Das Volumen der voraktivierten Lösung bzw. des Metallocen-Cokatalysatorgemisches kann 100 % des Gesamtporenvolumens des eingesetzten Trägermaterials überschreiten oder aber bis zu 100 % des Gesamtporenvolumens betragen.

Die Temperatur, bei der die voraktivierte Lösung bzw. das Metallocen-Cokatalysatorgemisch mit dem Trägermaterial in Kontakt gebracht wird, kann im Bereich zwischen 0 und 100 °C variieren. Niedrigere oder höhere Temperaturen sind aber auch möglich.

Anschließend wird das Lösemittel vollständig oder zum größten Teil vom geträgerten Katalysatorsystem entfernt, wobei die Mischung gerührt und gegebenenfalls auch erhitzt werden kann. Bevorzugt wird sowohl der sichtbare Anteil des Lösemittels als auch der Anteil in den Poren des Trägermaterials entfernt. Das Entfernen des Lösemittels kann in konventioneller Art und Weise unter Anwendung von Vakuum und/oder Spülen mit Inertgas erfolgen. Beim Trocknungsvorgang kann die Mischung erwärmt werden, bis das freie Lösemittel entfernt worden ist, was üblicherweise 1 bis 3 Stunden bei einer vorzugsweise gewählten Temperatur zwischen 30 und 60 °C erfordert. Das freie Lösemittel ist der sichtbare Anteil an Lösemittel in der Mischung. Unter Restlösemittel versteht man den Anteil, der in den Poren eingeschlossen ist.

Alternativ zu einer vollständigen Entfernung des Lösemittels kann das geträgerte Katalysatorsystem auch nur bis zu einem gewissen Restlösemittelgehalt getrocknet werden, wobei das freie Lösemittel vollständig entfernt worden ist. Anschließend kann das getragerte Katalysatorsystem mit einem niedrig siedenden Kohlenwasserstoff wie Pentan oder Hexan gewaschen und erneut getrocknet werden.

Das erfindungsgemäß dargestellte geträgerte Katalysatorsystem kann entweder direkt zur Polymerisation von Olefinen eingesetzt oder vor seiner Verwendung in einem Polymerisationsprozeß mit einem oder mehreren olefinischen Monomeren vorpolymerisiert werden. Die Ausführung der Vorpolymerisation von geträgerten Katalysatorsystemen ist beispielsweise in WO 94/28034 beschrieben.

Als Additiv kann während oder nach der Herstellung des geträgerten Katalysatorsystems eine geringe Menge eines Olefins bevorzugt eines $\alpha$-Olefins (beispielsweise Vinylcyclohexan, Styrol oder Phenyldimethylvinylsilan) als modifizierende Komponente oder ein Antistatikum (wie in US Serial No. 08/365280 beschrieben) zugesetzt werden. Das molare Verhältnis von Additiv zu Metallocenkomponente Verbindung I beträgt dabei bevorzugt zwischen 1 : 1000 bis 1000 : 1, ganz besonders bevorzugt 1 : 20 bis 20 : 1.

Die vorliegende Erfindung betrifft auch ein Verfahren zur Herstellung eines Polyolefins durch Polymerisation einer oder mehrerer Olefine in Gegenwart des erfindungsgemäßen Katalysatorsystems, enthaltend mindestens eine Übergangsmetallkomponente der Formel I. Unter dem Begriff Polymerisaton wird eine Homopolymerisation wie auch eine Copolymerisation verstanden.

Bevorzugt werden Olefine der Formel $R_m$-CH=CH-$R_n$ polymerisiert, worin $R_m$ und $R_n$ gleich oder verschieden sind und ein Wasserstoffatom oder einen kohlenstoffhaltigen Rest mit 1 bis 20 C-Atomen, insbesondere 1 bis 10 C-Atome, bedeuten, und $R_m$ und $R_n$ zusammen mit den sie verbindenden Atomen einen oder mehrere Ringe bilden können.

Beispiele für solche Olefine sind 1-Olefine mit 2 - 20, vorzugsweise 2 bis 10 C-Atomen, wie Ethen, Propen, 1-Buten, 1-Penten, 1-Hexen, 4-Methyl-1-penten oder 1-Octen, Styrol, Diene wie 1,3-Butadien, 1,4-Hexadien, Vinylnorbornen Norbornadien, Ethylnorbornadien und cyclische Olefine wie Norbornen, Tetracyclododecen oder Methylnorbornen. Bevorzugt werden in dem erfindungsgemäßen Verfahren Propen oder Ethen homopolymerisiert, oder Propen mit Ethen und/oder mit einem oder mehreren 1-Olefinen mit 4 bis 20 C-Atomen, wie Buten Hexen oder Vinylcyclohexan, und/oder einem oder mehreren Dienen mit 4 bis 20 C-Atomen, wie 1,4-Butadien, Norbornadien, Ethylidennorbonen oder Ethylnorbornadien, copolymerisiert. Beispiele solcher Copolymere sind Ethen/Propen-Copolymere oder Ethen/Propen/1,4-Hexadien-Terpolymere.

Die Polymerisation wird bei einer Temperatur von 0 bis 300 °C , bevorzugt 50 bis 200 °C, ganz besonders bevorzugt 50 - 80 °C durchgeführt. Der Druck beträgt 0,5 bis 2000 bar, bevorzugt 5 bis 64 bar.

Die Polymerisation kann in Lösung, in Masse, in Suspension oder in der Gasphase, kontinuierlich oder diskontinuierlich, ein- oder mehrstufig durchgeführt werden.

Das erfindungsgemäß dargestellte Katalysatorsystem kann als einzige Katalysatorkomponente für die Polymerisation von Olefinen mit 2 bis 20 C-Atomen eingesetzt werden, oder bevorzugt in Kombination mit mindestens einer Alkylverbindung der Elemente aus der I. bis III. Hauptgruppe des Periodensystems, wie z.B. einem Aluminium-, Magnesium- oder Lithiumalkyl oder einem Aluminoxan eingesetzt werden. Die Alkylverbindung wird dem Monomeren oder Suspensionsmittel zugesetzt und dient zur Reinigung des Monomeren von Substanzen, die die Katalysatoraktivität beeinträchtigen können. Die Menge der zugesetzten Alkylverbindung hängt von der Qualität der eingesetzten Monomere ab.

Als Molmassenregler und/oder zur Steigerung der Aktivität wird, falls erforderlich, Wasserstoff zugegeben.

Das Katalysatorsystem kann dem Polymerisationssystem pur zugeführt werden oder zur besseren Dosierbarkeit mit inerten Komponenten wie Paraffinen, Ölen oder Wachsen versetzt werden. Bei der Polymerisation kann außerdem ein Antistatikum zusammen mit oder getrennt von dem eingesetzten Katalysatorsystem in das Polymerisationssystem eindosiert werden.

Die mit dem erfindungsgemäßen Katalysatorsystem dargestellten Polymere (im folgenden auch erfindungsgemäße (Co) Polymere) zeigen eine gleichmäßige Kornmorphologie und weisen keine Feinkornanteile auf. Bei der Polymerisation mit dem erfindungsgemäßen Katalysatorsystem treten keine Beläge oder verbackungen auf.

Die erfindungsgemäßen (Co)Polymere sind sowohl Homo- als auch Random-Copolymere des Propylens. Ihre Molmasse $M_w$ (gemessen mit der Gelpermeationschromatographie) liegt im Bereich von 100.000 bis 1.000.000 g/mol und ihr $M_w/M_n$ (gemessen mit der Gelpermeationschromatographie) liegt im Bereich von 1.8 bis 4.0, vorzugsweise 1.8 bis 3.5. Random-Copolymere des Propylens enthalten in untergeordneten Mengen mit Propylen copolymerisierbare Monomere, beispielsweise $C_2$-$C_8$-Alk- 1-ene wie u.a. Ethylen, But-1-en, Pent-1-en, Hex-1-en oder 4-Methyl-1-penten. Es können auch zwei oder mehr verschiedene Comonomere verwendet werden; man erhält dann z.B. Random-Terpolymere.

Besonders geeignet sind u.a. Homopolymere des Propylens oder Copolymere des Propylens mit bis zu 50 Gew.-% einpolymerisierter anderer Alk-1-ene mit bis zu 8 C-Atomen. Die Copolymere des Propylens sind hierbei statistische Copolymere oder Block- oder Impactcopolymere. Sofern die Copolymere des Propylens statistisch aufgebaut sind, enthalten sie im allgemeinen bis zu 50 Gew.-%,vorzugsweise bis zu 15 Gew.-%, besonders bevorzugt bis zu 1 Gew.-%, andere Alk-1-ene mit bis zu 8 C-Atomen, insbesondere Ethylen, But-1-en- 4-Methyl-1-penten oder ein Gemisch aus Ethylen und But-1-en, Ethylen und 1-Hexen oder Ethylen und 4-Methyl-1-penten.

Die erfindungsgemäßen Copolymere sind weiterhin Block- oder Impactcopolymere des Propylens, bei denen man in der ersten Stufe ein, z.B. erfindungsgemäßes, Propylenhomopolymer oder ein erfindungsgemäßes Random-Copolymer des Propylens mit 0,001 bis 15 Gew.-%, bevorzugt 0,01 bis 6 Gew.-%, anderer Alk-1-ene mit bis zu 8 C-Atomen (z.B. Ethylen, 1-Buten, 1-Hexen, 1-Octen, 4-Methyl-1-penten) herstellt und dann in der zweiten Stufe ein Propylen-Ethylen-Copolymer mit Ethylengehalten von 15 bis 80 Gew.-%, wobei das Propylen-Ethylen-Copolymer zusätzlich noch weitere $C_4$-$C_8$-Alk-1-ene (z.B. Ethylen, 1-Buten, 1-Hexen, 1-Octen, 4-Methyl-1-penten) enthalten kann, hinzupolymerisiert. In der Regel wird soviel des Propylen-Ethylen-Copolymers (enthaltend gegebenenfalls als weitere Monomere Ethylen, 1-Buten, 1-Hexen, 1-Octen, 4-Methyl-1-penten) hinzupolymerisiert, daß das in der zweiten Stufe erzeugte Copolymer im Endprodukt einen Anteil von 3 bis 60 Gew-% aufweist.

Erfindungsgemäße Propylenhomo- und -copolymere sind gekennzeichnet durch einen Gehalt meso-konfigurierter Dyaden (gemessen mit 13C-NMR-Spektroskopie, siehe Beispiele) von mindestens 90 %, bevorzugt von mindestens 95 % und besonders bevorzugt von mindestens 98 %.

Erfindungsgemäße Random-Copolymere zeichnen sich durch einen Mindestgehalt an 2,1-Insertionen (gemessen mit 13C-NMR-Spektroskopie, siehe Beispiele) von Propenmonomeren ((intra-chain-)Regiofehler) aus. Die erfindungsgemäßen Random-Copolymere haben mindestens vier, bevorzugt mindestens sechs und besonders bevorzugt mindestens 7,5 (intra-chain-)Regiofehler pro Polymerkette. Diese Eigenschaft der erfindungsgemäßen Copolymere wird derzeit durch folgende mechanistische Theorie, deren Richtigkeit aber nicht als einschränkend für den Gegenstand der Erfindung gemeint ist, erklärt: Nicht-erfindungsgemäße Random-Copolymere werden mit single-site-Katalysatoren (z.B.

Metallocenkatalysatoren) erzeugt die der wachsenden Polymerkette nach einem Regiofehler einen Ket - tenabbruch auf ein koordiniertes Ethylen gestatten. Dieser Reaktionsweg führt zu einer Z-2-Butenylendgruppe (die vom im Reaktor gegebenenfalls vorhandenen Wasserstoff zu einer n-Butylgruppe reduziert werden kann) und zu einem niedrigen Gehalt von (intrachain-)Regiofehlern. Mittelbar führt dieser Mechanismus im Allgemeinen zu sinkenden Molmassen bei steigendem Ethyleneinbau. Bei den erfindungsgemäßen Copolymeren unterdrückt das erfindungsgemäße Katalysatorsystem den geschilderten Kettenabbruchsmechanismus, an Regiofehler schließt sich eine Kettenfortsetzung an. Mittelbar führt dies zu Copolymeren, deren Molmasse mit steigendem Ethyleneinbau wächst.

Randöm-Copolymere, die mit single-site-Katalysatoren (z.B. Metallocenkatalysatoren) erzeugt werden, zeichnen sich beispielsweise gegenüber Ziegler-Natta-katalysierten Copolymeren mit vergleichbarem Comonomereneinbau durch eine Reihe von Eigenschaften aus.

- So weisen single-site-katalysierte Copolymere eine gleichmäßige Comonomer-Verteilung über ihr Molmassenspektrum auf. Eine solche Verteilung kann z.B. über eine gekoppelte GPC-IR-Messung bestimmt werden.

- In single-site katalysierten Copolymeren sind die Comonomeren statistisch verteilt, während Ziegler-Natta-katalysierte Copolymere das Comonomer schon bei niedrigen Einbauraten eher blockweise einbauen. Sie schwankt nur wenig, sofern die Fraktionen hinreichend großen Anteil (mindestens 10 %) am Gesamtpolymer haben. Bei erfindungsgemäßen Copolymeren schwankt der Einbau um maximal 10 %, bevorzugt um maximal 5 %, besonders bevorzugt um maximal 1,5 % zwischen den Fraktionen mit hinreichend großen Anteil.

- Single-site-katalysierte Copolymere zeichnen sich durch eine enge Molmassenverteilung ex Reaktor (im Allgemeinen $M_w/M_n$ <= 3,5) aus. Ziegler-Natta-katalysierte haben ex Reaktor breitere Molmassenverteilungen.

- Ferner zeichnen sich single-site-katalysierte Copolymere durch einen niedrigen Anteil löslicher Anteile aus. Bei einem. Einbau von 10 mol% Ethylen liegt der etherlösliche Anteil unter 2 Gew.%.

Eine Kombination aus obengenannten Merkmalen führt außerdem dazu, dass die erfindungsgemäßen Polymere (Homo und Copolymere) bei einer TREF (Meßmethode siehe Beispiele) innerhalb eines engen Temperaturbereichs eluiert werden. Bei den erfindungsgemäßen Homo- und Random-Copolymeren werden 80 bis 100 Gew.-% innerhalb eines Temperaturintervalls eluiert, dass sich von 15 °C unterhalb bis 15 °C oberhalb der Temperatur mit der maximalen Elution ("Peaktemperatur") erstreckt. Bevorzugt erstreckt sich der Bereich von 15°C unterhalb bis 10 °C oberhalb der Peaktemperatur und besonders bevorzugt von 10°C unterhalb bis 10 °C oberhalb der Peaktemperatur.

Die nach dem erfindungsgemäßen Verfahren hergestellten Polymere sind zur Herstellung reißfester, harter und steifer Formkörper wie Fasern, Filamente, Spritzgußteile, Folien, Platten oder Großhohlkörpern (z.B. Rohre) geeignet. Die Formteile zeichnen sich insbesondere durch eine hohe Zähigkeit, auch bei Temperaturen unter 20°C, in Verbindung mit hoher Steifigkeit aus.

Formkörper (z.B. Spritzgußartikel) aus den erfindungsgemäßen Blockpolymeren werden im allgemeinen mit den üblichen, dem Fachmann bekannten, Spritzgießverfahren hergestellt und weisen eine neuartige Eigenschaftskombination von Steifigkeit, Zähigkeit und Transparenz auf und haben zudem geringen Weißbruch.

Der E-Modul, als Maß für die Steifigkeit der erfindungsgemäßen Copolymeren, gemessen im Zugversuch nach ISO 527, liegt im allgemeinen im Bereich von 500 bis 6000, vorzugsweise im Bereich von 800 bis 2000 ganz besonders bevorzugt in Bereich von 900 bis 1400 MPa.

Die Charpy-Schlagzähigkeit, als Maß für die Zähigkeit der erfindungsgemäßen Copolymeren, gemessen nach ISO 179-2/1eU, liegt, bei 23 °C bei > 200 kJ/$m^2$ und bei - 20 °C bei > 20 kJ/$m^2$. Bevorzugt wird bei 23 °C kein Bruch des Prüfkörpers registriert.

Der Haze, als Komplementärwert für Transparenz (%Transparenz - %Haze = 100 %), bestimmt nach ASTM D 1003, beträgt für die erfindungsgemäßen Copolymeren vorzugsweise weniger als 40 %, besonders bevorzugt weniger als 30 %.

Die erfindungsgemäßen Spritzgieß-Artikel können noch die üblichen Thermoplast-Additive in den üblichen Mengen enthalten. Als Additive kommen in Frage Antistatika, Gleitmittel, wie Fettsäureamide, beispielsweise Erucasäureamid, Stabilisatoren, Brandschutzmittel, Neutralisationsmittel, wie Calciumstearat, Pigmente, Farbstoffe wie Pigmentfarbstoffe oder Flüssigfarben, Ruß, und außerdem anorganische Füllstoffe wie Talkum, Kreide, Aluminiumoxid, Aluminiumsulfat, Bariumsulfat, Calciummagnesiumcarbonat, Siliciumdioxid, Titandioxid, Glasfasern sowie organische Füllstoffe wie Polyester, Polystyrol, Polyamid und halogenierte organische Polymere.

Bevorzugte Additive sind außerdem Nukleierungsmittel, wie Talkum, Alkali-, Erdalkali- oder Aluminium-Salze von Alkyl-, Aryl-, Arylalkyl- oder Alkylaryl-Carbonsäuren, bestimmte Polymere, wie Polyvinylcyclohexan oder Polycyclopenten, sowie Polyhydroxyverbindungen, wie Sorbitolderivate. Bevorzugt sind Talkum, Aluminium-, Alkali- und Erdalkali-Salze cyclischer Arylalkylcarbonsäuren, sowie Sorbitolderivate. Besonders bevorzugt sind Sorbitolderivate.

Die erfindungsgemäßen Homo- und Copolymere sind zur Herstellung reißfester, harter und steifer Formkörper, Fasern, Filamenten, Spritzgußteilen, Folien, Platten oder Großhohlkörpern (z.B. Rohren) geeignet.

Die erfindungsgemäßen Blockcopolymere sind gut geeignet zur Herstellung von Formkörpern mittels Spritzgieß- und Extrusionsverfahren. Insbesondere zur Herstellung von Spritzgießartikeln für diverse Verwendungen, wie exemplarisch im Folgenden beschrieben.

Die erfindungsgemäßen Blockcopolymere sind geeignet für Verwendungen (Anwendungen)

im Audio/Video/Computer-Bereich wie SACD/DVD/CD/Minidisc/CD-ROM Verpackungen, Cassettenhüllen, Boxen für Disketten und Bänder, Chip-Karten, Chip-Karten-Schutzhüllen;

im Medizinbereich wie Petrischalen, Küvetten, Blutanalyseröhrchen, Pipetten, Einmalpipettenspitzen, Arzneimittelverpackungen, insbesondere Dosen, Tuben, Röhrchen, Blister oder Deckel, Spritzenzylinder und Spritzenstempel;

für Molkerei- und Lebensmittel-Verpackungen, insbesondere auch für Kühl- und Tiefkühl-Anwendungsbereiche, wie Joghurtbecher, Desserbecher, Milch- und Milchprodukte-Verpackungen wie Käseverpackungen, Feinkostbecher, Portionsbehälter, Menüschalen, Tuben, Flaschen, wie Ketchupflaschen, Flaschenverschlüsse, Kühl- und Tiefkühlbehälter, wie Eiscremebehälter;

im Haushaltsartikelbereich, insbesondere auch für Kühl- und Tiefkühl-Anwendungsbereich, wie Trinkbecher, Geschirr, Schüsseln, Behälter für Lebensmittel, isbesondere für den Kühl- und Tiefkkühlbereich, wie Käsedosen oder Wurstdosen, Mikrowellenanwendungen, Catering, spritzgeblasene Behälter, Flaschen, Tuben, Abfallbehälter, Filtergehäuse,

Kleiderbügel, Isolierkannen, Babyflaschen, Deckel für Babyflaschen, Schnullerteile, Kartuschen, Klipse;

im Büroartikelbereich, wie Ablagekästen, Sortierkästen, Magazinkästen, Papierkörbe, Stehsammler, Ordner, Ordnerrücken, Zeichenutensilien, Kartuschen, Tintenpatronen, Bürogeräte wie Locher oder Hefter, Schreibgeräte wie Schreiberhülsen oder Textmarker;

im Kosmetikverpackungsbereich, wie Creme- und Zahnpastenbehälter, beispielsweise Tuben oder Dosierspender, Salbenbehälter, Kappen, Flaschen, Tuben, Hülsen, Dosen, Boxen wie Feuchttuchboxen, Deoroller (Kugel und Gehäuse), Verschlüsse, Kappen, Deckel allgemeiner Art;

im Waschmittelverpackungsbereich, für Waschmittel-Verkaufsverpackungen wie Containerboxen, Flaschen oder Tuben, Dosierbehälter, Dosierkugeln;

im Sanitärbereich, wie Zahnbürstenköcher, Becher, Bürstenkörper, Naßrasiererkörper, Ablagen im Badezimmer, Badezimmermöbel, Spiegelschränke, Toilettensitze und Toilettendeckel, Seifenspender;

im Elektrogerätebereich, wie Kaffeemaschinengehäuse, Sichtfenster für Kaffeemaschinen oder wasserkocher, Eierkocherabdeckungen, Kühlschrank- und Gefriergeräte-Innenteile wie Verkleidungen, Gemüsefächer oder Lagerkörbe, Personenwaagen, Bügeleisen, Lampenabdeckungen, Elektrogerätegehäuse z. B. Computer- und Monitor-Gehäuse, Werkzeuggehäuse;

im Lager- und Transportbehälterbereich, wie Schraubenbehälter, Werkzeugbehälter, Blister-Verpackungen, Kisten, Körbe, Flaschen, Tuben, Kartuschen, Köcher, Paletten, Sichtfenster, Transportbehälter, Schmuck- und Geschenkverpackungen, wandhalter;

im Spielzeugbereich, wie Spielzeuge oder Spielzeugteile sowie deren Verpackung, beispielsweise Spielkartenverpackungen, Spielzeug-Aufbewahrungsbehälter;

im Laborbedarfsbereich, wie Meßbecher, Meßzylinder, Laborflaschen, für beispielsweise aggressive Substanzen, Eimer, Köcher;

im Kraftfahrzeugbereich, wie Abdeckungen für Innenbeleuchtungen, Glasersatz, Polycarbonat- oder Polystyrol-Ersatz, schlagzähe Innenverkleidungen und Außenverkleidungen;

im Möbelbereich, vorzugsweise für Möbel im Außenbereich, wie transparente, eingefärbte oder nicht eingefärbte Gartenmöbel;

im Gartenbedarf, wie Blumenkästen, Blumentöpfe, Gießkannen, wasserbehälter, Komposter, Eimer, Beregnungssysteme, Teile von Gartengeräten.

Die Erfindung wird durch folgende, die Erfindung jedoch nicht einschränkenden Beispiele erläutert.

I Synthese der Metallocene

Allgemeine Angaben: Die Herstellung und Handhabung der organometallischen Verbindungen erfolgte unter Ausschluß von Luft und Feuchtigkeit unter Argon-Schutzgas (Schlenk-Technik bzw. Glove-Box). Alle benötigten Lösemittel wurden vor Gebrauch mit Argon gespült und über Molsieb absolutiert.

Die Darstellung von Heteropentalensystemen erfolgt nach einer Vorschrift von Ewen et al., Metalorganic Catalysts for Synthesis and Polymerisation, 1999, Springer-Verlag, 150-169.

Beispiel 1: Darstellung von 2-Chlorisopentyrophenon

29.2 g (mmol) Magnesiumspäne werden mit 80 ml THF vorgelegt. Dazu werden nach Starten mit 1/60 (2 ml) der Gesamtmenge des 1-Isobutylbromids die Restmenge der 136 ml (mmol) Isobutylbromid verdünnt mit 300 ml THF unter Rückfluß innerhalb von 1 h zugetropft. Danach wird die dunkelbraune Lösung noch 1 h am Rückfluß erhitzt. Anschließend werden15 ml DME zugegeben. Die auf Raumtemperatur abgekühlte Grignardsuspension wird über eine Kanüle portionsweise zu einer Suspension von 305 mg (mmol) Kupfer [I) iodid und 137.6 g (mmol) 2-Chlorbenzonitril gelöst in 240 ml THFzugegeben. Gegen Ende der Grignardzugabe wird die Suspension 2 h am Rückfluß erhitzt. Zu der stark gerührten Suspension wird eine Lösung von 327 ml Wasser zugetropft. Anschließend werden 218 ml 37% Salzsäure in 20 Minuten zugegeben. Die Emulsion wird 1h bei 50 °C stark gerührt, danach wird die wäßrige Phase von der organischen Phase abgetrennt. Das Lösungsmittel wird vollständig entfernt und anschließend der Rückstand mit 50 ml Toluol versetzt. Das Toluol wird am Rotationsverdampfer entfernt, wobei das restliche Wasser azeotrop abdestilliert wird. Das Rohprodukt wird ohne weiter Reinigung für die nächste Stufe eingesetzt. Man isoliert 205.5 g Rohprodukt welches ohne weitere Reinigung für die nächste Stufe eingesetzt wird.

1H-NMR (400 MHz, $CDCl_3$) : 7.37-7.26 (m, 4H, arom- H), 2.81 (d, 2H, $CH_2$-H), 2.23 (m, 1H, CH-H), 0.97 (d, 6H, Isopropyl-$CH_3$).

Beispiel 2: Darstellung von 2-Isopropyl-7-chlor-1-indanon

134 g (mmol) 2-Chlorpentyrophenon werden bei Raumtemperatur zusammen mit 200.6 g (mmol) Urotropin vorgelegt und mit 173.6 g (mmol) Acetanhydrid tropfenweise versetzt. Die resultierende Mischung wird 4.5 Stunden bei 80°C gerührt. Nach beendeter Reaktion werden bei 80°C 142.3 ml Wasser und anschließend 360 g 20%ige NaOH zugegeben und die zähe Reaktionsmasse in Lösung gebracht. Nach Abkühlen auf Raumtemperatur wird zweimal mit insgesamt 400 ml Dichlormethan extrahiert und die vereinigten organischen Phasen zweimal mit insgesamt 200 ml 10%iger Salzsäure gewaschen und über 140 g Natriumsulfat getrocknet. Die Lösung organische Dichlormethanphase wird innnerhalb von 2.5 Stunden zu 273 ml konzentrierter, 70°C warmer Schwefelsäure getropft, wobei die Zutropfrate so gewählt wird, daß die Temperatur der Schwefelsäure-Lösung während der Reaktion durch Abdestillieren von Dichlormethan 70°C nicht unterschreitet. Anschließend läßt man die Schwefelsäure-Lösung auf Raumtemperatur abkühlen und gibt die abgekühlte Lösung unter kräftigem Rühren zu 1000 ml Eiswasser Danach wird die Schwefelsäure-Lösung dreimal mit insgesamt 700 ml Dichlormethan extrahiert, und die vereinigten organischen Phasen werden mit 250 ml gesättigter Natriumhydrogencarbonat-Lösung und über 140 g Natriumsulfat getrocknet. Das Lösungsmittel wird am Rotationsverdampfer entfernt. Das entstandene Rohprodukt wird im Ölpumpenvakuum über eine vigreux-Kolonne mit Kolonnenkopf destilliert. Man erhält 67.34 g (47%) 2-Isopropyl-7-chlor-1-indanon als gelbe Flüssigkeit.

1H-NMR (400 MHz, $CDCl_3$): 7.39-7.28 (m, 3H, arom- H), 3.14 (dd, 1H, $CH_2$-H), 2.91 (dd, 1H, $CH_2$-H) 2.70 (m, 1H, CH-H), 2.42 (m, 1H, Isopropyl-CH), 1.08, 0.84 (je d, je 3H, Isopropyl-$CH_3$).

Beispiel 3: Darstellung von 2-Isopropyl-7-(4'-tert.-butyl-phenyl)-1-indanon

28.0 g (mmol) 2-Isopropyl-7-chlor-1-indanon, 28.64 g (mmol) 4-tert.-Butylphenyl-boronsäure, 35.56 g (mmol) Natriumcarbonat, 302 ml (mmol) Ethylenglykol und 21.6 ml Wasser werden vorgelegt. Die Mischung wird mehrfach durch vorsichtiges Anlegen eines Ölpumpenvakuums und anschließendes Belüften mit Argon entgast und mit Argon gesättigt. Es wird auf 80 °C erhitzt und anschließend unter kräftigem Rühren eine frisch bereitete Katalysatorlösung aus 60.23 mg (mmol) Palladiumacetat, 1.79 ml (mmol) einer wäßrigen TPPTS-Lösung (0.6 molar) in 25 ml Wasser hinzugegeben und das Reaktionsgemisch 5 h unter Rückfluß und weiterem Rühren bis zum vollständigen Umsatz erhitzt. Nach Abkühlen auf Raumtemperatur werden 300 ml Wasser hinzugegeben. Nach weiterem Abkühlen auf Raumtemperatur wird die Ethylenglykolphase noch 6-mäl mit insgesamt 900 ml Toluol extrahiert. Die vereinigten Toluolphasen werden zweimal mit insgesamt 250 ml Natriumchloridlösung gewaschen und mit 150 g Natriumsulfat getrocknet. Nach Entfernen des Lösungsmittels am Rotationsverdampfer und Trocknen des Rückstandes und anschließendem Destillieren im Ölpumpenvakuum werden 40 g (97%) 2-Isopropyl-7-(4'-tert.-butyl-phenyl)-1-indanon als orangebraunes, zähes Öl erhalten.
1H-NMR (400 MHz, $CDCl_3$): 7.39-7.24 (m, 7H, arom- H), 3.17 (dd, 1H, $CH_2$-H), 2.94 (dd, 1H, $CH_2$-H), 2.63 (m, 1H, CH-H), 2.38 (m, 1H, Isopropyl-CH), 1.31 (s, 9H, tert.butyl-H), 1.06, 0.78 (je d, je 3H, Isopropyl-$CH_3$).

Beispiel 4: Darstellung von 2-Isopropyl-4-(4'-tert.-butyl-phenyl)-inden

4.83 g (mmol) Natriumborhydrid und 39.1 g (mmol) 2-Isopropyl-7-(4'-tert. -butyl.phenyl)-1-indanon wereden in 118 ml Toluol vorgelegt. Bei 50°C werden 22.5 ml Methanol langsam hinzugegeben und die Reaktionsmischung 6 h bei 50°C gerührt. Nach Abkühlen auf Raumtemperatur gibt man 50 ml 2 n Schwefelsäure hinzu und rührt 30 Minuten

kräftig nach. Anschließend wird das Gemisch in einen Scheidetrichter überführt, die Phasen getrennt und die wäßrige Phase zweimal mit insgesamt 60 ml 2 n Schwefelsäure ausgeschüttelt. Die organischen Phasen werden vereinigt, und über Magnesiumsulfat getrocknet. Das Lösungsmittel des Reaktionsgemisches wird fast vollständig entfernt und anschließend zum Rückstand 200 ml Toluol sowie 0.4 g (mmol) p-Toluolsulfonsäure gegeben. Aus dem Reaktionsgemisch wird durch 1.5 stündiges Erhitzen am Wasserabscheider bis zum vollständigem Umsatz Wasser abdestilliert. Anschließend wird die Reaktionsmischung einmal mit 100 ml gesättigter Natriumhydrogencarbonat-Lösung gewaschen und über Magnesiumsulfat getrocknet. Nach Abtrennen des Magnesiumsulfats wird der Rückstand im Ölpumpenvakuum getrocknet. Man erhält 35.7 g 2-Isopropyl-4-(4'-tert.-butyl-phenyl)-inden (96% Gesamtausbeute). 1H-NMR (400 MHz, $CDCl_3$): 7.11-6.91 (m, 7H, arom- H), 6.48 (s, 1H, Olefin-H), 3.17 (s, 2H, $CH_2$-H), 2.55 (m, 1H, Isopropyl-CH), 1.15 (s, 9H, tert.butyl-H), 0.96 (d, 6H, Isopropyl-$CH_3$).

Das 2-Isopropyl-4 -phenyl-inden (2),2-Isopropyl-4 -(2-naphtyl)-inden (3), 2-Isopropyl-4-(1-naphtyl)-inden (4) wird analog, durch Kupplung mit den entsprechenden Boronsäuren wie in Beispiel 3 beschrieben, erhalten darfgestellt. Die NMR-Daten dieser verbindungen sind in der nachstehenden Tabelle notiert.

| | Aromaten-Bereich | Oelfin-H | Aliphatische-H | Isopropyl-CH | Isopropyl-$CH_3$ |
|---|---|---|---|---|---|
| 2 | 7.13-6.95 | 6.53 | 3.19 | 2.61 | 0.97 |
| 3 | 7.45-7.30 | 6.24 | 3.67 | 2.81 | 0.98 |
| 4 | 7.40-7.26 | 6.22 | 3.60 | 2.80 | 0.96 |

Beispiel 5: Darstellung von 2-Methyl-4- (4' tert.butyl-phenyl)1-dimethylchlorosilan-inden

20.0 g (76 mmol) 2-Methyl-4-(4'-tert.butyl-phenyl-inden-werden in 160 ml Toluol und 5 ml DME vorgelegt. Zu dieser Lösung werden 28.4 ml (76mmol) einer Buthyllithium-Lösung getropft, nach beendeter Zugabe wird 1 Stunde bei 80 °C nachgerührt. Die so entstandene Reaktionslösung wird langsam zu einer auf -40 °C vorgekühlten Lösung aus 27.7 ml (229 mmol) Dimethyldichlorosilan in 260 ml THF getropft. Man läßt auf Raumtemperatur erwärmen und rührt die Reaktionsmischung über Nacht. Anschließend wird das Lösungsmittel im Ölpumpenvakuum entfernt und der verbleibende Rückstand in 100ml Toluol aufgenommen. Das unlösliche Lithiumchlorid wird über einer G4-Fritte abgetrennt und das Lösungsmittel des Filtrats im Ölpumpenvakuum entfernt. Man isoliert 24.8 g (98 %) des gewünschten Produktes.

1H-NMR (400 MHz, $CDCl_3$): 7.3-7.0 (m, 7H, arom- H), 6.7 (s, 1H, Olefin-H-Inden), 3.5 (s, 1H, H-Inden), 2.1 (s, 3H, $CH_3$), 1.3 (s, 9H, tert.Butyl), 0.3, 0.05 (je s, je 3H, $CH_3$-Si).

Beispiel 6: Darstellung von 2-Ethyl-4- (4' tert.butyl-phenyl)1-dimethylchlorosilan-inden

20.0 g (72.4 mmol) 2-Ethyl-4-(4'-tert.butyl-phenyl-inden werden in 153 ml Toluol und 4.8 ml DME vorgelegt. Zu dieser Lösung werden 27.0 ml (72.4 mmol) einer Buthyllithium-Lösung getropft, nach beendeter Zugabe wird 1 Stunde bei 80 °C nachgerührt. Die so entstandene Reaktionslösung wird langsam zu einer auf -40 °C vorgekühlten Lösung aus 26.3 ml (217 mmol) Dimethyldichlorosilan in 248 ml THF getropft. Man läßt auf Raumtemperatur erwärmen und rührt die Reaktionsmischung über Nacht. Anschließend wird das Lösungsmittel im Ölpumpenvakuum entfernt und der verbleibende Rückstand in 100ml Toluol aufgenommen. Das unlösliche Lithiumchlorid wird über einer G4-Fritte abgetrennt und das Lösungsmittel des Filtrats im Ölpumpenvakuum entfernt. Man isoliert 25.5 g (95 %) des gewünschten Produktes. 1H-NMR (400 MHz, $CDCl_3$): 7.3-7.0 (m, 7H, arom- H), 6.7 (s, 1H, Olefin-H-Inden), 3.6 (s, 1H, H-Inden), 2.6, 2.4 (je m, 1H, $CH_2$), 1.3 (s, 9H, tert.Butyl), 1.1 (t, 3H, $CH_3$), (0.3, 0.0 (je s, je 3H, $CH_3$-Si).

Beispiel 7: Darstellung von 2-Methyl-(4-thiapentalen)1-dimethylchlorosilan

20.0 g (148 mmol) 2-Methyl-(2-hydrocyclopenta[2, 1-b]-thiophen) werden in 260 ml Toluol und 8 ml DME vorgelegt. Zu dieser Lösung werden 55.3 ml (148 mmol) einer Buthyllithium-Lösung getropft, nach beendeter Zugabe wird 1 Stunde bei 80°C nachgerührt. Die so entstandene Reaktionslösung wird langsam zu einer auf -40 °C vorgekühlten Lösung aus 53.9 ml (446 mmol) Dimethyldichlorosilan in 460 ml THF getropft. Man läßt auf Raumtemperatur erwärmen und rührt die Reaktionsmischung über Nacht. Anschließend wird das Lösungsmittel im Ölpumpenvakuum entfernt und der verbleibende Rückstand in 100ml Toluol aufgenommen. Das unlösliche Lithiumchlorid wird über einer G4-Fritte abgetrennt und das Lösungsmittel des Filtrats im Ölpumpenvakuum entfernt. Man isoliert 29.1 g (86 %) des gewünschten Produktes.

1H-NMR (400 MHz, $CD_2Cl_2$) : 7.3-6.8 (m, 2H), 6.7-6.4 (m, 1H), 4.0-3.4 (m, 2H), 2.6 (m, 3H, $CH_3$), 0.3, -0.05 (je s, je 3H,$CH_3$-Si).

Beispiel 8: Darstellung von 2-Methyl-4- (1-naphtyl)1-dimethylchlorosilan-inden

18.5 g (72 mmol) 2-Methyl-4-(1-naphtyl)-inden werden in 150 ml Toluol und 4.8 ml DME vorgelegt. Zu dieser Lösung werden 26.9 ml (72mmol) einer Buthyllithium-Lösung getropft, nach beendeter Zugabe wird 1 Stunde bei 80 °C nachgerührt. Die so entstandene Reaktionslösung wird langsam zu einer auf -40 °C vorgekühlten Lösung aus 26.2 ml (216 mmol) Dimethyldichlorosilan in 250 ml THF getropft. Man läßt auf Raumtemperatur erwärmen und rührt die Reaktionsmischung über Nacht. Anschließend wird das Lösungsmittel im Ölpumpenvakuum entfernt und der verbleibende Rückstand in 100ml Toluol aufgenommen. Das unlösliche Lithiumchlorid wird über einer G4-Fritte abgetrennt und das Lösungsmittel des Filtrats im Ölpumpenvakuum entfernt. Man isoliert 23.4 g (93 %) des gewünschten Produktes.

1H-NMR (400 MHz, $CDCl_3$) : 7.45-7.32 (m, 7H, arom- H), 6.26 (s, 1H, Olefin-H-Inden), 3.69 (s, 1H, H-Inden), 2.15 (s, 3H, $CH_3$), 0.46, 0.18 (je, s, je 3H, $CH_3$-Si).

Andere Indenyl-Dimetylchlorosilan- und Heteropentalen-Dimethylchlorosilan- systeme können analog zu den oben beschriebenen Beispielen synthetisiert werden.

Beispiel 9: Darstellung von Dimethylsilandiyl(2-methyl-4-(4'-tert.-butyl-phenyl)-1-inden)(2-isopropyl-4-(4'-tert.-butyl-phenyl)-1-inden)

16.8 g (57.7 mmol) 2-Isopropyl-7-(4'-tert.-butyl-phenyl)-1-inden werden in 131 ml Toluol und 5.0 ml THF vorgelegt und bei Raumtemperatur mit 21.5 ml Buthyllithiumlösung (2.68 M in Toluol) zügig versetzt. Nach beendeter Zugabe wird auf 80 °C erwärmt und 1 Stunde bei dieser Temperatur gerührt. Anschließend läßt man auf Raumtemperatur abkühlen und tropft diese Reaktionslösung zu einer Lösung aus 20.5 g (57.7 mmol) 2-Methyl-7-(4'-tert.-butyl-phenyl)-1-inden-dimethylchlorsilan in 246 ml Toluol innerhalb von 1 Stunde zu. Anschließend wird bei Raumtemperatur über Nacht gerührt. Es werden 60 ml Wasser hinzugegeben und die sich bildenden Phasen getrennt. Die organische Phase wird mit 100 ml Wasser gewaschen und die vereinigten wäßrigen Phasen zweimal mit insgesamt 100 ml Toluol extrahiert. Danach werden die vereinigten organischen Phasen über Magnesiumsulfat getrocknet. Nach Abtrennung des Magnesiumsulfats wird das Lösungsmittel entfernt und der Rückstand im Öpumpenvakuum getrocknet. Das gewünschte Dimethylsilandiyl(2-methyl-4-(4'-tert.-butyl-phenyl)-1-inden)(2-isopropyl-4-(4'-tert.-butyl-phenyl)-1-inden) wird in einer Ausbeute von 31.6 g (90%) isoliert (Reinheit 90%).

1H-NMR (400 MHz, $CDCl_3$): 7.5-7.1 (m, 14H, arom- H), 6.71, 6.62 (je s, je 1H, Olefin-H-Inden), 3.31, 3.35 (je s, je 2H, $CH_2$-H), 2.65 (m, 1H, CH-Isopropyl), 2.41 (s, 3H, $CH_3$-H), 1.35, 1.33 (je s, je 9H, tert.Butyl), 1.15 (d, 6H, Isopropyl-$CH_3$), 0.0, 0.2 (je d, je 3H, Si-$CH_3$).

Beispiel 10: Darstellung von Dimethylsilandiyl(2-ethyl-4-(4'-tert.-butyl-phenyl)-1-inden)(2-isopropyl-4-(4'-tert.-butyl-phenyl)-1-inden)

9.4 g (32.5 mmol) 2-Isopropyl-7-(4'-tert.-butyl-phenyl)-1-inden werden in 74 ml Toluol und 3 ml THF vorgelegt und bei Raumtemperatur mit 12.1 ml Buthyllithiumlösung (2.68 M in Toluol) zügig versetzt. Nach beendeter Zugabe wird auf 80 °C erwärmt und 1 Stunde bei dieser Temperatur gerührt. Anschließend läßt man auf Raumtemperatur abkühlen und tropft diese Reaktionslösung zu einer Lösung aus 12.0 g (32.5 mmol) 2-Ethyl-7-(4'-tert.-butyl-phenyl)-1-inden-dimethylchlorsilan in 138 ml Toluol innerhalb von 1 Stunde zu. Anschließend wird bei Raumtemperatur über Nacht gerührt. Es werden 50 ml Wasser hinzugegeben und die sich bildenden Phasen getrennt. Die organische Phase wird mit 100 ml Wasser gewaschen und die vereinigten wäßrigen Phasen zweimal mit insgesamt 100 ml Toluol extrahiert. Danach werden die vereinigten organischen Phasen über Magnesiumsulfat getrocknet. Nach Abtrennung des Magnesiumsulfats wird das Lösungsmittel entfernt und der Rückstand im Öpumpenvakuum getrocknet. Das gewünschte Dimethylsilandiyl (2-ethyl-4-(4'-tert.-butyl-phenyl)-1-inden)(2-isopropyl-4-(4'-tert.-butyl-phenyl)-1-inden) wird in einer Ausbeute von 19.3 g (95%) isoliert (Reinheit 90%).

1H-NMR (400 MHz, $CDCl_3$) : 7.48-7.12 (m, 14H, arom- H), 6.91, 6.72 (je s, je 1H, Olefin-H-Inden), 3.51, 3.47 (je s, je 2H, $CH_2$-H), 2.81 (m, 2H, $CH_2$-H), 2.65 (m, 1H, CH-Isopropyl), 1.41, 1.37 (je s, je 9H, tert.Butyl), 1.28 (d, 6H, Isopropyl-$CH_3$), 0.98 (t, 3H, $CH_3$-H), 0.1, 0.3 (je d, je 3H, Si-$CH_3$).

Beispiel 11: Darstellung von Dimethylsilandiyl(2-methyl-4-phenyl)-1-inden)(2-isopropyl-4-(4'-tert.-butyl-phenyl)-1-inden)

16.8 g (57.7 mmol) 2-Isopropyl-7-(4'-tert.-butyl-phenyl)-1-inden werden in 131.2 ml Toluol und 5 ml THF vorgelegt und bei Raumtemperatur mit 21.5 ml Buthyllithiumlösung (2.68 M in Toluol) zügig versetzt. Nach beendeter Zugabe wird auf 80 °C erwärmt und 1 Stunde bei dieser Temperatur gerührt. Anschließend läßt man auf Raumtemperatur abkühlen und tropft diese Reaktionslösung zu einer Lösung aus 17.2 g (57.7 mmol) 2-Methyl-4-phenyl-1-inden-dimethylchlorsilan in 150 ml Toluol innerhalb von 1 Stunde zu. Anschließend wird bei Raumtemperatur über Nacht gerührt. Es werden 50 ml Wasser hinzugegeben und die sich bildenden Phasen getrennt. Die organische Phase wird mit 100

ml Wasser gewaschen und die vereinigten wäßrigen Phasen zweimal mit insgesamt 100 ml Toluol extrahiert. Danach werden die vereinigten organischen Phasen über Magnesiumsulfat getrocknet. Nach Abtrennung des Magnesiumsulfats wird das Lösungsmittel entfernt und der Rückstand im Öpumpenvakuum getrocknet. Das gewünschte Dimethylsilandiyl (2-methyl-4-phenyl-1-inden)(2-isopropyl-4-(4'-tert.-butyl-phenyl)-1-inden) wird in einer Ausbeute von 24.9 g (80%) isoliert (Reinheit 80%). 1H-NMR (400 MHz, $CDCl_3$): 7.35-7.10 (m, 14H, arom- H), 6.89, 6.69 (je s, je 1H, Olefin-H-Inden), 3.45, 3.39 (je s, je 2H, $CH_2$-H), 2.55 (m, 1H, CH-Isopropyl), 2.39 (s, 3H, $CH_3$-H), 1.40 (s, 9H, tert.Butyl), 1.3 (d, 6H, Isopropyl-$CH_3$), 0.05, 0.25 (je d, je 3H, Si-$CH_3$).

Beispiel 12: Darstellung von Dimethylsilandiyl(2-Methyl-(thiapentalen)(2-Isopropyl-4-(4' tert.butyl-phenyl)-inden)

Es werden 8.4 g (28.9 mmol) 2-Isopropyl-4-(4' tert.butyl-phenyl)-inden in 80 ml Toluol und 3.0 ml THF vorgelegt und mit 10.7 ml (33.9 mmol) Buthyllithium-Lösung versetzt. Nach beendeter Zugabe wird die Reaktionslösung auf 80 °C erhitzt und 1 Stunde bei dieser Temperatur gerührt. Man läßt anschließend auf Raumtemperatur abkühlen und tropft diese Lösung innerhalb von 1 Stunde bei Raumtemperatur zu einer Lösung aus 6.6 g (28.9 mmol) 2-Methyl-(thiapentalen) 1-dimethylchlorosilan in 140 ml Toluol . Die entstandene Reaktionsmischung wird bei Raumtemperatur über Nacht gerührt. Danach wird die Reaktionslösung auf 100ml Wasser gegeben und die organische Phase abgetrennt. Die wäßrige Phase wird einmal mit 50 ml Toluol extrahiert und die vereinigten organischen Phasen über Magnesiumsulfat getrocknet. Das Lösungsmittel wird im Ölpumpenvakuum abgezogen und man isoliert 10.2 g (75 %) des gewünschten Liganden-Systems.
1H-NMR (400 MHz, $CDCl_3$) : 7.6-6.8 (m, 10H, arom-H), 6.5 (m, 1H), 6.6, 6.4 (je d, je 1H, H-Inden), 3.7-3.6 (dd, 2H), 3.3-3.0 (m, 2H), 2.55 (m, 1H, CH-Isopropyl), 2.4 (m, 3H, $CH_3$), 1.40 (s, 9H, tert.Butyl), 1.25 (d, 6H, Isopropyl-$CH_3$), -0.1, -0.3 (je d, je 3H,$CH_3$-Si).

Beispiel 13: Darstellung von Dimethylsilandiyl(2-isopropyl-4-(4' tert.butyl-phenyl)-inden) (2-methyl-4,5-benzo-inden)

17.0 g (58.4 mmol) 2-Isopropyl-7-(4'-tert.-butyl-phenyl)-1-inden werden in 135 ml Toluol und 5 ml THF vorgelegt und bei Raumtemperatur mit 21.8 ml Buthyllithiumlösung (2.68 M in Toluol) zügig versetzt. Nach beendeter Zugabe wird auf 80°C erwärmt und 1 Stunde bei dieser Temperatur gerührt. Anschließend läßt man auf Raumtemperatur abkühlen und tropft diese Reaktionslösung zu einer Lösung aus 15.9 g (58.4 mmol) 2-Methyl-4,5-benzo-inden-dimethylchlorsilan in 150 ml Toluol innerhalb von 1 Stunde zu. Anschließend wird bei Raumtemperatur über Nacht gerührt. Es werden 70 ml Wasser hinzugegeben und die sich bildenden Phasen getrennt. Die organische Phase wird mit 100 ml Wasser gewaschen und die vereinigten wäßrigen Phasen zweimal mit insgesamt 100 ml Toluol extrahiert. Danach werden die vereinigten organischen Phasen über Magnesiumsulfat getrocknet. Nach Abtrennung des Magnesiumsulfats wird das Lösungsmittel entfernt und der Rückstand im Öpumpenvakuum getrocknet. Das gewünschte Dimethylsilandiyl(2-isopropyl-4-(4' tert.butyl-phenyl)-inden) (2-methyl-4,5-benzo-inden) wird in einer Ausbeute von 24.5 g (80%) isoliert (Reinheit 80%).

1H-NMR (400 MHz, $CDCl_3$): 7.6-7.1 (m, 12H, arom- H), 6.7, 6.5 (je d, je 1H, H-Inden), 3.2, 3.05 (je s, je 2H, $CH_2$-H), 2.55 (m, 1H, CH-Isopropyl), 2.4 (s, 3H, $CH_3$), 1.4 (s, 9H, tert.Butyl), 1.2 (d, 6H, Isopropyl-$CH_3$), 0.1, -0.15 (je d, je 3H, Si-$CH_3$).

Beispiel 14: Darstellung von Dimethylsilandiyl(2-isopropyl-4-(1-naphtyl)-inden)(2-methyl-4- (4' tert.butyl-phenyl)-inden)

16.6 g (58.4 mmol) 2-Isopropyl-4-(1-naphtyl)-1-inden werden in 135 ml Toluol und 5 ml THF vorgelegt und bei Raumtemperatur mit 21.8 ml Buthyllithiumlösung (2.68 M in Toluol) zügig versetzt. Nach beendeter Zugabe wird auf 80 °C erwärmt und 1 Stunde bei dieser Temperatur gerührt. Anschließend läßt man auf Raumtemperatur abkühlen und tropft diese Reaktionslösung zu einer Lösung aus 20.7 g (58.4 mmol) 2-Methyl-7-(4'-tert.-butyl-phenyl)-1-inden-dimethylchlorsilan in 240 ml Toluol innerhalb von 1 Stunde zu. Anschließend wird bei Raumtemperatur über Nacht gerührt. Es werden 60 ml Wasser hinzugegeben und die sich bildenden Phasen getrennt. Die organische Phase wird mit 100 ml Wasser gewaschen und die vereinigten wäßrigen Phasen zweimal mit insgesamt 100 ml Toluol extrahiert. Danach werden die vereinigten organischen Phasen über Magnesiumsulfat getrocknet. Nach Abtrennung des Magnesiumsulfats wird das Lösungsmittel entfernt und der Rückstand im Öpumpenvakuum getrocknet. Das gewünschte Dimethylsilandiyl (2-isopropyl-4-(1-naphtyl)-inden)(2-methyl-4-(4'-tert.butyl-phenyl)-inden) wird in einer Ausbeute von 31.6 g (90%) isoliert (Reinheit 80%). 1H-NMR (400 MHz, $CDCl_3$) : 7.4-7.05 (m, 17H, arom- H), 6.8, 6.6 (je d, je 1H, H-Inden), 3.2, 3.1 (je s, je 2H, $CH_2$-H), 2.45 (m, 1H, CH-Isopropyl), 2.35 (s, 3H, $CH_3$), 1.4 (s, 9H, tert.Butyl), 1.25 (d, 6H, Isopropyl-$CH_3$), 0.15, -0.25 (je d, je 3H, Si-$CH_3$).

Beispiel 15: Darstellung von Dimethylsilandiyl(2-isopropyl-4-phenyl)-1-inden) (2-methyl-4-(4'-tert.-butyl-phenyl)-1-inden)

13.6 g (58 mmol) 2-Isopropyl-4-phenyl-1-inden werden in 135 ml Toluol und 5 ml THF vorgelegt und bei Raumtemperatur mit 21.6 ml Buthyllithiumlösung (2.68 M in Toluol) zügig versetzt. Nach beendeter Zugabe wird auf 80 °C erwärmt und 1 Stunde bei dieser Temperatur gerührt. Anschließend läßt man auf Raumtemperatur abkühlen und tropft diese Reaktionslösung zu einer Lösung aus 19.2 g (58 mmol) 2-Methyl-4-(4'-tert.-butyl-phenyl)-1-inden-dimethylchlorsilan in 150 ml Toluol innerhalb von 1 Stunde zu. Anschließend wird bei Raumtemperatur über Nacht gerührt. Es werden 70 ml Wasser hinzugegeben und die sich bildenden Phasen getrennt. Die organische Phase wird mit 90 ml Wasser gewaschen und die vereinigten wäßrigen Phasen zweimal mit insgesamt 100 ml Toluol extrahiert.

Danach werden die vereinigten organischen Phasen über Magnesiumsulfat getrocknet. Nach Abtrennung des Magnesiumsulfats wird das Lösungsmittel entfernt und der Rückstand im Öpumpenvakuum getrocknet. Das gewünschte Dimethylsilandiyl(2-isopropyl-4-phenyl)-1-inden)(2-methyl-4-(4'-tert.-butyl-phenyl)-1-inden) wird in einer Ausbeute von 25.9 g (85%) isoliert.
1H-NMR (400 MHz, $CDCl_3$): 7.45-7.10 (m, 14H, arom- H), 6.91, 6.71 (je s, je 1H, Olefin-H-Inden), 3.45, 3.40 (je s, je 2H, $CH_2$-H), 2.46 (m, 1H, CH-Isopropyl), 2.45 (s, 3H, $CH_3$-H), 1.40 (s, 9H, tert.Butyl), 1.15 (d, 6H, Isopropyl-$CH_3$), 0.00, -0.20 (je d, je 3H, Si-$CH_3$).

Beispiel 16: Darstellung von Dimethylsilandiyl(2-isopropyl-4-phenyl-1-inden)(2-ethyl-4-(4'-tert.-butyl-phenyl)-1-inden)

13.6 g (58 mmol) 2-Isopropyl-4-phenyl-1-inden werden in 135 ml Toluol und 5 ml THF vorgelegt und bei Raumtemperatur mit 21.6 ml Buthyllithiumlösung (2.68 M in Toluol) zügig versetzt. Nach beendeter Zugabe wird auf 80 °C erwärmt und 1 Stunde bei dieser Temperatur gerührt. Anschließend läßt man auf Raumtemperatur abkühlen und tropft diese Reaktionslösung zu einer Lösung aus 20.0 g (58 mmol) 2-Ethyl-4-(4'-tert.-butyl-phenyl)-1-inden-dimethylchlorsilan in 150 ml Toluol innerhalb von 1 Stunde zu. Anschließend wird bei Raumtemperatur über Nacht gerührt. Es werden 70 ml Wasser hinzugegeben und die sich bildenden Phasen getrennt. Die organische Phase wird mit 90 ml Wasser gewaschen und die vereinigten wäßrigen Phasen zweimal mit insgesamt 100 ml Toluol extrahiert. Danach werden die vereinigten organischen Phasen über Magnesiumsulfat getrocknet. Nach Abtrennung des Magnesiumsulfats wird das Lösungsmittel entfernt und der Rückstand im Öpumpenvakuum getrocknet. Das gewünschte Dimethylsilandiyl(2-isopropyl-4-phenyl)-1-inden)(2-ethyl-4-(4'-tert.-butyl-phenyl)-1-inden) wird in einer Ausbeute von 22.0 g (70%) isoliert.
1H-NMR (400 MHz, $CDCl_3$) : 7.48-7.13 (m, 14H, arom- H), 6.91, 6.72 (je s, je 1H, Olefin-H-Inden), 3.52, 3.47 (je s, je 2H, $CH_2$-H), 2.81 (m, 2H, $CH_2$-H), 2.65 (m, 1H, CH-Isopropyl), 1.37 (je s, je 9H, tert.Butyl), 1.28 (d, 6H, Isopropyl-$CH_3$), 0.96 (t, 3H, $CH_3$-H), 0.1, -0.3 (je d, je 3H, Si-$CH_3$).

Beispiel 17: Darstellung von Dimethylsilandiyl(2-methyl-4-(1-naphtyl)-inden)(2-isopropyll-4-(4'tert.butyl-phenyl)-inden)

16.8 g (57.7 mmol) 2-Isopropyl-4-(4' tert.butyl-phenyl)-inden werden in 140 ml Toluol und 5 ml THF vorgelegt und bei Raumtemperatur mit 21.5 ml Buthyllithiumlösung (2.68 M in Toluol) zügig versetzt. Nach beendeter Zugabe wird auf 80 °C erwärmt und 1 Stunde bei dieser Temperatur gerührt. Anschließend läßt man auf Raumtemperatur abkühlen und tropft diese Reaktionslösung zu einer Lösung aus 20.1 g (57.7 mmol) 2-Methyl-4-(1-naphtyl)-1-inden-dimethylchlorsilan in 240 ml Toluol innerhalb von 1 Stunde zu. Anschließend wird bei Raumtemperatur über Nacht gerührt. Es werden 60 ml Wasser hinzugegeben und die sich bildenden Phasen getrennt. Die organische Phase wird mit 800 ml Wasser gewaschen und die vereinigten wäßrigen Phasen zweimal mit insgesamt 80 ml Toluol extrahiert. Danach werden die vereinigten organischen Phasen über Magnesiumsulfat getrocknet. Nach Abtrennung des Magnesiumsulfats wird das Lösungsmittel entfernt und der Rückstand im Öpumpenvakuum getrocknet. Das gewünschte Dimethylsilandiyl(2-methyl-4-(1-naphtyl)-inden)(2-isopropyl-4-(4'-tert.butyl-phenyl)-inden) wird in einer Ausbeute von 22.6 g (65%) isoliert. 1H-NMR (400 MHz, $CDCl_3$) : 7.6-7.1 (m, 16H, arom- H), 6.7, 6.5 (je d, je 1H, H-Inden), 3.2, 3.1 (je s, je 2H, $CH_2$-H), 2.45 (m, 1H, CH-Isopropyl), 2.35 (s, 3H, $CH_3$), 1.35 (s, 9H, tert.Butyl), 1.25 (d, 6H, Isopropyl-$CH_3$), 0.10, -0.20 (je d, je 3H, Si-$CH_3$).

Beispiel 18: Darstellung von Dimethylsilandiyl(2-methyl-4- (4' tert.butyl-phenyl)-indenyl)(2-isopropyl-4-(4'-tert.-butyl-phenyl)-indenyl)zirkoniumdichlorid

36.6 g (mmol) Dimethylsilandiyl(2-methyl-4-(4'-tert.-butyl-phenyl)-1-inden)(2-isopropyl-4-(4'-tert.-butyl-phenyl)-1-inden) in 366 ml Diethylether vorgelegt und bei Raum-temperatur mit 44.9 ml Buthyllithiumlösung (2.68 M in Toluol) versetzt. Nach beendeter Zugabe wird bei dieser Temperatur über Nacht gerührt. Anschließend wird auf 0 °C abgekühlt und 14.0 g (mmol) Zirkoniumtetrachlorid portionsweise hinzugegeben. Man läßt auf Raumtemperatur erwärmen und rührt 2 Stunden bei dieser Temperatur nach. Danach wird der anfallende orange Niederschlag über einer G3-Fritte abgetrennt und zweimal mit je 50 ml THF und einmal mit 70 ml Pentan nachgewaschen. Der Rückstand wird anschließend im Ölpumpenvakuum getrocknet. Man erhält den Komplex in einer Ausbeute von 23.5 g (50%).

1H-NMR (400 MHz, $CDCl_3$) : Pseudo-rac: 7.7-6.9 (m, 14 H, arom- H), 3.26 (m, 1H, CH-Isopropyl), 2.23 (s, 3H, $CH_3$), 1.31 (s, 18H, tert.Butyl), 1.33, 1.32 (je s, je 3H, Si-$CH_3$), 1.08, 1.03 (je d, je 3H, Isopropyl-$CH_3$). Pseudo-meso: 7.7-6.7 (m, 14 H, arom- H), 3.18 (m, 1H, CH-Isopropyl), 2.44 (s, 3H, $CH_3$), 1.34 (s, 18H, tert.Butyl), 1.47, 1.25 (je s, je 3H, Si-$CH_3$), 1.20 (m, 6H, Isopropyl-$CH_3$).

Beispiel 19: Darstellung von Dimethylsilandiyl(2-ethyl-4-(4'tert.butyl-phenyl)-indenyl)(2-isopropyl-4-(4'-tert.-butylphenyl)-indenyl)zirkoniumdichlorid

18.1 g (29 mmol) Dimethylsilandiyl(2-ethyl-4-(4'-tert.-butyl-phenyl)-1-inden)(2-isopropyl-4-(4'-tert.-butyl-phenyl)-1-inden) in 181 ml Diethylether vorgelegt und bei Raumtemperatur mit 21.7 ml Buthyllithiumlösung (2.68 M in Toluol) versetzt. Nach beendeter Zugabe wird bei dieser Temperatur über Nacht gerührt. Anschließend wird auf 0 °C abgekühlt und 6.8 g (29 mmol) Zirkoniumtetrachlorid portionsweise hinzugegeben. Man läßt auf Raumtemperatur erwärmen und rührt 2 Stunden bei dieser Temperatur nach. Danach wird der anfallende orange Niederschlag über einer G3-Fritte abgetrennt und zweimal mit je 50 ml THF und einmal mit 70 ml Pentan nachgewaschen. Der Rückstand wird anschließend im Ölpumpenvakuum getrocknet. Man erhält den Komplex in einer Ausbeute von 13.6 g (60%).
1H-NMR (400 MHz, $CDCl_3$) : Pseudo-rac: 7.6-6.8 (m, 14 H, arom- H), 3.15 (m, 1H, CH-Isopropyl), 2.7, 2.5 (je m, je 1H, $CH_2$), 1.38, 1.35 (je s, je 3H, Si-$CH_3$), 1.32 (, 18H, tert.Butyl), 1.10, 1.05 (je d, je 3H, $CH_3$-Isopropyl), 0.85 (t, 3H, $CH_3$). Pseudo-meso: 7.7-6.7 (m, 14 H, arom- H), 3.25 (m, 1H, CH-Isopropyl), 2.6, 2.4 (je m, je 1H, $CH_2$), 1.50, 1.21 (je s, je 3H, Si-$CH_3$), 1.33 (, 18H, tert.Butyl), 1.20 (m, 6H, $CH_3$-Isopropyl), 1.05 (t, 3H, $CH_3$).

Beispiel 20: Darstellung von Dimethylsilandiyl(2-methyl-4-(4' tert.butyl-phenyl)-indenyl)(2-isopropyl-4-phenyl-indenyl) zirkoniumdichlorid

16.0 g (29 mmol) Dimethylsilandiyl(2-isopropyl-4-phenyl)-1-inden)(2-methyl-4-(4'-tert.-butyl-phenyl)-1-inden) in 190 ml Diethylether vorgelegt und bei Raumtemperatur mit 21.7 ml Buthyllithiumlösung (2.68 M in Toluol) versetzt. Nach beendeter Zugabe wird bei dieser Temperatur über Nacht gerührt. Anschließend wird auf 0 °C abgekühlt und 6.8 g (29 mmol) Zirkoniumtetrachlorid portionsweise hinzugegeben. Man läßt auf Raumtemperatur erwärmen und rührt 4 Stunden bei dieser Temperatur nach. Danach wird der anfallende orange Niederschlag über einer G4-Fritte abgetrennt und zweimal mit je 60 ml THF und einmal mit 100 ml Pentan nachgewaschen. Der Rückstand wird anschließend im Ölpumpenvakuum getrocknet. Man erhält den Komplex in einer Ausbeute von 11.4 g (55%). 1H-NMR (400 MHz, $CDCl_3$) : Pseudo-rac: 7.8-7.0 (m, 15 H, arom- H), 3.24 (m, 1H, CH-Isopropyl), 2.22 (s, 3H, $CH_3$), 1.31 (s, 9H, tert.Butyl), 1.32, 1.30 (je s., je 3H, Si-$CH_3$), 1.10, 1.05 (je d, je 3H, Isopropyl-$CH_3$). Pseudo-meso: 7.8-6.9 (m, 15 H, arom- H), 3.21 (m, 1H, CH-Isopropyl), 2.41 (s, 3H, $CH_3$), 1.33 (s, 18H, tert.Butyl), 1.49, 1.27 (je s, je 3H, Si-$CH_3$), 1.17 (m, 6H, Isopropyl-$CH_3$).

Beispiel 21: Darstellung von Dimethylsilandiyl(2-methyl-4-phenyl)-1-indenyl)(2-isopropyl-4-(4'-tert.-butyl-phenyl)-1-indenyl) zirkoniumdichlorid

17.1 g (31 mmol) Dimethylsilandiyl(2-methyl-4-phenyl)-1-inden)(2-isopropyl-4-(4'-tert.-butyl-phenyl)-1-inden) in 200 ml Diethylether vorgelegt und bei Raumtemperatur mit 23.2 ml Buthyllithiumlösung (2.68 M in Toluol) versetzt. Nach beendeter Zugabe wird bei dieser Temperatur über Nacht gerührt. Anschließend wird auf 0 °C abgekühlt und 7.3 g (31 mmol) Zirkoniumtetrachlorid portionsweise hinzugegeben. Man läßt auf Raumtemperatur erwärmen und rührt 3 Stunden bei dieser Temperatur nach. Danach wird der anfallende orange Niederschlag über einer G4-Fritte abgetrennt und zweimal mit je 60 ml THF und einmal mit 100 ml Pentan nachgewaschen. Der Rückstand wird anschließend im Ölpumpenvakuum getrocknet. Man erhält den Komplex in einer Ausbeute von 10.4 g (50%). 1H-NMR (400 MHz, $CDCl_3$): Pseudo-rac: 7.8-7.1 (m, 15 H, arom- H), 3.24 (m, 1H, CH-Isopropyl), 2.23 (s, 3H, $CH_3$), 1.31 (s, 9H, tert.Butyl), 1.32, 1.30 (je s, je 3H, Si-$CH_3$), 1.11, 1.06 (je d, je 3H, Isopropyl-$CH_3$). Pseudo-meso: 7.8-7.0 (m, 15 H, arom- H), 3.22 (m, 1H, CH-Isopropyl), 2.41 (s, 3H, $CH_3$), 1.33 (s, 18H, tert.Butyl), 1.49, 1.27 (je s, je 3H, Si-$CH_3$), 1.18 (m, 6H, Isopropyl-$CH_3$).

Beispiel 22: Darstellung von Dimethylsilandiyl(2-ethyl-4- (4' tert.butyl-phenyl)-indenyl)(2-isopropyl 4-phenyl)-indenyl) zirkoniumdichlorid

10.8 g (20 mmol) Dimethylsilandiyl(2-isopropyl-4-phenyl-1-inden)(2-ethyl-4-(4'-tert.-butyl-phenyl)-1-inden) in 120 ml Toluol und 5 ml THF vorgelegt und bei Raumtemperatur mit 15.0 ml Buthyllithiumlösung (2.68 M in Toluol) versetzt. Nach beendeter Zugabe wird bei diester Temperatur 4 Stunden gerührt. Anschließend wird auf 0 °C abgekühlt und 4.7 g (20 mmol) Zirkoniumtetrachlorid portionsweise hinzugegeben. Man läßt auf Raumtemperatur erwärmen und rührt 5 Stunden bei dieser Temperatur nach. Danach wird der anfallende orange Niederschlag über einer G3-Fritte abgetrennt und zweimal mit je 50 ml THF nachgewaschen. Der Rückstand wird anschließend im Ölpumpenvakuum getrocknet. Man erhält den Komplex in einer Ausbeute von 6.3 g (45%).

1H-NMR (400 MHz, $CDCl_3$) : Pseudo-rac: 7.5-6.8 (m, 15 H, arom- H), 3.19 (m, 1H, CH-Isopropyl), 2.5, 2.3 (je m, je 1H, $CH_2$), 1.33, 1.31 (je s, je 3H, Si-$CH_3$), 1.32 (s, 9 H, tert.Butyl), 1.10, 1.07 (je d, je 3H, $CH_3$-Isopropyl), 0.87 (t, 3H, $CH_3$). Pseudo-meso: 7.7-6.7 (m, 14 H, arom- H), 3.27 (m, 1H, CH-Isopropyl), 2.6, 2.3 (je m, je 1H, $CH_2$), 1.35 (je s, je 3H, Si-$CH_3$), 1.34 (s, 18H, tert.Butyl), 1.25 (m, 6H, $CH_3$-Isopropyl), 0.93 (t, 3H, $CH_3$).

Beispiel 23: Darstellung von Dimethylsilandiyl(2-methyl-thiapentenyl)(2-isopropyl-4-(4' tert.butyl-phenyl)indenyl)zirkoniumdichlorid

16.5 g (35 mmol) Dimethylsilandiyl(2-methyl-thiapenten) (2-isopropyl-4-(4' tert.butyl-phenyl)inden) in 150 ml Diethylether vorgelegt und bei Raumtemperatur mit 26.2 ml Buthyllithiumlösung (2.68 M in Toluol) versetzt. Nach beendeter Zugabe wird bei dieser Temperatur über Nacht gerührt. Anschließend wird auf 0 °C abgekühlt und 8.2 g (35 mmol) Zirkoniumtetrachlorid portionsweise hinzugegeben. Man läßt auf Raumtemperatur erwärmen und rührt 5 Stunden bei dieser Temperatur nach. Danach wird der anfallende Niederschlag über einer G3-Fritte abgetrennt und zweimal mit je 60 ml THF und einmal mit 80 ml Pentan nachgewaschen. Der Rückstand wird anschließend im Ölpumpenvakuum getrocknet. Man erhält den Komplex in einer Ausbeute von 8.8 g (40%).
1H-NMR (400 MHz, $CDCl_3$) : Pseudo-rac: 7.7-6.8 (m, 10 H, arom- H), 6.6-6.5 (m, 1H, H-thionpentalen), 3.23 (m, 1H, CH-Isopropyl), 2.1 (m, 3H, $CH_3$), 1.4 (s, 9H, tert. Butyl) ; 1.5, 1.3 (je s, je 3H, Si-$CH_3$), 1.10, 1.05 (je d, je 3H, Isopropyl-$CH_3$). Pseudo-meso: 7.7-6.8 (m, 10 H, arom- H), 6.4-6.2 (m, 1H, H-thiopentalen), 3.35 (m, 1H, CH-Isopropyl), 2.3 (m, 3H, $CH_3$), 1.35 (s, 9H, tert.Butyl), 1.2 (s, 6H, Si-$CH_3$), 1.15 (m, 6H, isopropyl-$CH_3$).

Beispiel 24: Darstellung von Dimethylsilandiyl(2-isopropyl-4- (4' tert.butyl-phenyl)-indenyl)(2-methyl-4,5 benzo-indenyl) zirkoniumdichlorid

7.9 g (15 mmol) Dimethylsilandiyl(2-methyl-4,5 benzo-inden)(2-isopropyl-4-(4'-tert.-butyl-phenyl)-1-inden) in 90 ml Diethylether vorgelegt und bei Raumtemperatur mit 11.2 ml Buthyllithiumlösung (2.68 M in Toluol) versetzt. Nach beendeter Zugabe wird bei dieser Temperatur über Nacht gerührt. Anschließend wird auf 0 °C abgekühlt und 3.53 g (15 mmol) Zirkoniumtetrachlorid portionsweise hinzugegeben. Man läßt auf Raumtemperatur erwärmen und rührt 4 Stunden bei dieser Temperatur nach. Danach wird der anfallende Niederschlag über einer G4-Fritte abgetrennt und zweimal mit je 60 ml THF nachgewaschen. Der Komplex wird aus einem Toluol Pentan-Gemisch umkristallisiert. Der Rückstand wird anschließend im Ölpumpenvakuum getrocknet. Man erhält den Komplex in einer Ausbeute von 3.1 g (30%).

1H-NMR (400 MHz, $CDCl_3$): Pseudo-rac: 8.0-6.9 (m, 12 H, arom- H), 3.15 (m, 1H, CH-Isopropyl), 2.25 (s, 3H, $CH_3$), 1.35 (s, 9H, tert.Butyl), 1.36, 1.35 (je s, je 3H, Si-$CH_3$), 1.09, 1.07 (je d, je 3H, isopropyl-$CH_3$). Pseudo-meso: 8.0-6.9 (m, 12 H, arom- H), ), 3.39 (m, 1H, CH-Isopropyl), 2.25 (s, 3H, $CH_3$ fällt mit der rac-Form zusammen), 1.35 (s, 9H, tert.Butyl, fällt mit der rac-Form zusammen), 1.37 (s, 6H, Si-$CH_3$), 1.24 (m, 6H, Isopropyl-$CH_3$).

Beispiel 25: Darstellung von Dimethylsilandiyl(2-methyl-4- (4' tert.butyl-phenyl)-indenyl)(2-isopropyl 4-(1-naphtyl)-indenyl)zirkoniumdichlorid

11.4 g (19 mmol) Dimethylsilandiyl(2-isopropyl-4-(1-naphtyl)-1-inden)(2-methyl-4-(4'-tert.-butyl-phenyl)-1-inden) in 150 ml Toluol und 15 ml THF vorgelegt und bei Raumtemperatur mit 14.3 ml Buthyllithiumlösung (2.68 M in Toluol) versetzt. Nach beendeter Zugabe wird bei dieser Temperatur über Nacht gerührt. Anschließend wird auf 0 °C abgekühlt und 4.4 g (19 mmol). Zirkoniumtetrachlorid portionsweise hinzugegeben. Man läßt auf Raumtemperatur erwärmen und rührt 2 Stunden bei dieser Temperatur nach. Danach wird der anfallende Niederschlag über einer G4-Fritte abgetrennt und zweimal mit je 50 ml THF nachgewaschen. Der Rückstand wird anschließend im Ölpumpenvakuum getrocknet. Man erhält den Komplex in einer Ausbeute von 5.9 g (41%).
1H-NMR (400 MHz, $CDCl_3$) : Pseudo-rac: 7.8-6.95 (m, 17 H, arom- H), 3.21 (m, 1H, CH-Isopropyl), 2.25 (s, 3H, $CH_3$), 1.33, 1.31 (je s, je 3H, Si-$CH_3$), 1.32 (s, 9 H, tert.Butyl), 1.09, 1.07 (je d, je 3H, $CH_3$-Isopropyl). Pseudo-meso: 7.9-7.07 (m, 17 H, arom- H), 3.37 (m, 1H, CH-Isopropyl), 2.50 (s, 3H, $CH_3$), 1.35 (je s, je 3H, Si-$CH_3$), 1.32 (s, 18H, tert.Butyl, fällt mit der rac-Form zusammen), 1.25 (m, 6H, $CH_3$-Isopropyl).

Beispiel 26: Darstellung von Dimethylsilandiyl(2-isopropyl-4- (4' tert.butyl-phenyl)-indenyl)(2-methyl 4-(1-naphtyl)-indenyl)zirkoniumdichlorid

15.0 g (25 mmol) Dimethylsilandiyl(2-methyl-4-(1-naphtyl)-1-inden)(2-isopropyl-4-(4'-tert.-butyl-phenyl)-1-inden) in 170 ml Toluol und 20 ml THF vorgelegt und bei Raumtemperatur mit 17.9 ml Buthyllithiumlösung (2.68 M in Toluol) versetzt. Nach beendeter Zugabe wird bei dieser Temperatur über Nacht gerührt. Anschließend wird auf 0 °C abgekühlt und 5.9 g (25 mmol) Zirkoniumtetrachlorid portionsweise hinzugegeben. Man läßt auf Raumtemperatur erwärmen und rührt 2 Stunden bei dieser Temperatur nach. Danach wird der anfallende Niederschlag über einer G4-Fritte abgetrennt und zweimal mit je 50 ml THF und 70 ml Pentan nachgewaschen. Der Rückstand wird anschließend im Ölpumpenvakuum getrocknet. Man erhält den Komplex in einer Ausbeute von 6.8 g (41%).

1H-NMR (400 MHz, $CDCl_3$) : Pseudo-rac: 7.8-6.95 (m, 17 H, arom- H), 3.22 (m, 1H, CH-Isopropyl), 2.23 (s, 3H, $CH_3$), 1.33, 1.31 (je s, je 3H, Si-$CH_3$), 1.32 (s, 9 H, tert.Butyl), 1.08, 1.06 (je d, je 3H, $CH_3$-Isopropyl). Pseudo-meso: 7.9-7.05 (m, 17 H, arom- H), 3.35 (m, 1H, CH-Isopropyl) , 2.48 (s, 3H, $CH_3$), 1.35 (je s, je 3H, Si-$CH_3$), 1.32 (s, 18H, tert.Butyl, fällt mit der rac-Form zusammen), 1.22 (m, 6H, $CH_3$-Isopropyl).

II Katalysatorherstellung und Polymerisation

Es bedeuten

| | |
|---|---|
| PP = | Polypropylen |
| MC = | Metallocen |
| Kat = | geträgertes Katalysatorsystem |
| h = | Stunde |
| $Ndm^3$ = | Normliter |
| UpM = | Umdrehungen pro Minute |
| VZ = | Viskositätszahl in $cm^3/g$ |
| $M_w$ = | Molmassengewichtsmittel in g/mol |
| $M_w/M_n$ = | Molmassenverteilung, ermittelt durch Gelpermeationschromatographie |
| SD = | Schüttdichte in $g/dm^3$ und |
| Smp. = | Schmelzpunkt in °C, ermittelt gemäß ISO 3146 durch Differential Scanning Calorimetry (DSC) bei einer Aufheiz- und Abkühlrate von 10 °C / min. |
| TT = | TriadenTaktizität in Prozent ermittelt durch $^{13}C$-NMR-Spektroskopie |
| RI = | Regiofehler in %; ermittelt gem. ISO 3146 durch |

$^{13}C$-NMR-Spektroskopie

NMR-Messungen:

Zwischen 110 und 135 mg der Proben wurden in 10 mm-NMR-Röhrchen eingewogen und in einem Lösemittelgemisch aus Dideuterotetrachlorethan ($C_2D_2Cl_4$) und Hexachlorbutadien ($C_4Cl_6$) bei erhöhter Temperatur gelöst. Die Lösungen wurden NMR-spektroskopisch bei 353 K (Geräteeinstellung) an einem DMX 500-NMR-Spektrometer der Firma Bruker gemäß SOP 1030-038 (GLP) rotierend unter folgenden Bedingungen vermessen:

- Senderfrequenz(BF1) 125,7577 MHz
- Pulswinkel (P1) 30°
- Spektrale Weite (SW) 250 ppm
- Aquisitionszeit (AQ) 2,08 sec
- Wartezeit (D1) 1,92 sec
- Anzahl der Datenpunkte (TD) 131072
- Anzahl der Pulse (NS) > 8000

Die $^{13}C$-NMR-Messung erfolgte unter breitbandiger Entkopplung der Protonen.

Vor der Fouriertransformation der FIDs wurde eine exponentiale Multiplikation mit einem Linebroadening-Faktor LB = 1 Hz durchgeführt. Nach der Fouriertransformation wurde eine lineare Basislinienkorrektur im Bereich der relevanten Signale im Bereich von ca. 10 bis 60 ppm durchgeführt. Die chemischen Verschiebungen wurden auf das Signal des Dideuterotetrachlorethans bei 73.81 ppm kalibriert.

Bei der Integration der Propylen-Homopolymere wurden folgende Konventionen verwendet: Integrationsbereich für Signale der mm-Triade: 22.55 ppm bis 20.85 ppm; mr-Triade: 20.85 ppm bis 20.0 ppm; rr-Triade: 20.0 bis 19.15 ppm; 2,1-Insertion: 17.35 ppm bis 16.75 ppm; 1,3-Insertion: Summe der Integrale von 37 ppm bis 36.5 ppm und von 30.7 bis 30.2 ppm. Es ist bekannt, dass eine einzelne 2,1-Insertion zwei Signale im Integrationsbereich erzeugt, während die regioregulären Insertionen nur ein Signal erzeugen. Zur Umrechnung der gegebenen Verhältnisse der mr-Triaden zu den 2,1-Insertionen in molare Verhältnisse müssen die Werte der 2,1-Insertionen durch zwei dividiert werden. Bei der verwendeten Konvention sind dagegen die gegebenen Verhältnisse der Signale der 2,1-Insertionen zu den 1,3-Insertionen identisch mit den molaren Verhältnissen.

Weiterhin ist bekannt, dass sowohl 2,1- wie auch 1,3-Insertionen je ein weiteres Signal erzeugen, das im

Integrationsbereich der mr-Triade liegt. Da die Signale im Integrationsbereich der mr-Triaden teilweise nicht basisliniengetrennt detektiert werden können, ist eine direkte Angabe der molaren Verhältnisse nicht möglich. Zur Berechnung der molaren Verhältnisse der mm-Triaden zu den mr-Triaden müssen zunächst die Signalintensitäten der regioirregulären Insertionen von den gegebenen Intensitäten der mr-Triaden abgezogen werden.

Nummerierung der Kohlenstoffatome in der Auswertung der Spektren der Propylen-Ethylen-Copolymeren:

- $C^1H_2$-CH ($CH_3$) -;
- $CH_2$-CH ($CH_3$) -$C^5H_2$-$C^7H_2$-$CH_2$-CH ($CH_3$) -;
- $CH_2$-CH ($CH_3$) -$C^5H_2$-$C^6H_2$-$C^9H_2$-$CH_2$-$CH_2$-CH ($CH_3$) -;
- $CH_2$-CH ($CH_3$) -$C^5H_2$-$C^6H_2$-$C^9H_2$-($C^{10}H_2$-$CH_2$)$_n$-$CH_2$-CH ($CH_3$ ) -;
- $CH_2$-CH ($CH_3$) -$C^{12}H_2$-$C^{13}H_2$-$CH_2$-$CH_2$-CH ($CH_3$) -:
- $CH_2$-CH($CH_3$)-$C^{16}H_2$-$C^{15}H_2$-CH($CH_3$)-$C^{15}H_2$-$C^{16}H_2$-CH($CH_3$)-.

Zu beiden Seiten der abgebildeten Sequenzen schließen sich jeweils -$CH_2$-CH($CH_3$)- an. Die Zuordnung der Signale zu den nummerierten Kohlenstoffatomen ist den Fachleuten geläufig.

Gekoppelte GPC-IR-Messungen

Die GPC wurde auf einer Waters 150C HT-GPC-Anlage vermessen. Die Ergebnisse wurden mit Polystyrol kalibriert. Zur Kopplung diente ein Interface Modell 300 der Firma Lab Connections, Marlborough, MA (USA). Hierbei wird in einer Vakuuumkammer der Eluent durch ein Ultraschallsignal zerstäubt und durch Erwärmunq und Vakuum entfernt. Das zurückbleibende Polymer wird auf einer rotierenden Germaniumscheibe kontinuierlich aufgefangen. Anschließend wird diese Scheibe mittels eines Optikmoduls in einem FTIR-Spektometer Impact 400D der Firma Nicolet abgescannt.

Bedingungen: GPC: Eluent: Trichlorbenzol, Flussrate:

1,1 ml / min, Injektvolumen: 150 µl, Temperatur: 150 °C. Interface: Düsentemperatur: 110 °C, Flussrate: 1,1 ml / min, Ge-Scheibenheizung: 165 °C, Transferleitung: 145 °C, Drehgeschwindigkeit 10.°/ min. FTIR: Kontinuierliche Spektrenaufnahme bei 10 °/ min mit Omnic-Seriensof tware: 270 Spektren in 30 Minuten (alle 8 Sek. ein Spektrum) mit je 16 Scans, Detektor: DTGS.

Zur Auswertung wurde eine von Dekmezian etablierte Methode herangezogen, wie sie beispielsweise in der Applikationsnote Nr. 16 der Fa. LabConnections veröffentlicht ist. Hierbei werden die C-H-Valenzschwingungen ins Verhältnis zum Ethylengehalt gesetzt. Den Fachleuten ist geläufig, dass die Konstanten in diesem Verhältnis von den durchgeführten Messbedingungen abhängen. Sie wurden bestimmt mittels Blendmischung aus linearem Polyethylen (PE) und isotaktischem Polypropylen. Hierzu wurden analoge Versuchsbedingungen gewählt (gleiche GPC, gleiche Kopplung, gleiche Spektrenaufnahme), allerdings wurden die GPC-Säulen nicht mitbenutzt, sondern direkt vom Injektor auf die Ge-Platte versprüht, damit keine Entmischung auftritt. Aus dieser Kalibrierung resultiert die folgende Formel:

$$\text{mol\% PE} = 39{,}7 * \ln[A(2922\ \text{cm}^{-1}) + A(2850\ \text{cm}^{-1}) / A(2953\ \text{cm}^{-1})] - 9{,}2$$

In dieser Formel bezeichnen A die Peakhöhen der Signale bei den in Klammern angegebenen Wellenzahlen.

Bestimmung etherlöslicher Anteile

Etwa 5 g Polymer werden 4 h unter Rückfluss mit 280 ml peroxidfreiem Diethylether (stabilisiert mit 0,1 % Irganox 1010, 1 g Stabilisator / 1 Ether) in einem 1 1-Rundkolben extrahiert. Der ungelöste Anteil wird abgetrennt, die Lösung wird auf ca. 50 ml eingeengt. Der gelöste Anteil durch Zugabe eines großen Überschusses ausgefällt, durch Rühren mit einem Magnetrührer aggregiert und durch Filtrieren über einen Glasfiltertiegel D1 (Durchmesser: 30 mm) isoliert.

Beispiel 27:

Darstellung des geträgerten Katalysatorsystems:

70 mg (0.091 mmol) rac-Dimethylsilandiyl(2-methyl-4-(para-tert-butyl-phenyl)-indenyl) (2-isopropyl-4-(para-tert-butyl-phenyl)-indenyl)zirkoniumdichlorid (Beispiel 18) wurden bei Raumtemperatur in 4,3 $cm^3$ (20 mmol Al) 30 %iger toluolischer Methylaluminoxan-Lösung (Albemarle Corporation, Baton Rouge, Louisiana, USA) gelöst. Die Lösung

wurde mit 3,7 $cm^3$ Toluol verdünnt und lichtgeschützt bei 25 C 1h gerührt. Diese Lösung wurde portionsweise unter Rühren zu 4g $SiO_2$ (Typ MS 948, W.R. Grace, Davison Chemical Devision, Baltimore, Maryland, USA, Porenvolumen 1,6ml/g, calciniert bei 600°C) gegeben und der Ansatz nach beendeter Zugabe 10 min nachgerührt. Das Verhältnis Volumen der Lösung zum Gesamtporenvolumen des Trägermaterials betrug 1,25. Anschließend wurde der Ansatz innerhalb von 4 h bei 40 °C und $10^{-3}$ mbar getrocknet. Es wurden 5,5 g eines frei fließenden Pulvers erhalten, das laut Elementaranalyse 0.13 Gew% Zr und 9,5 Gew% Al enthielt.

Polymerisation:

Ein trockener 16 $dm^3$ -Reaktor, der zunächst mit Stickstoff und anschließend mit Propen gespült worden war, wurde mit 10 $dm^3$ flüssigem Propen gefüllt. Als Scavenger wurden 8 $cm^3$ 20 %iger Triethylaluminium-Lösung in Varsol (Witco) zugesetzt und der Ansatz 15 min bei 30 °C gerührt. Anschließend wurde eine Suspension von 2 g des geträgerten Metallocen-Katalysators in 20 $cm^3$ Exxsol in den Reaktor gegeben, auf die Polymerisationstemperatur von 70°C aufgeheizt und das Polymerisationssystem 1 h bei 70°C gehalten. Die Polymerisation wurde durch Entgasen gestoppt und das erhaltene Polymer im Vakuum getrocknet. Es resultierten 2,7 kg Polypropylen-Pulver.

Die Katalysatoraktivität betrug 123 kg PP / (g MC x h) oder 1,4 kg PP /(g Kat x h)

Das dargestellte isotaktische Polypropylen wies die folgenden Eigenschaften auf: Smp. 157 °C ; $M_w$ = $4{,}5\times10^5$g/mol, $M_w/M_n$ = 2,6, VZ = 430 $cm^3$/g, SD = 460 g/$dm^3$, TT = >99 % , RI = 0,32 %.

Beispiele 28 bis 34

Darstellung des geträgerten Katalysatorsystems:

Das Vorgehen von Beispiel 27 wurde mit weiteren Metallocenen wiederholt.

Die Ergebnisse sind in der folgender Tabelle zusammengefaßt.

| Bsp. Nr. | Metallocen | | Einwaage Metallocen [mg] | Gehalt zr [Gew] | Gehalt Al [Gew%] |
|---|---|---|---|---|---|
| 28 | Dimethylsilandiyl(2-ethyl-4-(4'tert.butyl-phenyl)-indenyl) (2-isopropyl-4-(4'-tert.-butylphenyl)-indenyl) zirkoniumdichlorid | B19 | 71,3 | 0,16 | 9,5 |
| 29 | Dimethylsilandiyl(2-methyl-4-(4'tert.butyl-phenyl)-indenyl) (2-isopropyl-4-phenyl-indenyl) zirkoniumdichlorid | B20 | 64,8 | 0,15 | 9,5 |
| 30 | Dimethylsilandiyl(2-methyl-4-phenyl)-1-indenyl)(2-isopropyl-4-(4'-tert.-butyl-phenyl)-1-indenyl) zirkoniumdichlorid | B21 | 64,8 | 0,14 | 9,5 |
| Bsp. Nr. | Metallocen | | Einwaage Metallocen [mg] | Gehalt Zr [Gew] | Gehalt Al [Gew%] |
| 31 | Dimethylsilandiyl(2-ethyl-4-(4'tert.butyl-phenyl)-indenyl)(2-isopropyl4-phenyl)-indenyl) zirkoniumdichlorid | B22 | 66,1 | 0,14 | 9,5 |

(fortgesetzt)

| Bsp. Nr. | Metallocen | | Einwaage Metallocen [mg] | Gehalt Zr [Gew] | Gehalt Al [Gew%] |
|---|---|---|---|---|---|
| 32 | Dimethylsilandiyl(2-isopropyl-4-(4-tert.butyl-phenyl)-indenyl)(2-methyl-4,5-benzo-indenyl) zirkoniumdichlorid | B24 | 62,5 | 0,13 | 9,5 |
| 33 | Dimethylsilandiyl(2-methyl-4-(4'tert.butyl-phenyl)-indenyl) (2-isopropyl4-(1-naphtyl)-indenyl) zirkoniumdichlorid | B25 | 69,4 | 0,16 | 9,5 |
| 34 | Darstellung von Dimethylsilandiyl(2-isopropyl-4-(4'tert.butyl-phenyl) -indenyl) (2-methyl 4-(1-naphtyl)-indenyl) zirkoniumdichlorid | B26 | 69,3 | 0,13 | 9,5 |

Polymerisation:

Das Vorgehen von Beispiel 27 wurde mit weiteren Katalysatoren wiederholt.

Die Ergebnisse sind in folgenden Tabelle aufgelistet.

| Bsp. Nr. | Metallocen-Nr. | Ausbeute PP [kg] | Aktivität [kg PP/g Kat*h] | Smp | Mw | Mw/Mn | SD |
|---|---|---|---|---|---|---|---|
| 28 | B19 | 2,1 | 1,1 | 157 | 515000 | 3,1 | 450 |
| 29 | B20 | 2,3 | 1,2 | 156 | 433000 | 2,8 | 430 |
| 30 | B21 | 2,6 | 1,3 | 156 | 365000 | 2,7 | 420 |
| 31 | B22 | 2,4 | 1,2 | 156 | 467000 | 2,6 | 440 |
| 32 | B24 | 2,1 | 1,1 | 156 | 376000 | 2,3 | 450 |
| 33 | B25 | 2,6 | 1,3 | 157 | 569000 | 2,5 | 455 |
| 34 | B26 | 2,4 | 1,2 | 158 | 589000 | 2,3 | 435 |

Beispiel 35

Die Polymerisation erfolgte analog zu Beispiel 27, es wurden jedoch zusätzlich 5 $Ndm^3$ Wasserstoff in der Polymerisation eingesetzt. Es resultierten 3,2 kg Polypropylen-Pulver.

Die Katalysatoraktivität betrug 146 kg PP / (g MC x h) oder 1,6 kg PP / (g Kat x h).

Das dargestellte isotaktische Polypropylen wies die folgenden Eigenschaften auf: Smp. 159 °C ; $M_w = 2{,}5 \times 10^5$ g/mol, $M_w/M_n$ = 3, 0, VZ = 270 $cm^3/g$, SD = 450 $g/dm^3$, TT > 99 %, RI = 0,3 %.

Beispiele 36 bis 40a (Vergleichsbeispiele) 1:

Darstellung des geträgerten Katalysatorsystems:

Die Darstellung erfolgte analog Beispielen 27 bis 34. Die Ergebnisse sind in folgender Tabelle zusammengefaßt.

| Bsp. Nr. | Metallocen | Einwaage [mg] | Gehalt Zr [Gew%] | Gehalt Al [Gew%] |
|---|---|---|---|---|
| 36 | Dimethylsilandiylbis(2-methyl-4-(4'tert. butyl-phenyl)-indenyl)zirkoniumdichlorid | 67,4 | 0,16 | 9,5 |

(fortgesetzt)

| Bsp. Nr. | Metallocen | Einwaage [mg] | Gehalt Zr [Gew%] | Gehalt Al [Gew%] |
|---|---|---|---|---|
| 37 | Dimethylsilandiyl(2-methyl-4-phenyl)-indenyl) (2-isopropyl-4-phenyl-indenyl)zirkoniumdichlorid | 59,7 | 0,14 | 9,5 |
| 38 | Dimethylsilandiyl (2-methyl-4-(1-naphthyl)-indenyl)(2-isopropyl-4-phenyl-indenyl)zirkoniumdichlorid | 64,1 | 0,16 | 9,5 |
| 39 | Dimethylsilandiyl(2-methyl-4-phenyl)-indenyl)(2-methyl-4,5-benzoindenyl)zirkoniumdichlorid | 54,9 | 0,16 | 9,5 |
| 40 | Dimethylsilandiyl (2-methyl-4-(1-naphthyl)-indenyl) (2-methyl-4-phenyl-indenyl) zirkoniumdichlorid | 64,1 | 0,16 | 9,5 |
| 40a | Dimethylsilandiyl bis(2-methyl-4-(1-naphthyl)-indenyl) zirkoniumdichlorid | 67,8 | 0,15 | 9,4 |

Polymerisation:

Die Polymerisationen wurden analog zu den Beispielen 27 bis 34 durchgeführt. Die Ergebnisse sind in folgender Tabelle zusammengefaßt.

| Bsp. 1 | Metallocen | Auswaage PP [kg] | Aktivität [kg/(gxh)] | Smp | Mw | Mw/ Mn | SD |
|---|---|---|---|---|---|---|---|
| 36 | Dimethylsilandiylbis (2-methyl-4-(4' tert.butyl-phenyl) -indenyl) zirkoniumdichlorid | 3,2 | 1,6 | 154 | 900000 | 2,6 | 460 |
| 37 | Dimethylsilandiyl (2-methyl-4-phenyl) -indenyl)(2-isopropyl-4-phenyl-indenyl) zirkoniumdichlorid | 1,1 | 0,6 | 152 | 322000 | 3,1 | 450 |
| 38 | Dimethylsilandiyl (2-methyl-4-(1-naphthyl)-indenyl)(2-isopropyl-4-phenyl-indenyl) zirkoniumdichlorid | 1,3 | 0,7 | 153 | 390000 | 2,9 | 435 |
| 39 | Dimethylsilandiyl (2-methyl-4-phenyl)-indenyl)(2-methyl-4,5-benzo-indenyl) zirkoniumdichlorid | 1,6 | 0,8 | 149 | 340000 | 2,5 | 450 |

(fortgesetzt)

| Bsp. 1 | Metallocen | Auswaage PP [kg] | Aktivität [kg/ (gxh)] | Smp | Mw | Mw/ Mn | SD |
|---|---|---|---|---|---|---|---|
| 40 | Dimethylsilandiyl (2-methyl-4-(1-naphthyl)-indenyl)(2-methyl-4-phenylindenyl) zirkoniumdichlorid | 1,7 | 0,9 | 150 | 360000 | 2,6 | 460 |

Tabelle

| Bsp. Nr.1 | Metallocen aus Beispiel Nr.: | Monomer | Auswaage PP [kg] | Aktivität [kg PP/(g Kat *h)] | Smp | Mw | Mw/Mn | $C_2$-Ge - halt [Gew%] |
|---|---|---|---|---|---|---|---|---|
| 41 | B18 | 12 l Propen / 150 g Ethen | 2,42 | 3,5 | 141 | 522000 | 2,3 | 6,1 |
| 42 | B19 | 12 l Propen / 150 g Ethen | 2,5 | 3,6 | 142 | 688000 | 3,1 | 6,5 |
| 43 | B20 | 12 l Propen / 150 g Ethen | 2,6 | 3,7 | 140 | 578000 | 2,8 | 5,8 |
| 44 | B21 | 12 l Propen / 150 g Ethen | 2,4 | 3,4 | 141 | 555000 | 2,7 | 5,9 |
| 45 | B22 | 12 l Propen / 150 g Ethen | 2,1 | 3,0 | 142 | 589000 | 2,6 | 6 |
| 46 | B24 | 12 l Propen / 150 g Ethen | 2,6 | 3,7 | 141 | 569000 | 2,3 | 5,8 |
| 47 | B25 | 12 l Propen / 150 g Ethen | 2,7 | 3,9 | 142 | 621000 | 2,5 | 6,3 |
| 48 | B26 | 12 l Propen / 150 g Ethen | 2,6 | 3,7 | 142 | 643000 | 2,3 | 6,7 |
| 49 | B18 | 12 l Propen / 450 g Ethen | 2,52 | 3,6 | 115 | 592000 | 2,5 | 18,1 |
| 50 | B19 | 12 l Propen / 450 g Ethen | 2,62 | 3,7 | 116 | 699000 | 3,1 | 18,5 |
| 51 | B20 | 12 l Propen / 450 g Ethen | 2,74 | 3,9 | 114 | 589000 | 2,5 | 16 |

(fortgesetzt)

| Bsp. Nr.1 | Metallocen aus Beispiel Nr.: | Monomer | Auswaage PP [kg] | Aktivität [kg PP/(g Kat *h)] | Smp | Mw | Mw/Mn | $C_2$-Ge - halt [Gew%] |
|---|---|---|---|---|---|---|---|---|
| 52 | B21 | 12 l Propen / 450 g Ethen | 2,54 | 3,6 | 113 | 576000 | 2,8 | 17,1 |
| 53 | B22 | 12 l Propen / 450 g Ethen | 2,5 | 3,6 | 115 | 599000 | 2,5 | 16,5 |
| 54 | B24 | 12 l Propen / 450 g Ethen | 2,65 | 3,8 | 113 | 589000 | 2,4 | 18,2 |
| 55 | B25 | 12 l Propen / 450 g Ethen | 2,8 | 4,0 | 117 | 643000 | 2,7 | 19,9 |
| 56 | B26 | 12 l Propen / 450 g Ethen | 2,76 | 3,9 | 118 | 651000 | 2,6 | 19,8 |

Beispiele 41 bis 56

Ein trockener 24 $dm^3$ -Reaktor wurde mit Propylen gespült und mit 12 $dm^3$ flüssigem Propylen, 150 g Ethylen (Beispiele 41 bis 48) bzw. 450 g Ethylen (Beispiele 49 bis 56) und 22 $cm^3$ einer hexanschen Triisobutylaluminiumlösung (8 mmol Al, 2 $cm^3$ Triisobutylaluminium verdünnt mit 20 $cm^3$ Hexan) befüllt und die Reaktorrührung auf 250 UpM eingestellt. 0,7 g des in den Beispielen 27 bis 34 hergestellten Trägerkatalysators wurden in 25 $cm^3$ eines entaromatisierten Benzinschnittes mit dem Siedebereich 100 bis 120 °C suspendiert und die Suspension in den Reaktor gegeben. Der Reaktor wurde auf die Polymerisationstemperatur von 70 °C aufgeheizt (7,5 °C/min) und 1 h bei dieser Polymerisationstemperatur durch Kühlung des Reaktormantels gehalten. Gestoppt wurde die Polymerisation durch schnelles Abgasen der überschüssigen Monomeren. Das Polymer wurde im Vakuum getrocknet. Polymerausbeute, Katalysatoraktivität und Produktdaten sind folgender Tabelle zu entnehmen.

Beispiele 57 bis 68 (Vergleichsbeispiele)

Es wurde verfahren wie in den Beispielen 41 bis 56. Die Ergebnisse sind in folgender Tabelle aufgeführt. Die Molmasse $M_w$ sinkt bei Verwendung des nicht erfindungs-gemäßen Katalysatorsystems deutlich unter den Wert der Homopolymerisation aus den Beispielen 36 bis 40.

Tabelle

| Bsp. Nr. | Metallocen aus Beispiel Nr.: | Monomer | Auswaage PP [kg] | Aktivität [kg PP/(g Kat *h)] | Smp | Mw | Mw/Mn | $C_2$-Ge - halt [Gew%] |
|---|---|---|---|---|---|---|---|---|
| 57 | 36 | 12 l Propen / 150 g Ethen | 2,24 | 3,2 | 140 | 815000 | 2,2 | 3 |
| 58 | 36 | 12 l Propen / 450 g Ethen | 2,38 | 3,4 | 109 | 586000 | 2,4 | 10,6 |
| 59 | 40a | 12 l Propen / 150 g Ethen | 1,19 | 1,7 | 133 | 509000 | 2,3 | 3 |

(fortgesetzt)

| Bsp. Nr. | Metallocen aus Beispiel Nr.: | Monomer | Auswaage PP [kg] | Aktivität [kg PP/(g Kat *h)] | Smp | Mw | Mw/Mn | $C_2$-Ge - halt [Gew%] |
|---|---|---|---|---|---|---|---|---|
| 60 | 40a | 12 l Propen / 450 g Ethen | 1,26 | 1,8 | 106 | 464400 | 2,8 | 10,5 |
| 61 | 37 | 12 l Propen / 450 g Ethen | 1,8 | 2,6 | 108 | 149000 | 2,4 | 11 |
| 62 | 37 | 12 l Propen / 150 g Ethen | 1,6 | 2,3 | 138 | 210000 | 2,2 | 3,5 |
| 63 | 38 | 12 l Propen / 450 g Ethen | 1,9 | 2,7 | 107 | 256000 | 2,4 | 10,9 |
| 64 | 38 | 12 l Propen / 150 g Ethen | 1,6 | 2,3 | 141 | 305000 | 2,2 | 3,1 |
| 65 | 39 | 12 l Propen / 450 g Ethen | 1,7 | 2,4 | 108 | 215000 | 2,4 | 10,2 |
| 66 | 39 | 12 l Propen / 150 g Ethen | 1,5 | 2,1 | 140 | 280000 | 2,2 | 3,2 |
| 67 | 40 | 12 l Propen / 450 g Ethen | 1,8 | 2,6 | 109 | 223000 | 2,4 | 11,1 |
| 68 | 40 | 12 l Propen / 150 g Ethen | 1,6 | 2,3 | 138 | 289000 | 2,2 | 3,1 |

Beispiele 69 bis 76: Darstellung des geträgerten Katalysatorsystems:

Zu einer Suspension von 2 g $SiO_2$ (siehe Beispiel 27) in 30 ml Toluol werden bei Raumtemperatur 0,5 ml N, N-Dimethylanilin zugegeben. Es wird auf 0 C gekühlt und über einen Tropftrichter 40 ml einer klaren, hellgelben Lösung (0,1 M bezogen auf Al) von Bis(pentafluorphenylboroxy)methylalan in 95 ml Toluol zugetropft. Man läßt auf Raumtemperatur erwärmen und rührt 3 Stunden nach. Die Suspension wird anschließend filtriert und mit Pentan gewaschen. Danach wird der Rückstand im Ölpumpenvakuum bis zur Gewichtskonstanz getrocknet. Es resultieren 3,96 g eines hell lila gefärbten Trägermaterials.

0,06 mmol Metallocen in 35 ml Toluol werden 10 Minuten mit 0,08 ml TMA (2 M in Toluol, 0,16 mmol) gerührt. Anschließend werden bei Raumtemperatur 1,6 g des oben hergestellten geträgerten Cokatalysators dazu gegeben. Die Katalysatorlösung wird 1 Stunde gerührt und danach das Lösemittel im Ölpumpenvakuum abgezogen. Es resultiert ein rosa farbenes, freifließendes Pulver.

| Bsp. Nr. | Metallocen aus Beispiel Nr.: | Einwaage Metallocen [mg] |
|---|---|---|
| 69 | B18 | 46,1 |
| 70 | B19 | 47,0 |
| 71 | B20 | 42,7 |
| 72 | B21 | 42,7 |
| 73 | B22 | 43,6 |

(fortgesetzt)

| Bsp. Nr. | Metallocen aus Beispiel Nr.: | Einwaage Metallocen [mg] |
|---|---|---|
| 74 | B24 | 41,2 |
| 75 | B25 | 45,8 |
| 76 | B26 | 45,7 |

Polymerisation:

Die Polymerisation wurde analog zu Beispiel 27 durchgeführt. Die Ergebnisse sind in folgender Tabelle aufgeführt.

Tabelle

| Bsp. Nr. | Metallocen aus Beispiel Nr.: | Berechnete Einwaage Kat | Auswaage PP [kg] | Aktivität [kg PP/(g Kat *h)] | Smp | Mw | Mw/Mn | SD |
|---|---|---|---|---|---|---|---|---|
| 69 | B18 | 0,80 | 2,5 | 3,1 | 158 | 450000 | 2,3 | 410 |
| 70 | B19 | 0,80 | 2,1 | 2,6 | 158 | 515000 | 2,7 | 450 |
| 71 | B20 | 0,80 | 2 | 2,5 | 158 | 433000 | 2,8 | 430 |
| 72 | B21 | 0,80 | 2,2 | 2,8 | 157 | 365000 | 2,6 | 440 |
| 73 | B22 | 0,80 | 2,4 | 3,0 | 156 | 467000 | 2,4 | 420 |
| 74 | B24 | 0,80 | 2,5 | 3,1 | 157 | 376000 | 2,3 | 430 |
| 75 | B25 | 0,80 | 2,3 | 2,9 | 158 | 569000 | 2,3 | 450 |
| 76 | B26 | 0,80 | 2,2 | 2,8 | 159 | 589000 | 2,5 | 450 |

Beispiel 77

Die Polymerisation erfolgte analog zu Beispiel 69, es wurden jedoch nur 0,4 g Kat eingesetzt und zusätzlich 5 $Ndm^3$ Wasserstoff in der Polymerisation eingesetzt. Es resultierten 3,2 kg Polypropylen-Pulver.

Die Katalysatoraktivität betrug 8 kg PP /(g Kat x h).

Das dargestellte isotaktische Polypropylen wies die folgenden Eigenschaften auf: Smp. 160 °C ; $M_w$ = 250000 g/mol, $M_w/M_n$ = 2,6 SD = 420 $g/dm^3$

Beispiel 78

Ein trockener 24 $dm^3$ -Reaktor wurde mit Propylen gespült und mit 0,5 bar Wasserstoff beaufschlagt. Anschließend wurde der Reaktor mit 12 $dm^3$ flüssigem Propylen und 22 $cm^3$ einer hexanischen Triisobutylaluminiumlösung (8 mmol Al, 2 $cm^3$ Triisobutylaluminium verdünnt mit 20 $cm^3$ Hexan) befüllt und die Reaktorrührung auf 250 UpM eingestellt. 0,7 g des in Beispiel 27 hergestellten Trägerkatalysators wurden in 25 $cm^3$ eines entaromatisierten Benzinschnittes mit dem Siedebereich 100 bis 120 °C suspendiert und die Suspension in den Reaktor gegeben. Der Reaktor wurde auf die Polymerisationstemperatur von 70 °C aufgeheizt (7,5 °C/min) und 1 h bei dieser Polymerisationstemperatur durch Kühlung des Reaktormantels gehalten.

Anschließend wurde der Reaktor auf 10 bar entspannt und mit 20 bar Ethylen beaufschlagt. Der Ansatz wurde bei einer Temperatur von 60 °C 2 h weiterpolymerisiert und dann durch rasches Abgasen der überschüssigen Monomeren gestoppt. Es wurde ein Blockcopolymer mit den folgenden Eigenschaften erhalten:

Homopolymermatrix (iPP aus Fraktionierung): Smp. = 159 °C ; $M_w = 2{,}6 \times 10^5$ g/mol ; $M_w/M_n$ = 2,5, VZ = 240 $cm^3/g$. Kautschuk (Ethylen-Propylen-Copolymer): $T_g$ = - 47 °C ; 56 Gew% $C_2$ ; VZ = 680 $cm^3/g$ ; $M_w = 6{,}9 \times 10^5$ g/mol ; $M_w/M_n$ = 3,0.

Beispiel 79 (Vergleichsbeispiel)

Das Beispiel 78 wurde unter Verwendung eines gemäß Beipiel 36 dargestellten Trägerkatalysators wiederholt. Es wurde ein Blockcopolymer mit den folgenden Eigenschaften erhalten:

Homopolymermatrix (iPP aus Fraktionierung): Smp. = 155 °C ; $M_w$ = 2,8 × $10^5$ g/mol ; $M_w/M_n$ = 2,6, VZ = 230 $cm^3/g$. Kautschuk (Ethylen-Propylen-Copolymer): $T_g$ = - 49 °C ; 44 Gew% $C_2$ ; VZ = 374 $cm^3/g$ ; $M_w$ = 4,03 × $10^5$ g/mol; $M_w/M_n$ = 3,0.

Vergeichsbeispiel 80

Das Beispiel 78 wurde unter Verwendung eines Trägerkatalysators mit Dimethylsilandiylbis(2-methyl-4-(1-naphthyl)indenyl)zirkondichlorid als Metallocen wiederholt. Es wurde ein Blockcopolymer mit den folgenden Eigenschaften erhalten:
Homopolymermatrix (iPP aus Fraktionierung): Smp. = 154 °C; $M_w$ = 1,99 ×$10^5$ g/mol; $M_w/M_n$ = 2,6; VZ = 168 $cm^3/g$. Kautschuk (Ethylen-Propylen-Copolymer): $T_g$ = - 50 °C; 46 Gew% $C_2$; VZ = 280 $cm^3/g$; $M_w$ = 3,54 × $10^5$ g/mol; $M_w/M_n$ = 2,7

Beispiel 81

Beipsiel 78 wurde wiederholt, jedoch wurde der Reaktor nur mit 10 $dm^3$ flüssigem Propylen gefüllt und der Katalysator als Paste zudosiert. Zu diesem Zweck wurden 20 g des in Beispiel 27 hergestellten Katalysators in 100 ml eines Öl (weissöl Ondina G 33, Fa. Deutsche Shell AG) / Vaseline (Fa. Deutsche Shell AG) -Gemisches (4 / 1) eingerührt. Von der erhaltenen Paste wurde ein Aliquot, das 0,7 g Katalysatorpulver entspricht, in eine Druckschleuse überführt und mit 2 $dm^3$ flüssigem Propylen in den Reaktor gespült.
Es wurde ein Blockcopolymer mit zu Beispiel 78 vergleichbaren Eigenschaften erhalten.

Beispiel 82

Beispiel 78 wurde wiederholt, jedoch wurde die erste Polymerisationsstufe bei 65 °C in Gegenwart von 60 g Ethylen durchgeführt. Es wurde ein Blockcopolymer mit den folgenden Eigenschaften erhalten:
Homopolymermatrix (iPP aus Fraktionierung): 158 °C; $M_w$ = 2, 5 × $10^5$ g/mol; $M_w/M_n$ = 2,5; VZ = 260 $cm^3/g$. Kautschuk (Ethylen-Propylen-Copolymer): $T_g$ = -26 °C; 14 Gew% $C_2$; VZ = 576 $cm^3/g$ ; $M_w$ = 6,02 × $10^5$ g/mol; $M_w/M_n$ = 2,8.
Mit den erfindungsgemäßen Metallocenen können auch hochmolekulare Copolymere mit höheren Olefinen als Ethylen hergestellt werden. Einige Beispiele sollen das Prinzip erläutern:

Beispiel 83

Beispiel 27 wurde wiederholt, jedoch wurde der Reaktor vor der zweiten Polymerisationsstufe auf 18 bar entspannt und dann mit nur 5 bar Ethylen beaufschlagt. Es wurde ein weissbrucharmes Blockcopolymer mit den folgenden Eigenschaften erhalten:
Homopolymermatrix (iPP aus Fraktionierung): Smp. = 150 °C; $M_w$ = 3,35 × $10^5$ g/mol; $M_w/M_n$ = 2,7, VZ = 315 $cm^3/g$. Kautschuk (Ethylen-Propylen-Copolymer): $T_g$ = - 52 °C; 47 Gew% $C_2$; VZ = 295 $cm^3/g$ ; $M_w$ = 3,43 × $10^5$ g/mol; $M_w/M_n$ = 2,8.

Beispiel 84 bis 86

Ein trockener 24 $dm^3$-Reaktor wurde mit Propylen gespült und mit 12 $dm^3$ flüssigem Propylen und 22 $cm^3$ einer hexanischen Triisobutylaluminiumlösung (8 mmol Al, 2 $cm^3$ Triisobutylaluminium verdünnt mit 20 $cm^3$ Hexan) befüllt und die Reaktorrührung auf 250 UpM eingestellt. Nach Zugabe eines Drittels der für die Polymerisation insgesamt vorgesehenen Comonomermenge von 9,62 mol wurden 0,7 g des in Beispiel 27 hergestellten Katalysators, suspendiert in 25 $cm^3$ eines entaromatisierten Benzinschnittes mit dem Siedebereich 100 bis 120 °C, in den Reaktor gegeben. Der Reaktor wurde auf die Polymerisationstemperatur von 65 °C aufgeheizt (7,5 °C/ min) und 1 h bei dieser Polymerisationstemperatur durch Kühlung des Reaktormantels gehalten. Während dieser Polymerisationszeit wurde kontinuierlich die verbliebenen zwei Drittel des Comonomers in den Reaktor dosiert. Gestoppt wurde die Polymerisation durch schnelles Abgasen der überschüssigen Monomere. Das Polymer wurde im Vakuum getrocknet. Polymerausbeute, Metallocenaktivitäten und Produktdaten sind der nachfolgenden Tabelle zu entnehmen.

Beispiel 87 bis 89 (Vergleichsbeispiele)

Die Beispiele 84 bis 86 wurden mit einem aus Dimethylsilandiylbis(2-methyl-4-(1-naphthyl)indenyl)zirkondichlorid als Metallocen hergestellten Katalysator wiederholt. Polymerausbeute, Metallocenaktivitäten und Produktdaten

sind der nachflogenden Tabelle zu entnehmen.

| Bsp. | Comonomer | Ausbeute [kg Copo] | Aktivität [kg/(gxh)] | Smp. [°C] | VZ [$cm^3/g$] | Comonomer-Gehalt [Gew%] |
|---|---|---|---|---|---|---|
| 84 | 1-Buten | 2,40 | 3,43 | 132 | 546 | 4,8 |
| 85 | 4-Methyl-1-penten | 1,55 | 2,21 | 122 | 536 | 3,5 |
| 86 | 1-Hexen | 2,87 | 4,10 | 108 | 606 | 6,1 |
| 87 | 1-Buten | 1,16 | 1,65 | n.b. | 452 | 2,4 |
| 88 | 4-Methyl-1-penten | 0,81 | 1,15 | n.b. | 437 | 2,6 |
| 89 | 1-Hexen | 1,44 | 2,06 | n.b. | 490 | 3,0 |

Mit den erfindungsgemäßen Katalysatoren können auch hochmolekulare Terpolymere hergestellt werden. Einige Beispiele sollen das Prinzip erläutern:

Beispiel 90 bis 93

Ein trockener 24 $dm^3$-Reaktor wurde mit 10 1 eines entaromatisierten Benzinschnittes mit dem Siedebereich 100 bis 120, °C gefüllt. Dann wurde der Gasraum durch fünfmaliges Aufdrücken von 2 bar Propylen und Entspannen gespült. Nach Zugabe von 2000 g Propylen, 300 g Ethylen und optional 100 g eines weiteren Monomers (siehe Tabelle 3) wurden 10 $cm^3$ toluolische Methylaluminoxanlösung (entsprechend 15 mmol Al, Molmasse nach kryoskopischer Bestimmung 1200 g/mol) zugegeben. Der Reaktorinhalt wurde auf 60 °C aufgeheizt. 2,1 mg rac-Dimethylsilandiyl(2-methyl-4-(para-tert-butylphenyl)-indenyl) (2-isopropyl-4-(para-tert-butyl-phenyl)-indenyl)zirkoniumdichlorid wurden in 10 $cm^3$ der toluolischen Methylaluminoxanlösung (entsprechend 15 mmol Al) gelöst und ebenfalls in den Reaktor gegeben. Während der nun zweistündigen Polymerisationszeit wurden weitere 300 g Ethylen zudosiert. Gestoppt wurde die Polymerisation durch schnelles Abgasen der überschüssigen Monomeren. Das Polymer wurde vom Benzin abgetrennt und im Vakuum bei 100 °C getrocknet. Polymerausbeuten, Metallocenaktivitäten und Produktdaten sind der nachfolgenden Tabelle zu entnehmen

Beispiel 94 bis 97 (Vergleichsbeispiele)

Die Beispiele 90 bis 93 wurden mit 2,0 mg Dimethylsilandiylbis(2-methyl-4-(1-naphthyl)indenyl)zirkondichlorid wiederholt. Polymerausbeuten, Metallocenaktivitäten und Produktdaten sind der nachfolgenden Tabell zu entnehmen.

| Bsp. | Weiteres Monomer | Ausbeute [kg Copo] | Aktivität [kg/(g×h)] | VZ [$cm^3/g$] | $C_2$-Gehalt [Gew%] | Comonomer-Gehalt [Gew%] |
|---|---|---|---|---|---|---|
| 90 | -- | 2,01 | 479 | 595 | 52,2 | - |
| 91 | 1-Buten | 1,80 | 429 | 426 | 44,7 | 4,5 |
| 92 | 4-Methyl-1-penten | 1,02 | 243 | 444 | 48,3 | 4,0 |
| 93 | 1-Hexen | 1,78 | 424 | 463 | 46,9 | 4,1 |
| 94 | -- | 1,54 | 385 | 405 | 45,0 | - |
| 95 | 1-Buten | 1,22 | 305 | 349 | 40,8 | 3,0 |
| 96 | 4-Methyl-1-penten | 1,34 | 336 | 328 | 44,0 | 2,3 |
| 97 | 1-Hexen | 1,52 | 380 | 400 | 42,6 | 3,2 |

Beispiele 98 bis 102: Impactcopolymerisate durch Gasphasenpolymerisation

A: Herstellung des Metallocen-Katalysators

3 kg Sylopol 948 werden in einem Prozessfilter vorgelegt, dessen Filterplatte nach unten zeigt, und mit 15 1 Toluol suspendiert. 7 1 einer 30 Gew.%igen MAO-Lösung (Fa. Albemarle) werden unter Rühren so zudosiert, dass die Innentemperatur 35 °C nicht überschreitet. Nach 1 h weiterem Rühren bei niedriger Rührerdrehzahl wird die Suspension zunächst drucklos und dann mit 3 bar Stickstoffdruck abfiltriert. Parallel zur Behandlung des Trägermaterials werden 2,0 1 30 Gew.%igen MAO-Lösung gefüllt, 92,3 g *rac*-Dimethylsilyl(2-methyl-4-(para-tert. butyl-phenyl)indenyl)(2-isopropyl-4-(para-tert. butyl-phenyl)indenyl)zirconiumdichlorid in einen Reaktionsbehälter zugegeben, die Lösung 1 h gerührt und weitere 30 min absitzen zu lassen. Anschließend wird die Lösung zu dem vorbehandelten Trägermaterial bei geschlossenem Ablauf zugeleitet. Nach vollendeter Zugabe wird der Ablauf geöffnet und das Filtrat ablaufen gelassen. Wenn nichts mehr abläuft, wird der Ablauf geschlossen, der Filterkuchen 15 min gerührt und 1 h ruhen gelassen. Anschließend wird mit 3 bar Stickstoffdruck bei geöffnetem Ablauf abgepresst. Zum verbliebenen Feststoff werden 15 1 Isododekan zugegeben, die Mischung 15 min aufgerührt und abfiltriert. Der Waschschritt wird wiederholt, abschließend wird mit 3 bar Stickstoffdruck trockengepresst. Für die Verwendung in der Polymerisation wird die Gesamtmenge des Katalysators erneut in 15 l Isododekan aufsuspendiert.

B: Polymerisation

Das Verfahren wurde in zwei hintereinander geschalteten Rührautoklaven, ausgestattet mit einem freitragenden Wendelrührer, mit einem Nutzvolumen von je 200 1 durchgeführt. Beide Reaktoren enthielten ein bewegtes Festbett aus feinteiligem Propylenpolymerisat.

In den ersten Polymerisationsreaktor wurde das Propylen gasförmig eingeleitet und bei einer mittleren Verweilzeit gemäß Tabelle 1 mit Hilfe des Metallocen-Katalysators A (siehe oben) bei einem Druck und Temperaturen gemäß Tabelle 1 polymerisiert. Dabei wurde die Dosierung des beschriebenen Metallocen-Katalysators so bemessen, daß der Übertrag aus dem 1. in den 2. Polymerisationsreaktor im Mittel den in Tabelle 1 wiedergegebenen Polymermengen entspricht. Die Dosierung des Metallocen-Katalysators erfolgte mit dem zur Druckregelung zugesetzten Frischpropylen. Ebenfalls in den Reaktor zudosiert wurde Triethylaluminium (in Form einer 1 molaren Heptanlösung, in einer Menge entsprechend Tabelle 1). Durch kurzzeitiges Entspannen des Reaktors über ein Tauchrohr wurde sukzessive Polymergries aus dem Reaktor entfernt. Das im ersten Reaktor gebildete Propylenpolymerisat wurde dadurch mit dem Katalysator und zusammen mit nicht umgesetzten Monomeren in den 2. Reaktor eingetragen.

Dort wurde bei einem Gesamtdruck, einer Temperatur und einer mittleren Verweilzeit entsprechend Tabelle 1 ein Gemisch aus Propylen und Ethylen hinzupolymerisiert. Der Anteil Ethylen betrug die in Tabelle 1 angegebene Vol%-Menge, wobei die Ethylenkonzentration im Reaktionsgas gaschromatographisch ermittelt wurde. Das Gewichtsverhältnis zwischen dem im 1. Reaktor gebildeten Propylenpolymerisat (PP(I)) und dem in 2. Reaktor gebildeten Copolymerisat (EPR(II)) ist in Tabelle 1 aufgeführt. Ebenfalls in den 2. Reaktor zudosiert wurde iso-Propanol (in Form einer 0,5 molaren Heptanlösung). Die zudosierte iso-Propanol-Menge wurde so bemessen, daß das Gewichtsverhältnis PP(I) : EPR(II) gemäß Tabelle 1 aufrecht erhalten wurde.

Die Analytischen Untersuchungen der Polymerpulver, sowie dere Bestandteile siehe Tabelle 2:

TABELLE 1: Polymerisationsbedingungen

| | Bsp.98 | Bsp.99 | Bsp.100 | Bsp.101 | Bsp.102 |
|---|---|---|---|---|---|
| Reaktor I | | | | | |
| Druck [bar] | 28 | 29 | 29 | 26 | 26 |
| Temperatur [°C] | 75 | 75 | 75 | 70 | 70 |
| Triethylaluminium (1molar in Heptan) [ml/h] | 60 | 60 | 60 | 90 | 90 |
| Verweilzeit [h] | 2.25 | 2.25 | 2.25 | 1.5 | 1.5 |
| Pulver-MFR(dg/min) (ISO 1133) | 11.0 | 9.8 | 9.2 | 10.0 | 9.8 |
| Pulverausstoß [kg/h] | 20 | 20 | 20 | 30 | 30 |
| Reaktor II | | | | | |
| Druck [bar] | 15 | 15 | 15 | 15 | 15 |
| Temperatur [°C] | 65 | 65 | 65 | 65 | 65 |

(fortgesetzt)

| | Bsp.98 | Bsp.99 | Bsp.100 | Bsp.101 | Bsp.102 |
|---|---|---|---|---|---|
| Ethylen [Vol%] | 30 | 41 | 49 | 28 | 33 |
| Verweilzeit [h] | 1.7 | 1.7 | 1.7 | 1.0 | 1.2 |
| Pulverausstoß [kg/h] | 124.1 | 24.2 | 24.3 | 39.2 | 37.7 |
| Pulver-MFR[dg/min] (ISO 1133) | 10.7 | 8.7 | 5.5 | 9.5 | 10.4 |
| Gew. - Verhältnis PP (I) : EPR (II) | 4.9 | 4.8 | 4.7 | 3.3 | 3.9 |

Tabelle 2:Analytik an den Copolymerpulvern:

| | Bsp. 98 | Bsp. 99 | Bsp. 100 | Bsp. 101 | Bsp. 102 |
|---|---|---|---|---|---|
| Gehalt Homopolymer [Gew.%] (Hergestellt in Reaktor I) | 80 | 79 | 79 | 71 | 76 |
| Gehalt Copolymer [Gew.%] (Hergest. in Reaktor II) | 20 | 21 | 21 | 29 | 24 |
| C2-Gehalt Copolymeranteil [Gew.%] (IR-Bestimmung) | 7.5 | 23.3 | 40.0 | 6.5 | 22.5 |
| Viskositätszahl (ISO 1628) (cm3/g)<br>Homopolymeranteil<br>Copolymeranteil | <br>175<br>152 | <br>164<br>157 | <br>185<br>191 | <br>160<br>168 | <br>162<br>160 |
| Glastemperaturen [°C] (DMA-Messung) | - 6 | 2 / - 42 | 2 / - 56 | - 4 | - 5 |
| GPC-Messungen<br>Molmasse $M_n$ [g/mol]<br>Molmassenverteilung $M_w/M_n$ | <br>10100 0<br>2.1 | <br>95000<br>2.1 | <br>10590 0<br>2.0 | <br>10550 0<br>2.1 | <br>10060 0<br>2.0 |

Ermittlung analytischer Daten an Produktfraktionen: Auftrennung des hergestellten Polymers mittels Tref-Fraktionierungen (gemäß L. Wild, "Temperature rising elution fractionation", Advanced Polym. Sci. 98, 1 - 47 (1990). Fraktionen wurden bei 40, 80, 90, 100 und 120 °C mit Xylol eluiert und entsprechend dem Homopolymeranteil (hergestellt in Reaktor I) beziehungsweise dem Copolymeranteil (hergestellt in Reaktor II) zugeordnet.

Granulierung der Polymerpulver:

Die getrockneten Polymerpulver wurden mit einer Standard-Additivmischung innig vermischt (Additivierung mit 0.05 Gew.% Irganox 1010, 0.05 Gew.% Irgafos 168, 0.1 Gew.% Calziumstearat und 0.2 Gew.% Millad 3988). Auf einem Doppelschneckenextruder ZSK 30 der Firma Werner & Pfleiderer wurde bei 250 °C Massetemperatur extrudiert und anschließend in einem Granulator granuliert. Die Herstellung der für die anwendungstechnischen Prüfungen erforderlichen Prüfkörper und deren Prüfung erfolgte entsprechend den in der Tabelle 3 angegebenen Normvorschriften.

TABELLE 3: Anwendungstechnische Ausprüfung der Granulate

| | Prüfmethode | Bsp. 98 | Bsp. 99 | Bsp. 100 | Bsp. 101 | Bsp. 102 |
|---|---|---|---|---|---|---|
| MFR (230°C/2.16 kg) [dg/min] | ISO 1133 | 12.3 | 8.7 | 6.9 | 11.0 | 12.6 |
| Hexanextrakt [%] | FDA | 0.9 | 0.4 | 0.2 | 0.6 | 0.5 |
| E-Modul [MPa] | ISO 527 | 1156 | 1006 | 1093 | 1120 | 1020 |
| Charpy-Schlagzähigkeit (23°C) [kJ/m$^2$] | ISO 179-2/1 eU | ohne Bruch | ohne Bruch | ohne Bruch | ohne Bruch | ohne Bruch |
| Charpy-Schlagzähigkeit (0°C) [kJ/m$^2$] | ISO 179-2/1 eU | 163 | ohne Bruch | ohne Bruch | 160 | ohne Bruch |
| Charpy-Schlagzähigkeit (-20°C) [kJ/m$^2$] | ISO 179-2/1 eU | 28 | 180 | 130 | 26 | 123 |

(fortgesetzt)

| | Prüfmethode | Bsp. 98 | Bsp. 99 | Bsp. 100 | Bsp. 101 | Bsp. 102 |
|---|---|---|---|---|---|---|
| Wärmeformbeständigkeit HDT B [°C] | ISO 75-2 Verf. B | 81 | 76 | 78 | 80 | 79 |
| Erweichungstemperatur Vicat A [°C] | ISO 306 VST/A50 | 141 | 139 | 140 | 140 | 141 |
| DSC Schmelzpunkt [°C] | ISO 3146 | 156 | 157 | 157 | 156 | 156 |
| Haze [%] | ASTM D 1003 | 10 | 20 | 17 | 8 | 9 |

Beispiele 103 bis 109: Homo- und Randomcopolymerisate des Propylens und deren Eigenschaften

Fertigung von Katalysatoren

Katalysator A1:

Die Arbeiten werden zunächst in einer Glove-Box unter Argonatmosphäre durchgeführt. 319,3 mg des Komplexes rac-Dimethylsilyl(2-methyl-4-(*para*-tert. butyl-pheny)indenyl)(2-isopropyl-4-(*para*-tert. butyl-phenyl)indenyl)zirconiumdichlorid werden in einer Mischung aus 18,4 ml 30 Gew.%iger MAO-Lösung (Fa. Albemarle) und 22 ml Toluol gelöst. Nach einstündigem Rühren bei Raumtemperatur ist die Lösung klar und wird zu 20,16 g Kieselgel Sylopol 948 der Firma Grace Davison ($D_{50}$ = 50 μm; 8 h bei 300 °C im Stickstoffstrom getrocknet) gegeben. Nach vollständiger Zugabe wird noch 10 min weiter gerührt und die teigige Masse in ein Schlenkgefäß (N2-Kolben) überführt.

Außerhalb der Glove-Box werden die flüchtigen Bestandteile in einem auf 40 °C temperierten Ölbad an einer mit einer Ölpumpe ausgestatteten Vakuumlinie entfernt, bis nach etwa 4 Stunden annähernd Gewichtskonstanz erreicht ist. Der Restgehalt flüchtiger Bestandteile wird an einem Moisture Analyzer der Fa. Mettler-Toledo bestimmt und liegt bei 2,05 %.

Vergleichs-Katalysator B:

Die Katalysatorherstellung des Versuchs $ wird wiederholt mit 155,1 mg des Komplexes rac-Dimethylsilylbis (2-methyl-4-(paratert. butyl-phenyl)indenyl)zirconiumdichlorid, 9,3 ml 30 Gew.%ige MAO-Lösung und 10,17 g Kieselgel. Die Restfeuchte beträgt: 2,3 %.

Vergleichs-Katalysator C:

Im einem Prozessfilter werden 4 kg Kieselgel Sylopol 948 der Firma Grace Davison ($D_{50}$ = 50 μm; 8 h bei 300 °C im Stickstoffstrom getrocknet) vorgelegt, 18 1 Heptan eingefüllt und der Reaktorinhalt auf eine Innentemperatur von 20 °C abgekühlt. Innerhalb von ca. 30 min werden 1 einer 2 molaren Lösung von Triisobutylaluminium in Heptan so zugegeben, dass die Innentemperatur nicht über 30 °C ansteigt. Nach der Alkylzugabe wird der Kryostat ausgeschaltet und ca. 2 h bei langsamster Rührerdrehzahl nachgerührt. Die Suspension wird mit Stickstoffüberdruck filtriert, der Filterkuchen dreimal mit je 12 1 Toluol gewaschen Der Feststoff wird in 11 1 Toluol resuspendiert und zu der Suspension 291 g Dimethylcyclohexylammonium-Tetrakis(pentafluorophenyl)borat zugegeben. Anschließend wird auf 80 °C Innentemperatur erhitzt und 30 min. bei dieser Temperatur gerührt. Dann wird der Komplex rac-Dimethylsilylbis(2-methyl-4-phenylindenyl)zirconiumdichlorid zugegeben und weitere 1,5 Stunden bei 80°C gerührt. Danach wird der Katalysator bei ca. 80 °C Innentemperatur im Vakuum (ca. 40 mbar) getrocknet.

Homopolymerisationen

Versuch 103:

Ein trockener 16 $dm^3$-Reaktor, der zunächst mit Stickstoff und anschließend mit Propen gespült worden war, wurde mit 10 $dm^3$ flüssigem Propen gefüllt. Als Scavenger wurden 8 $cm^3$ 20 Gew.%iger Triethylaluminium-Lösung in Varsol (Fa. Witco) zugesetzt und der Ansatz 15 min bei 30 °C gerührt. Anschließend wurde eine Suspension von 1,5 g des Katalysators A1 in 20 $cm^3$ Exxsol in den Reaktor gegeben, auf die Polymerisationstemperatur von 65 °C aufgeheizt und das Polymerisationssystem 1 h bei dieser Temperatur gehalten. Die Polymerisation wurde durch Entgasen gestoppt und das erhaltene Polymer im Vakuum getrocknet. Es resultierten 2,05 kg Polypropylen-Pulver. $M_w$: 260.000 g/mol;

$M_w/M_n$: 3,6. $^{13}C$-NMR-Spektrum: Verhältnis der Signalintensitäten mm-Triade / mr-Triade / rr-Triade: 96,0 / 2,9 / 1,1. Verhältnis mm-Triade / 2,1-insertion: 1230 / 10. Verhältnis 2,1-Insertion / 1,3-Insertion: 3/1.

Vergleichsversuch 104:

Die Polymerisation aus Versuch @ wurde wiederholt mit 1,1 g des im Vergleichskatalysator B. Es resultierten 3,09 kg Polypropylen-Pulver. $M_w$: 514.000 g/mol; $M_w/M_n$: 3,3. $^{13}C$-NMR-Spektrum: Verhältnis der Signalintensitäten mm-Triade / mr-Triade / rr-Triade: 97,6 / 2,0 / 0,4. Verhältnis mm-Triade / 2,1-Insertion: 485 / 10.

Vergleichsversuch 105:

Die Polymerisation aus Versuch @ wurde wiederholt mit 38,8 $cm^3$ 20 Gew.%iger Triisobutylaluminium-Lösung in Varsol (Fa. Witco) als Scavenger. 630 mg des Vergleichskatalysators C wurden zugesetzt. Unmittelbar nach dem Katalysator wurden 63 mg Atmer zudosiert. Es resultierten 2,59 kg Polypropylen-Pulver. $M_w$: 350.000 g/mol; $M_w/M_n$: 3,4. $^{13}C$-NMR-Spektrum: Verhältnis der Signalintensitäten mm-Triade / mr-Triade / rr-Triade: 98,3 / 1,3 / 0,4. Verhältnis mm-Triade / 2,1-Insertion: 1100 / 10. Copolymerisationen

Versuch 106:

Ein trockener 5 $dm^3$-Reaktor, der zunächst mit Stickstoff und anschließend mit Propen gespült worden war, wurde mit 3 $dm^3$ flüssigem Propen gefüllt. Anschließend wurde~Ethylen zudosiert, bis sich bei 30 °C eine Druckerhöhung von 500 Pa eingestellt hatte. Als Scavenger wurden 2,3 $cm^3$ 20 Gew.%iger Triethylaluminium-Lösung in Varsol (Fa. Witco) zugesetzt, der Ansatz 15 min gerührt und anschließend auf 65 °C aufgeheizt. Anschließend wurde eine Suspension von 250 mg des Katalysators A1 in 6 $cm^3$ Heptan in den Reaktor gegeben. Unmittelbar anschließend wurden 25 mg Atmer 163 zudosiert. Die Polymerisation wurde nach 10 min durch Entgasen gestoppt und das erhaltene Polymer im Vakuum getrocknet. Es resultierten 5 g Polypropylen-Copolymerisat. $M_w$: 307.000 g/mol; $M_w/M_n$: 3,2. $^{13}C$-NMR-Spektrum: Signalintensitäten: $C^1$: 74,171; $C^5$ und $C^{12}$: 14,780; $C^7$: 6,203; $C^9$ und $C^{10}$: 1,931; $C^6$ und $C^{13}$: 2,289; $C^{15}$ und $C^{16}$: 0,625. Daraus ergibt sich Ethyleneinbau: 10,0 %. In Diethylether löslicher Anteil: 0,54 %.

GPC-IR-Spektroskopie: Die Spektren werden so zusammengefasst, dass je eine chromatographische Minute einem Spektrum entspricht (120 Scans / Spektrum).

| Retentionszeit [min] | Molmassenbereich [g/mol] | Anteil der Fraktion [Gew. %] | PE-Anteil [mol%] |
|---|---|---|---|
| 16 bis 17 | 4,5e6 - 1,1e6 | 4,4 | 10,8 |
| 17 bis 18 | 1,1e6 - 4,2e5 | 13,3 | 9,8 |
| 18 bis 19 | 4,2e5 - 2e5 | 21,6 | 10,0 |
| 19 bis 20 | 2e5 - 1,1e5 | 23,0 | 11,0 |
| 20 bis 21 | 1,1e5 - 6,5e4 | 17,6 | 11,1 |
| 21 bis 22 | 6,5e4 - 3,8e4 | 11,6 | 11,0 |
| 22 bis 23 | 3,8e4 - 2,2e4 | 5,8 | 12,0 |

Die Abweichungen zwischen den einzelnen Fraktionen sind im Rahmen der Messgenauigkeit (±1 %) und rein statistischer Natur. Eine Unterteilung in schmalere Fraktionen weist ein analoges Ergebnis auf.

Versuch 107

Ein trockener 16 $dm^3$-Reaktor, der zunächst mit Stickstoff und anschließend mit Ethylen gespült worden war, wurde mit Ethylen gefüllt, bis sich bei 30 °C eine Druckerhöhung von 500 Pa eingestellt hatte. Anschließend wurden 10 1 flüssiges Propen zugegeben und als Scavenger 8 $cm^3$ 20 Gew.%iger Triethylaluminium-Lösung in Varsol (Fa. Witco) zugesetzt, der Ansatz 15 min gerührt und anschließend auf 65 °C aufgeheizt. Anschließend wurde eine Suspension von 1,1 g des Katalysators A1 in Heptan in den Reaktor gegeben. Unmittelbar anschließend wurden 110 mg Atmer 163 zudosiert. Die Polymerisation wurde nach 10 min durch Entgasen gestoppt und das erhaltene Polymer im Vakuum getrocknet. Es resultierten22 g Polypropylen-Copolymerisat. $M_w$: 362.000 g/mol; $M_w/M_n$: 3,1.

$^{13}C$-NMR-Spektrum: Signalintensitäten: $C^1$: 91,243; $C^5$ und $C^{12}$: 4,741; $C^7$: 2,222; $C^9$ und $C^{10}$: 0,686; $C^6$ und $C^{13}$: 0,574; $C^{15}$ und $C^{16}$: 0,534. Daraus ergibt sich Ethyleneinbau: 3,2 %.

Vergleichsversuch 108

Die Polymerisation aus Versuch 106 wurde wiederholt mit 250 mg des Vergleichskatalysators B. Es resultierten 31 g Polypropylen-Copolymerisat. $M_w$: 273.000 g/mol; $M_w/M_n$: 3,2. $^{13}C$-NMR-Spektrum: Signalintensitäten: $C^1$: 76,419; $C^5$ und $C^{12}$: 13,199; $C^7$: 5,600; $C^9$ und $C^{10}$: 1,531; $C^6$ und $C^{13}$: 2,220; $C^{15}$ und $C^{16}$: 1,032. Daraus ergibt sich Ethyleneinbau 9,0 %.

Vergleichsversuch 109

Die Polymerisation aus Versuch 106 wurde wiederholt mit mit 11,7 $cm^3$ 20 Gew.%iger Triisobutylaluminium-Lösung in Varsol (Fa. Witco) als Scavenger und 190 mg des Vergleichskatalysators C. Es resultierten 7 g Polypropylen-Copolymerisat. $M_w$: 95.700 g/mol; $M_w/M_n$: 2,6. $^{13}C$-NMR-Spektrum: Signalintensitäten: $C^1$: 74,745; $C^5$ und $C^{12}$: 14,393; $C^7$: 6,009; $C^9$ und $C^{10}$: 1,764; $C^6$ und $C^{13}$: 2,591; $C^{15}$ und $C^{16}$. 0,498. Daraus ergibt sich ein Ethyleneinbau von 9,8 %.

## Patentansprüche

1. Metallocen der Formel (I),

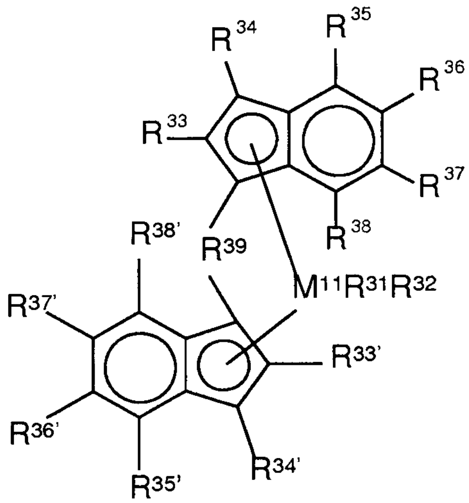

worin

$M^{11}$

Zirkonium oder Hafnium ist,

$R^{31}$, $R^{32}$

gleich oder verschieden sind und eine $C_1$-$C_{10}$-Alkylgruppe, eine $C_1$-$C_{10}$-Alkoxygruppe, eine $C_6$-$C_{10}$-Aryloxygruppe oder ein Halogenatom bedeuten, wobei $R^{31}$ und $R^{32}$ auch cyclisch verbunden sein können,

$R^{34}$, $R^{36}$, $R^{37}$ und $R^{38}$ sowie $R^{34'}$, $R^{36'}$, $R^{37'}$ und $R^{38'}$ gleich oder verschieden sind und ein Wasserstoffatom oder eine $C_1$-$C_{10}$-Alkylgruppe, die halogeniert, linear, cyclisch oder verzweigt sein kann, bedeuten,

$R^{33}$, $R^{33'}$

verschieden sind,

$R^{33}$

eine lineare $C_1$-$C_{10}$-Alkylgruppe oder eine lineare $C_2$-$C_{10}$-Alkenylgruppe bedeutet,

$R^{33'}$

eine in $\alpha$-Position cyclisierte oder eine in $\alpha$-Position verzweigte Kohlenwasserstoffgruppe, z.B. eine $C_3$-$C_{10}$-Alkylgruppe, $C_3$-$C_{10}$-Alkenylgruppe, $C_6$-$C_{14}$-Arylgruppe, eine $C_7$-$C_{15}$-Arylalkylgruppe, eine $C_7$-$C_{15}$-Alkylarylgruppe oder eine $C_8$-$C_{16}$-Arylalkenylgruppe, bedeutet,

$R^{35}$, $R^{35'}$

gleich oder verschieden sind und eine $C_6$ bis $C_{20}$ -Arylgruppe bedeuten, die in para-Position zur Bindungsstelle an den Indenylring einen Substituenten $R^{43}$ bzw. $R^{43'}$ trägt,

$R^{35}$ = 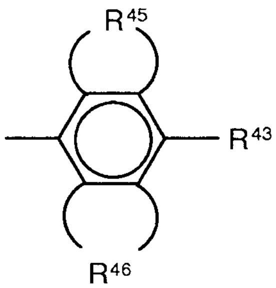 $R^{35'}$ = 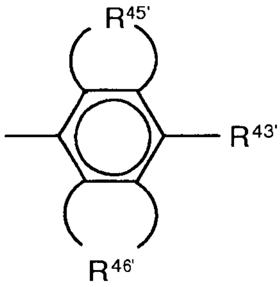

$R^{43}$

ein $C_1$ bis $C_{10}$-Alkylrest, ein $C_2$ bis $C_{10}$-Alkenylrest, ein $C_6$ bis $C_{18}$-Arylrest, ein $C_7$ bis $C_{20}$-Arylalkylrest, ein $C_7$ bis $C_{20}$-Alkylarylrest, ein $C_8$ bis $C_{20}$-Arylalkenylrest, wobei die Kohlenwasserstoffreste auch mit Fluor oder Chlor halogeniert oder teilhalogeniert sein können, $-N(R^{44})_2$, $P(R^{44})_2$, $-SR^{44}$, $-Si(R^{44})_3$, $-N(R^{44})_3^+$ oder $-P(R^{44})_3^+$ bedeuten, wobei die Reste $R^{44}$ gleich oder verschieden sind und ein Wasserstoffatom, eine Kohlenwasserstoffgruppe, die halogeniert, linear, cyclisch oder verzweigt sein kann, z.B. eine $C_1$-$C_{10}$-Alkylgruppe, $C_2$-$C_{10}$-Alkenylgruppe, $C_6$-$C_{20}$-Arylgruppe, eine $C_7$-$C_{40}$-Arylalkylgruppe, eine $C_7$-$C_{40}$-Alkylarylgruppe oder eine $C_8$-$C_{40}$-Arylalkenylgruppe bedeutet,

$R^{43'}$

Wasserstoff oder die für $R^{43}$ genannten Bedeutungen bedeutet, $R^{45}$, $R^{45'}$, $R^{46}$ und $R^{46'}$

Wasserstoff oder ein $C_4$-$C_8$-Arylringsystem bedeuten,

$R^{39}$

$R^{40}R^{41}Si=$, $R^{40}R^{41}Ge=$, $R^{40}R^{41}C=$, oder - $(R^{40}R^{41}C-CR^{40}R^{41}C=)$- bedeutet, wobei $R^{40}$ und $R^{41}$, gleich oder verschieden sind und Wasserstoff, eine $C_1$-$C_{20}$-Kohlenwasserstoffgruppe, insbesondere $C_1$-$C_{10}$-Alkyl oder $C_6$-$C_{14}$-Aryl bedeuten.

2. Metallocen gemäß Anspruch 1, **dadurch gekennzeichnet, daß**

$M^{11}$

Zirkonium ist,

$R^{31}$, $R^{32}$

gleich sind und für Chlor, Methyl oder Phenolat stehen,

$R^{33}$

Methyl, Ethyl, n-Propyl oder n-Butyl bedeutet,

$R^{33'}$

eine in $\alpha$-Position cyclisierte oder eine in $\alpha$-Position verzweigte Kohlenwasserstoffgruppe, bei der das Atom in $\alpha$-Position an insgesamt drei Kohlenstoffatome gebunden ist, z.B. eine $C_3$-$C_{10}$-Alkylgruppe oder eine $C_3$-$C_{10}$-Alkenylgruppe bedeutet, $R^{39}$

$R^{40}R^{41}Si=$, $R^{40}R^{41}C=$ oder $(R^{40}R^{41}C-CR^{40}R^{41})$ - ist, worin $R^{40}$ und $R^{41}$ gleich oder verschieden sind und Phenyl oder Methyl bedeuten,

$R^{34}$, $R^{36}$, $R^{37}$ und $R^{38}$ sowie $R^{34'}$, $R^{36'}$, $R^{37'}$ und $R^{38'}$ Wasserstoff sind,

$R^{35}$, $R^{35'}$

gleich oder verschieden sind und eine $C_6$ bis $C_{20}$-Arylgruppe, insbesondere eine Phenyl- oder 1-Naphthyl-Gruppe, die in para-Position zur Bindungsstelle an den Indenylring einen Substituenten $R^{43}$ bzw. $R^{43'}$ trägt, bedeuten, wobei $R^{43}$ bzw.

$R^{43'}$ ein verzweigter $C_3$- bis $C_{10}$- Alkylrest, ein verzweigter $C_3$- bis $C_{10}$- Alkenylrest, ein verzweigter $C_7$- bis $C_{20}$-Alkylarylrest oder ein $Si(R^{44})$ -Rest mit $R^{44}$ in der besonders bevorzugten Bedeutung von $R^{33}$ ist, wobei die Kohlenwasserstoffreste auch mit Fluor oder Chlor halogeniert oder teilhalogeniert sein können.

3. Metallocene gemäß einem der Ansprüche 1 oder 2, **dadurch gekennzeichnet, daß**

$M^{11}R^{31}R^{32}$

$ZrCl_2$, $Zr(CH_3)_2$, $Zr(O-C_6H_5)_2$

$R^{33}$

Methyl, Ethyl, n-Propyl, n-Butyl,

$R^{33'}$

Isopropyl, sec-Butyl, Cyclobutyl, 1-Methylbutyl, 1-Ethylbutyl, 1-Methylpentyl, Cyclopentyl, Cyclohexyl, Cyclopent-2-enyl, Cyclopent-3-enyl, Cyclohex-2-enyl, Cyclohex-3-enyl, para-Methyl-cyclohexyl,

$R^{34}$, $R^{36}$, $R^{37}$ und $R^{38}$ sowie $R^{34'}$, $R^{36'}$, $R^{37'}$ und $R^{38'}$ Wasserstoff,

$R^{35}$ $R^{35'}$
p-Isopropyl-phenyl, p-tert.-Butyl-phenyl, p-s-Butyl-phenyl, p-Cyclohexyl, p-Trimethylsilyl-phenyl, p-Adamantyl-phenyl, p-(Trisfluor)trimethyl-phenyl und
$R^{39}$
Dimethylsilandiyl, Dimethylgermandiyl, Ethyliden, 1-Methylethyliden, 1,1-Dimethylethyliden, 1,2-Dimethylethyliden, 1,1,2,2-Tetramethylethyliden, Dimethylmethyliden, Phenylmethylmethyliden, Diphenylmethyliden, sind.

**4.** Verbindung gemäß Anspruch 1 worin die Formel (I) für
Dimethylsilandiyl(2-ethyl-4-(4'tert.butyl-phenyl)-indenyl)(2-isopropyl-4-(4'-tert.-butyl-phenyl)-indenyl)zirkoniumdichlorid,
Dimethylsilandiyl(2-methyl-4-(4'tert.butyl-phenyl)-indenyl)(2-isopropyl-4-(1-naphtyl)-indenyl)zirkoniumdichlorid,
Dimethylsilandiyl(2-methyl-4-(4'tert.butyl-phenyl)-indenyl) (2-isopropyl-4-(4'-tert.-butyl-phenyl)-indenyl)zirkoniumdichlorid,
Dimethylsilandiyl(2-methyl-4-(4'tert.butyl-phenyl)-indenyl)(2-isopropyl-4-phenyl-indenyl)zirkoniumdichlorid,
Dimethylsilandiyl(2-ethyl-4-(4'tert.butyl-phenyl)-indenyl) (2-isopropyl 4-phenyl)-indenyl)zirkoniumdichlorid,
oder Mischungen derselben steht.

**5.** Verfahren zur Polymerisation von Olefinen, insbesondere zur Copolymerisation von Propylen mit mindestens einem weiteren Olefin, bei dem die Polymerisation in Gegenwart eines Katalysatorsystems erfolgt, das mindestens einen Cokatalysator und mindestens ein Metallocen gemäß einem der Ansprüche 1 bis 4 enthält.

**6.** Katalysatorsystem enthaltend ein oder mehrere Verbindung gemäß einem der Ansprüche 1 bis 4 sowie ein oder mehrere Cokatalysatoren und/oder einen oder mehrere Träger.

**7.** Verwendung einer oder mehrer Verbindungen gemäß einem der Ansprüche 1 bis 6 zur Herstellung eines Polyolefins.

**8.** Verwendung eines Katalysatorsystem gemäß Anspruch 6 zur Herstellung eines Polyolefins.

**9.** Verwendung gemäß Anspruch 8 zur Herstellung von Copolymeren mit verschiedenen Olefinen, insbesondere von Polypropylen-Copolymeren.

**10.** Verwendung gemäß Anspruch 9 zur Herstellung von Ethylen-Propylen Copolymeren.

## Claims

**1.** A metallocene of formula (I),

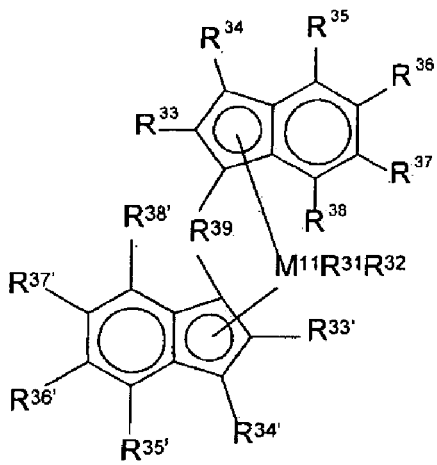

in which
$M^{11}$
is zirconium or hafnium,

$R^{31}$, $R^{32}$
are identical or different and mean a $C_1$-$C_{10}$ alkyl group, a $C_1$-$C_{10}$ alkoxy group, a $C_6$-$C_{10}$ aryloxy group or a halogen atom, wherein $R^{31}$ and $R^{32}$ may also be cyclically bonded,
$R^{34}$, $R^{36}$, $R^{37}$ and $R^{38}$ as well as $R^{34'}$, $R^{36'}$, $R^{37'}$ and $R^{38'}$ are identical or different and mean a hydrogen atom or a $C_1$-$C_{10}$ alkyl group, which may be halogenated, linear, cyclic or branched,
$R^{33}$, $R^{33'}$
are different,
$R^{33}$
means a linear $C_1$-$C_{10}$ alkyl group or a linear $C_2$-$C_{10}$ alkenyl group,
$R^{33}$,
means a hydrocarbon group cyclised in $\alpha$-position or branched in $\alpha$-position, for example a $C_3$-$C_{10}$ alkyl group, $C_3$-$C_{10}$ alkenyl group, $C_6$-$C_{14}$ aryl group, a $C_7$-$C_{15}$ arylalkyl group, a $C_7$-$C_{15}$ alkylaryl group or a $C_8$-$C_{16}$ arylalkenyl group,
$R^{35}$, $R^{35'}$
are identical or different and mean a $C_6$ to $C_{20}$ aryl group, which bear a substituent $R^{43}$ or $R^{43'}$ in para position relative to the bonding site on the indenyl ring,

$R^{35}$ = 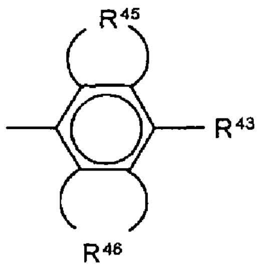 $R^{35'}$ = 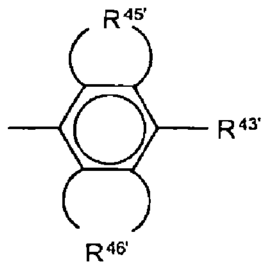

$R^{43}$
means a $C_1$ to $C_{10}$ alkyl residue, a $C_2$ to $C_{10}$ alkenyl residue, a $C_6$ to $C_{18}$ aryl residue, a $C_7$ to $C_{20}$ arylalkyl residue, a $C_7$ to $C_{20}$ alkylaryl residue, a $C_8$ to $C_{20}$ arylalkenyl residue, wherein the hydrocarbon residues may also be halogenated or partially halogenated with fluorine or chlorine, $-N(R^{44})_2$, $-P(R^{44})_2$, $-SR^{44}$, $-Si(R^{44})_3$, $-N(R^{44})_3^+$ or $-P(R^{44})_3^+$, wherein the residues $R^{44}$ are identical or different and mean a hydrogen atom, a hydrocarbon group, which may be halogenated, linear,
cyclic or branched, for example a $C_1$-$C_{10}$ alkyl group, $C_2$-$C_{10}$ alkenyl group, $C_6$-$C_{20}$ aryl group, a $C_7$-$C_{40}$ arylalkyl group, a $C_7$-$C_{40}$ alkylaryl group or a $C_8$-$C_{40}$ arylalkenyl group,
$R^{43'}$
means hydrogen or the meanings stated for $R^{43}$,
$R^{45}$, $R^{45'}$, $R^{46}$ and $R^{46'}$,
mean hydrogen or a $C_4$-$C_8$ aryl ring system,
$R^{39}$
means $R^{40}R^{41}Si=$, $R^{40}R^{41}Ge=$, $R^{40}R^{41}C=$, or $-(R^{40}R^{41}C-CR^{40}R^{41}C=)-$, wherein $R^{40}$ and $R^{41}$ are identical or different and mean hydrogen, a $C_1$-$C_{20}$ hydrocarbon group, in particular $C_1$-$C_{10}$ alkyl or $C_6$-$C_{14}$ aryl.

**2.** A metallocene according to claim 1, **characterised in that**
$M^{11}$
is zirconium,
$R^{31}$, $R^{32}$
are identical and denote chlorine, methyl or phenolate,
$R^{33}$
means methyl, ethyl, n-propyl, or n-butyl,
$R^{33'}$
means a hydrocarbon group cyclised in $\alpha$-position or branched in $\alpha$-position, in which the atom in $\alpha$-position is bonded to three carbon atoms in total, for example a $C_3$-$C_{10}$ alkyl group or a $C_3$-$C_{10}$ alkenyl group,
$R^{39}$
is $R^{40}R^{41}Si=$, $R^{40}R^{41}C=$ or $-(R^{40}R^{41}C-CR^{40}R^{41})-$, in which $R^{40}$ and $R^{41}$ are identical or different and mean phenyl or methyl,
$R^{34}$, $R^{36}$, $R^{37}$ and $R^{38}$ as well as $R^{34'}$, $R^{36'}$, $R^{37'}$ and $R^{38'}$ are hydrogen,
$R^{35}$, $R^{35'}$

are identical or different and mean a $C_6$ to $C_{20}$ aryl group, in particular a phenyl or 1-naphthyl group, which bears a substituent $R^{43}$ or $R^{43'}$ in para position to the bonding site on the indenyl ring, wherein $R^{43}$ or $R^{43'}$ is a branched $C_3$ to $C_{10}$ alkyl residue, a branched $C_3$ to $C_{10}$ alkenyl residue, a branched $C_7$ to $C_{20}$ alkylaryl residue or an $Si(R^{44})_3$ residue with $R^{44}$ in the particularly preferred meaning of $R^{33}$, wherein the hydrocarbon residues may also be halogenated or partially halogenated with fluorine or chlorine.

**3.** Metallocenes according to either one of claim 1 or claim 2, **characterised in that**
$M^{11}R^{31}R^{32}$
is $ZrCl_2$, $Zr(CH_3)_2$, $Zr(O\text{-}C_6H_5)_2$
$R^{33}$
is methyl, ethyl, n-propyl, n-butyl,
$R^{33'}$
is isopropyl, sec-butyl, cyclobutyl, 1-methylbutyl, 1-ethylbutyl, 1-methylpentyl, cyclopentyl, cyclohexyl, cyclopent-2-enyl, cyclopent-3-enyl, cyclohex-2-enyl, cyclohex-3-enyl, para-methylcyclohexyl,
$R^{34}$, $R^{36}$, $R^{37}$ and $R^{38}$ as well as $R^{34'}$, $R^{36'}$, $R^{37'}$ and $R^{38'}$ are hydrogen
$R^{35}$, $R^{35'}$
are p-isopropylphenyl, p-tert.-butylphenyl, p-s-butylphenyl, p-cyclohexyl, p-trimethylsilylphenyl, p-adamantylphenyl, p-(trisfluoro)trimethylphenyl and
$R^{39}$
is dimethylsilanediyl, dimethylgermanediyl, ethylidene, 1-methylethylidene, 1,1-dimethylethylidene, 1,2-dimethylethylidene, 1,1,2,2-tetramethylethylidene, dimethylmethylidene, phenylmethylmethylidene, diphenylmethylidene.

**4.** A compound according to claim 1 in which the formula (I) denotes
dimethylsilanediyl(2-ethyl-4-(4'-tert.-butylphenyl)-indenyl)(2-isopropyl-4-(4'-tert.-butylphenyl)-indenyl)zirconium dichloride,
dimethylsilanediyl(2-methyl-4-(4'-tert.-butylphenyl)-indenyl)(2-isopropyl-4-(1-naphthyl)-indenyl)zirconium dichloride,
dimethylsilanediyl(2-methyl-4-(4'-tert.-butylphenyl)-indenyl)(2-isopropyl-4-(4'-tert.-butylphenyl)-indenyl)zirconium dichloride,
dimethylsilanediyl(2-methyl-4-(4'-tert.-butylphenyl)-indenyl)(2-isopropyl-4-phenylindenyl)zirconium dichloride,
dimethylsilanediyl(2-ethyl-4-(4'-tert.-butylphenyl)-indenyl)(2-isopropyl-4-phenyl)-indenyl)zirconium dichloride,
or mixtures thereof.

**5.** A method for polymerising olefins, in particular for copolymerising propylene with at least one further olefin, in which polymerisation proceeds in the presence of a catalyst system which contains at least one cocatalyst and at least one metallocene according to any one of claims 1 to 4.

**6.** A catalyst system containing one or more compounds according to any one of claims 1 to 4 as well as one or more cocatalysts and/or one or more supports.

**7.** Use of one or more compounds according to any one of claims 1 to 6 for producing a polyolefin.

**8.** Use of a catalyst system according to claim 6 for producing a polyolefin.

**9.** Use according to claim 8 for producing copolymers with various olefins, in particular polypropylene copolymers.

**10.** Use according to claim 9 for producing ethylenepropylene copolymers.

## Revendications

**1.** Métallocène de formule (I)

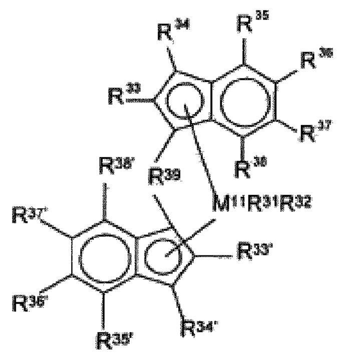

dans laquelle
$M^{11}$ représente zirconium ou hafnium,
$R^{31}$, $R^{32}$ sont identiques ou différents et signifient un groupe $C_1$-$C_{10}$-alkyle, un groupe $C_1$-$C_{10}$-alcoxy, un groupe $C_6$-$C_{10}$-aryloxy ou un atome d'halogène, $R^{31}$ et $R^{32}$ pouvant également être liés cycliquement,
$R^{34}$, $R^{36}$, $R^{37}$ et $R^{38}$ ainsi que $R^{34'}$, $R^{36'}$, $R^{37'}$ et $R^{38'}$ sont identiques ou différents et représentent un atome d'hydrogène ou un groupe $C_1$-$C_{10}$-alkyle, qui peut être halogéné, linéaire, cyclique ou ramifié,
$R^{33}$, $R^{33'}$ sont différents,
$R^{33}$ signifie un groupe $C_1$-$C_{10}$-alkyle linéaire ou un groupe $C_2$-$C_{10}$-alcényle linéaire,
$R^{33'}$ signifie un groupe hydrocarboné cyclisé en position $\alpha$ ou ramifié en position $\alpha$, par exemple un groupe $C_3$-$C_{10}$-alkyle, $C_3$-$C_{10}$-alcényle, $C_6$-$C_{14}$-aryle, $C_7$-$C_{15}$-arylalkyle, $C_7$-$C_{15}$-alkylaryle ou $C_8$-$C_{16}$-arylalcényle,
$R^{35}$, $R^{35'}$ sont identiques ou différents et représentent un groupe $C_6$-$C_{20}$-aryle, qui porte en position para par rapport au site de liaison au cycle indényle un substituant $R^{43}$ ou, selon le cas, $R^{43'}$,

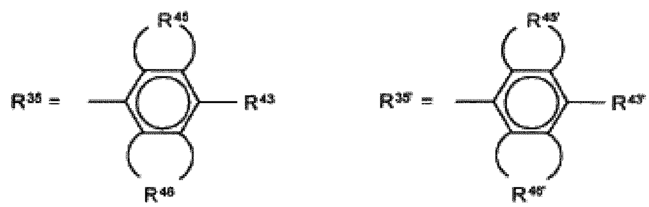

$R^{43}$ signifie un radical $C_1$-$C_{10}$-alkyle, $C_2$-$C_{10}$-alcényle, $C_6$-$C_{18}$-aryle, $C_7$-$C_{20}$-arylalkyle, $C_7$-$C_{20}$-alkylaryle, $C_8$-$C_{20}$-arylalcényle, les radicaux hydrocarbonés pouvant également être halogénés ou partiellement halogénés par fluor ou
chlore, $-N(R^{44})_2$, $-P(R^{44})_2$, $-SR^{44}$, $-Si(R^{44})_3$, $-N(R^{44})_3^+$, ou $-P(R^{44})_3^+$, les radicaux $R^{44}$ étant identiques ou différents et signifiant un atome d'hydrogène, un groupe hydrocarboné qui peut être halogéné, linéaire, cyclique ou ramifié, par exemple un groupe $C_1$-$C_{10}$-alkyle, $C_2$-$C_{10}$-alcényle, $C_6$-$C_{20}$-aryle, $C_7$-$C_{40}$-arylalkyle, $C_7$-$C_{40}$-alkylaryle ou $C_8$-$C_{40}$-arylalcényle,
$R^{43'}$ signifie hydrogène ou les significations mentionnées pour $R^{43}$,
$R^{45}$, $R^{45'}$ $R^{46}$ et $R^{46'}$ signifient hydrogène ou un système cyclique $C_4$-$C_8$-aryle,
$R^{39}$ signifie $R^{40}R^{41}Si=$, $R^{40}R^{41}Ge=$, $R^{40}R^{41}C=$ ou $-(R^{40}R^{41}C-CR^{40}R^{41}C=)-$, $R^{40}$ et $R^{41}$ étant identiques ou différents et signifiant hydrogène, un groupe hydrocarboné en $C_1$-$C_{20}$, en particulier $C_1$-$C_{10}$-alkyle ou $C_6$-$C_{14}$-aryle.

2. Métallocène selon la revendication 1, **caractérisé en ce que**
$M^{11}$ représente zirconium,
$R^{31}$, $R^{32}$ sont identiques et représentent chlore, méthyle ou phénolate,
$R^{33}$ signifie méthyle, éthyle, n-propyle, ou n-butyle, $R^{33'}$ signifie un groupe hydrocarboné cyclisé en position $\alpha$ ou ramifié en position $\alpha$, dans lequel l'atome en position $\alpha$ est lié à au total trois atomes de carbone, par exemple un groupe $C_3$-$C_{10}$-alkyle ou $C_3$-$C_{10}$-alcényle,
$R^{39}$ représente $R^{40}R^{41}Si=$, $R^{40}R^{41}C=$ ou $-(R^{40}R^{41}C-CR^{40}R^{41})-$, $R^{40}$ et $R^{41}$ étant identiques ou différents et signifiant phényle ou méthyle,
$R^{34}$, $R^{36}$, $R^{37}$ et $R^{38}$ ainsi que $R^{34'}$, $R^{36'}$, $R^{37'}$ et $R^{38'}$ représentent hydrogène,
$R^{35}$, $R^{35'}$ sont identiques ou différents et représentent un groupe $C_6$-$C_{20}$-aryle, en particulier un groupe phényle ou 1-naphtyle, qui porte en position para par rapport au site de liaison sur le cycle indényle un substituant $R^{43}$ ou, selon

le cas, $R^{43'}$, $R^{43}$ ou, selon le cas, $R^{43'}$ représentant un radical $C_3$-$C_{10}$-alkyle ramifié, un radical $C_3$-$C_{10}$-alcényle ramifié, un radical $C_7$-$C_{20}$-alkylaryle ramifié ou un radical $Si(R^{44})_3$, $R^{44}$ ayant de manière particulièrement préférée la signification de $R^{33}$, les radicaux hydrocarbonés pouvant également être halogénés ou partiellement halogénés par fluor ou chlore.

**3.** Métallocènes selon l'une quelconque des revendications 1 ou 2, **caractérisés en ce que**
$M^{11}R^{31}R^{32}$ représente $ZrCl_2$, $Zr(CH_3)_2$, $Zr(O\text{-}C_6H_5)_2$ $R^{33}$ représente méthyle, éthyle, n-propyle, n-butyle,
$R^{33'}$ représente isopropyle, sec-butyle, cyclobutyle, 1-méthylbutyle, 1-éthylbutyle, 1-méthylpentyle, cyclopentyle, cyclohexyle, cyclopent-2-ényle, cyclopent-3-ényle, cyclohex-2-ényle, cyclohex-3-ényle, para-méthylcyclohexyle,
$R^{34}$, $R^{36}$, $R^{37}$ et $R^{38}$ ainsi que $R^{34'}$, $R^{56'}$ $R^{37'}$ et $R^{38'}$ représentent hydrogène,
$R^{35}$, $R^{35'}$ représentent p-isopropylphényle, p-tert-butylphényle, p-s-butyl-phényle, p-cyclohexyle, p-triméthylsilylphényle, p-adamantyl-phényle, p-(trisfluoro)triméthylphényle et
$R^{39}$ représente diméthylsilanediyle, diméthylgermanediyle, éthylidène, 1-méthyléthylidène, 1,1-diméthyléthylidène, 1,2-diméthyléthylidène, 1,1,2,2-tétraméthyléthylidène, diméthylméthylidène, phénylméthylméthylidène, diphénylméthylidène.

**4.** Composé selon la revendication 1, la formule (I) représentant dichlorure de diméthylsilanediyl(2-éthyl-4-(4'tert-butylphényl)-indényl)(2-isopropyl-4-(4'-tert-butyl-phényl)-indényl)zirconium,
dichlorure de diméthylsilanediyl(2-méthyl-4-(4'tert-butyl-phényl)-indényl)(2-isopropyl-4-(1-naphtyl)-indényl)zirconium,
dichlorure de diméthylsilanediyl(2-méthyl-4-(4'tert-butyl-phényl)-indényl)(2-isopropyl-4-(4'-tert-butylphényl)-indényl)zirconium,
dichlorure de diméthylsilanediyl(2-méthyl-4-(4'tert-butyl-phényl)-indényl)(2-isopropyl-4-phénylindényl)zirconium,
dichlorure de diméthylsilanediyl(2-éthyl-4-(4'tert-butylphényl)-indényl)(2-isopropyl-4-phényl)-indényl)zirconium, ou leurs mélanges.

**5.** Procédé pour la polymérisation d'oléfines, en particulier pour la copolymérisation de propylène avec au moins une autre oléfine, dans lequel la polymérisation a lieu en présence d'un système catalytique qui contient au moins un cocatalyseur et au moins un métallocène selon l'une quelconque des revendications 1 à 4.

**6.** Système catalytique contenant un ou plusieurs composés selon l'une quelconque des revendications 1 à 4 ainsi qu'un ou plusieurs cocatalyseurs et/ou un ou plusieurs supports.

**7.** Utilisation d'un ou de plusieurs composés selon l'une quelconque des revendications 1 à 6 pour la préparation d'une polyoléfine.

**8.** Utilisation d'un système catalytique selon la revendication 6 pour la préparation d'une polyoléfine.

**9.** Utilisation selon la revendication 8 pour la préparation de copolymères avec différentes oléfines, en particulier de copolymères de polypropylène.

**10.** Utilisation selon la revendication 9 pour la préparation de copolymères d'éthylène-propylène.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 129368 A
- US 4752597 A
- US 5017714 A
- EP 320762 A
- EP 416815 A
- EP 537686 A
- EP 669340 A
- EP 576970 A1
- EP 659757 A
- EP 834519 A
- WO 0031090 A
- WO 9940129 A
- EP 924223 A
- DE 19622207
- EP 601830 A
- EP 824112 A
- EP 824113 A
- WO 9906414 A
- EP 811627 A
- WO 9711775 A
- DE 19606167
- DE 19804910
- WO 9428034 A
- US 08365280 B


### In der Beschreibung aufgeführte Nicht-Patentliteratur


- **H.H. BRINTZINGER et al.** *Angew. Chem.,* 1995, vol. 107, 1255
- **H.H. BRINTZINGER et al.** *J. Organomet. Chem.,* 1982, vol. 232, 233
- **SPALECK et al.** *J. Mol. Catal. A: Chemical,* 1998, vol. 128, 279-287
- *Journal of Organometallic Chem.,* 1985, vol. 288, 63-67
- *JACS,* 1995, vol. 117, 6465-74
- *Organometallics,* 1994, vol. 13, 2957-2969
- **VON EWEN et al.** Metalorganic Catalysts for Synthesis and Polymerisation. Springer-Verlag, 1999, 150-169